(19) Europäisches Patentamt
European Patent Office
Office européen des brevets

(11) Veröffentlichungsnummer : **0 518 909 B1**

# (12) EUROPÄISCHE PATENTSCHRIFT

(45) Veröffentlichungstag der Patentschrift :
**25.05.94 Patentblatt 94/21**

(21) Anmeldenummer : **91905075.7**

(22) Anmeldetag : **01.03.91**

(86) Internationale Anmeldenummer :
**PCT/EP91/00384**

(87) Internationale Veröffentlichungsnummer :
**WO 91/13941 19.09.91 Gazette 91/22**

(51) Int. Cl.$^5$ : **C09B 29/32,** C09B 35/035, C09B 67/22, // C09B41/00, C08K5/34, C09B63/00, C08J3/20, D21H21/28

## (54) WASSERUNLÖSLICHE AZOFARBMITTEL, IHRE HERSTELLUNG UND VERWENDUNG.

(30) Priorität : **09.03.90 DE 4007535**

(43) Veröffentlichungstag der Anmeldung :
**23.12.92 Patentblatt 92/52**

(45) Bekanntmachung des Hinweises auf die Patenterteilung :
**25.05.94 Patentblatt 94/21**

(84) Benannte Vertragsstaaten :
**CH DE DK FR GB IT LI**

(56) Entgegenhaltungen :
**EP-A- 0 158 888**
**DE-A- 2 632 402**
**FR-A- 1 350 546**
**FR-A- 2 090 144**

(56) Entgegenhaltungen :
**FR-A- 2 309 608**
**Dyes and pigments, volume 5, No. 5, May 1984, Elsevier Applied Science Publishers Ltd,(Great Yarmouth,GB),M Rolf et al.: "Neue hochechte organische Pigmente", pages 189-207,see page 197, Paragraphs 3-5; page 199**

(73) Patentinhaber : **HOECHST AKTIENGESELLSCHAFT**
**D-65926 Frankfurt (DE)**

(72) Erfinder : **JUNG, Rüdiger**
**Altkönigstrasse 1**
**D-6233 Kelkheim (DE)**
Erfinder : **DEUBEL, Reinhold**
**Geierfeld 64**
**D-6232 Bad Soden am Taunus (DE)**

EP 0 518 909 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind neue, wertvolle Verbindungen der idealisierten allgemeinen Formel (I)

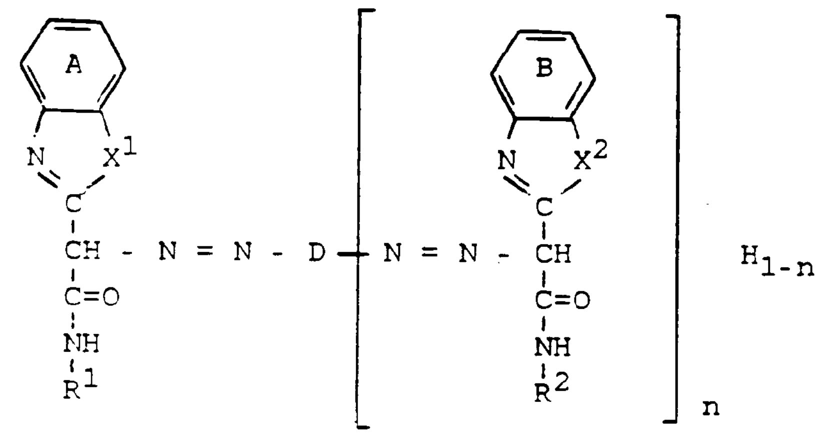

(I)

und deren Gemische, worin

D — den Rest einer Diazo- oder Bisdiazokomponente auf Basis eines carbocyclischen oder heterocyclischen, aromatischen Systems bedeutet,

$R^1$ und $R^2$ — unabhängig voneinander jeweils einen unsubstituierten oder substituierten, carbocyclischen oder heterocyclischen, aromatischen Rest bezeichnen,

$X^1$ und $X^2$ — unabhängig voneinander jeweils für ein ringbildendes -O-Atom oder eine Gruppierung der Formeln >NH oder >$NR^3$ stehen, in der

$R^3$ — am Imidstickstoff einen aliphatischen oder aromatischen Rest darstellt, sowie

n — den Wert 0 oder 1 hat,

und wobei die Ringe A und B unabhängig voneinander jeweils noch substituiert sein und/oder gegebenenfalls substituierte, anellierte Ringe tragen können.

Vom Gesichtspunkt ihres chemischen Aufbauprinzips entsprechend Formel (I) her klassifiziert, handelt es sich hierbei in erster Linie um Monoazoverbindungen (n = 0) und Disazoverbindungen (n = 1), in denen

für den Fall von n = 0 die Symbole D und $R^1$ sowie

für den Fall von n = 1 die Symbole $R^1$ und $R^2$

unabhängig voneinander jeweils einen monovalenten aromatischen Rest auf Basis einer Verbindung aus der Benzol-, Naphthalin-, Biphenylen-, Fluoren- oder Anthrachinon-Reihe, oder auf Basis einer aus einem einzelnen oder mehreren (unter Kondensation miteinander verknüpften) ringförmigen Strukturelement(en) bestehenden heterocyclischen Verbindung, und

für den Fall von n = 1 das Symbol D

einen bivalenten aromatischen Rest auf Basis einer Verbindung aus der Benzol-, Naphthalin-, Biphenylen-, Fluoren- oder Anthrachinon-Reihe, oder auf Basis einer aus einem einzelnen oder mehreren (unter Kondensation miteinander verknüpften) ringförmigen Strukturelement(en) bestehenden heterocyclischen Verbindung

bedeuten und solche Reste D, $R^1$ und $R^2$ unabhängig voneinander jeweils noch Substituenten, meistenteils von nichtionogenem Charakter, tragen können,

$X^1$ und $X^2$ — jeweils die eingangs dafür angeführte Bedeutung zukommt, in denen dann

$R^3$ — am Imidstickstoff eine unsubstituierte oder substituierte Alkyl-, Aryl-, Aralkyl- oder Acylgruppe darstellt,

und wobei in diesen beiden, wegen ihrer strukturellen Unterschiede für n = 0 oder n = 1 abweichenden Fällen der Ring A oder, unabhängig voneinander, die Ringe A und B jeweils noch Substituenten, meistenfalls von nichtionogenem Charakter, und/oder gegebenenfalls gleichermaßen substituierte, anellierte Ringe tragen können.

Wesentliches Interesse gilt erfindungsgemäß denjenigen Azofarbmitteln bzw. davon abgeleiteten Gemischen, worin in Übereinstimmung mit der Formel (I)

im Falle von n = 0 die Symbole D und $R^1$ sowie

im Falle von n = 1 die Symbole $R^1$ und $R^2$

unabhängig voneinander jeweils einen unsubstituierten oder substituierten Aryl- oder Heteroarylrest aus der folgenden Gruppe umfassen:

Phenyl, Phenyl mit 1 bis 3 Substituenten, Naphthyl oder Naphthyl mit 1 bis 4 Substituenten,
einen monovalenten Rest auf Basis von Biphenylen, Fluoren oder Anthrachinon, der jeweils bis zu 4 Substituenten aufweisen kann, und
einen monovalenten Rest auf Basis eines aus bis zu 5 kondensierten aromatischen Ringen zusammengesetzten heterocyclischen Systems, in das mindestens ein fünf- oder sechsgliedriges ringförmiges Strukturelement mit jeweils 1 bis 3 zugehörigen, gleichen oder verschiedenen Heteroatomen, hauptsächlich aus der Gruppe Stickstoff, Sauerstoff und Schwefel, eingezogen ist und welches insgesamt noch bis zu 4 Substituenten aufweisen kann, wobei solche Substituenten an den eben erwähnten Aryl- oder Heteroarylresten unabhängig voneinander die nachstehende Bedeutung von $Z^1$ oder $Z^2$ besitzen und in dieser Hinsicht dann

$Z^1$ für einen Rest aus der Gruppe $C_1$-$C_{24}$-Alkyl, $C_1$-$C_{24}$-Hydroxyalkyl, $C_5$-$C_{10}$-Cycloalkyl, $C_1$-$C_{24}$-Alkenyl, $C_1$-$C_{24}$-Alkoxy, $C_2$-$C_{25}$-Alkoxycarbonyl (Carbalkoxy), $C_2$-$C_{25}$-Alkoxycarbonylamino, $C_2$-$C_{25}$-Alkanoyl (Acyl), $C_2$-$C_{25}$-Alkanoyloxy (Acyloxy), $C_2$-$C_{25}$-Alkanoylamino (Acylamino), Carboxy, $C_2$-$C_{13}$-Carboxyalkyl, N-($C_1$-$C_{12}$-Alkyl)-amino, N,N-Di-($C_1$-$C_{12}$-Alkyl)-amino, Carbamoyl, N-($C_1$-$C_{12}$-Alkyl)-aminocarbonyl (Alkylcarbamoyl), N,N-Di-($C_1$-$C_{12}$-Alkyl)-aminocarbonyl (Dialkylcarbamoyl), (Aminocarbonyl)-amino (Ureido), $C_1$-$C_{12}$-Alkylthio, $C_1$-$C_{24}$-Alkylsulfonyl, Sulfamoyl, N-($C_1$-$C_{12}$-Alkyl)-aminosulfonyl (Alkylsulfamoyl), N,N-Di-($C_1$-$C_{12}$-Alkyl)-aminosulfonyl (Dialkylsulfamoyl), (Aminosulfonyl)-amino (Sulfamido), Sulfo, Halogen, Nitro, Cyano, Trifluormethyl, Hydroxy und Mercapto steht und in den zuvor erläuterten Substituenten $Z^1$ gegebenenfalls vorhandene gesättigte oder ungesättigte, aliphatische Bestandteile von geradkettiger oder verzweigter Struktur sind, sowie

$Z^2$ für einen Rest der Formel Ar-W- steht, in der W eine direkte Bindung ist oder einer brückenbildenden Gruppierung der Formeln
-O-, -CO-, -CO-O-, -O-CO-, -CO-NH-, -NH-CO-, -S-, -SO-, $-SO_2-$, $-SO_2-NH-$, $-NH-SO_2-$, $-(CH_2)_p-$ (p = 1-4), $-CH(CH_3)-$, $-C(CH_3)_2-$, -NR′- (worin R′ Wasserstoff oder $C_1$-$C_6$-Alkyl darstellt), $-CH_2-NH-$ oder -N=N- oder einer Kombination aus mindestens 2 derartigen bivalenten Gruppierungen entspricht, und das daran gebundene
Ar einen monovalenten Rest auf Basis eines aus bis zu 2 kondensierten aromatischen Ringen zusammengesetzten Systems von carbocyclischer Natur oder eines diesem analogen Systems bezeichnet, in das ein fünf- oder sechsgliedriges ringförmiges Strukturelement mit 1 bis 3 zugehörigen, gleichen oder verschiedenen Heteroatomen, hauptsächlich aus der Gruppe Stickstoff, Sauerstoff und Schwefel, einbezogen ist und welches insgesamt noch 1 bis 3 gleiche oder verschiedene Substituenten des vorstehend für $Z^1$ definierten Typs aufweisen kann;
und worin - genauso unter Bezugnahme auf die Formel (I) -

im Falle von n = 1 das Symbol D
einen unsubstituierten oder substituierten Arylen- oder Heteroarylenrest aus der folgenden Gruppe umfaßt:
Phenylen, Phenylen mit 1 bis 3 Substituenten, Naphthylen, oder Naphthylen mit 1 bis 4 Substituenten,
einen bivalenten Rest auf Basis von Biphenylen, Fluoren oder Anthrachinon, der jeweils bis zu 4 Substituenten aufweisen kann, und
einen bivalenten Rest auf Basis eines aus bis zu 5 kondensierten aromatischen Ringen zusammengesetzten heterocyclischen Systems, in das mindestens ein fünf- oder sechsgliedriges ringförmiges Strukturelement mit jeweils 1 bis 3 zugehörigen, gleichen oder verschiedenen Heteroatomen, hauptsächlich aus der Gruppe Stickstoff, Sauerstoff und Schwefel, einbezogen ist und welches insgesamt noch bis zu 4 Substituenten aufweisen kann, wobei solche Substituenten an den eben erwähnten Arylen- oder Heteroarylenresten unabhängig voneinander die obige Bedeutung von $Z^1$ oder $Z^2$ besitzen,
aber weiterhin auch
einen bivalenten Rest der Formel -Ar-V-Ar-, in der V die zuvor für W als Bestandteil von $Z^2$ identische Bedeutung zukommt oder einer brückenbildenden Gruppierung der Formeln

$-O-CH_2-O-$,
$-O-C_2H_4-O-$,
$-O-C_3H_6-O-$,
$-O-C_4H_8-O-$,
$-O-CH_2-C(CH_3)_2-CH_2-O-$,
$-O-C_2H_4-O-C_2H_4-O-$,
$-O-CO-O-$,
$-NH-CO-NH-$,
$-NH-CO-CO-NH-$,
$-NH-CO-C_2H_4-CO-NH-$,
$-CH=CH-$,

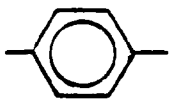 ; 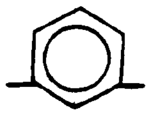 ,

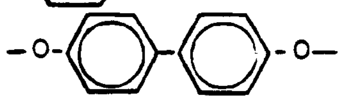 ,

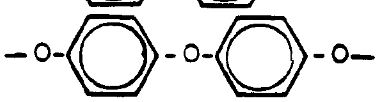 ,

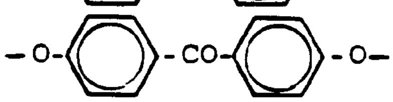 ,

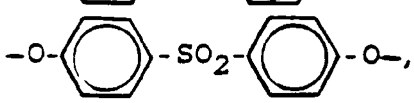 ,

$-CO-O-CH_2-O-CO-$,
$-CO-O-C_2H_4-O-CO-$,
$-CO-O-C_3H_6-O-CO-$,
$-CO-O-C_4H_8-O-CO-$,

$-CO-O-C_2H_4-O-C_2H_4-O-CO-$,
$-CO-NH-NH-CO-$,
$-CO-NH-C_2H_4-NH-CO-$,

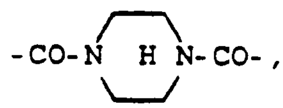 ,

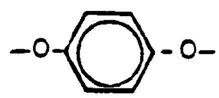 , 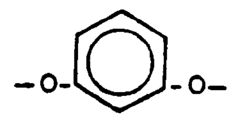 ,

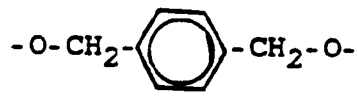 ,

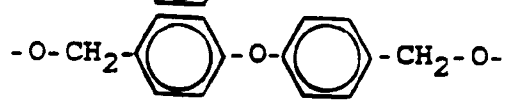 ,

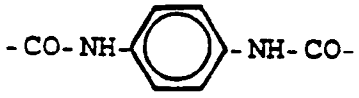 , 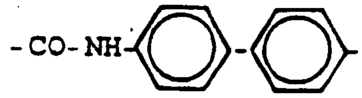 ,

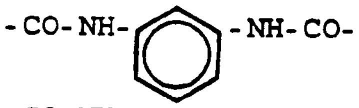 , 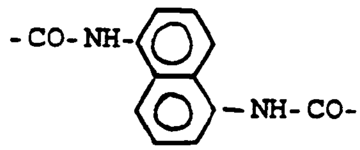 ,

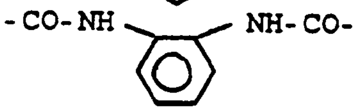 ,

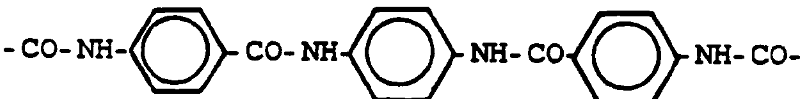 ,

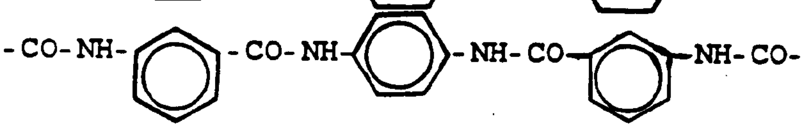 ,

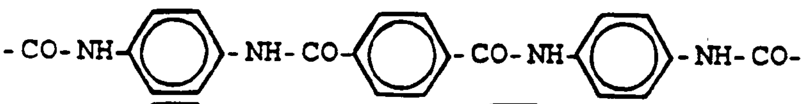 ,

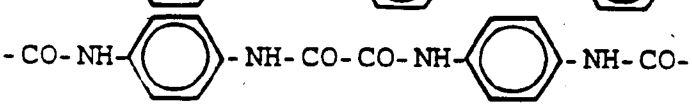 ,

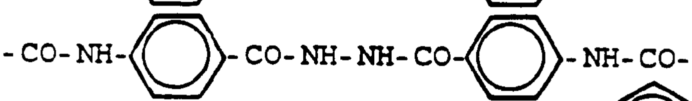 ,

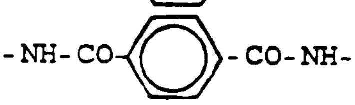 , 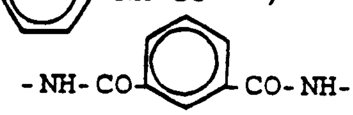 ,

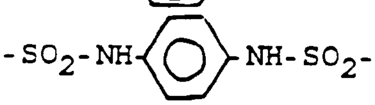 , 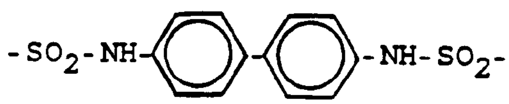 ,

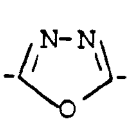 , 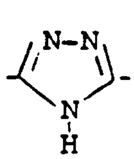 , 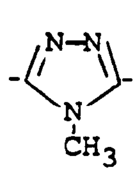 , 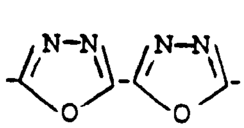 oder 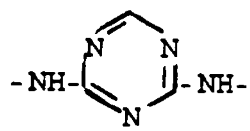

entspricht, wobei in einem derartigen Brückenglied V gegebenenfalls vorhandene Arylenbestandteile insgesamt noch 1 bis 4 gleiche oder verschiedene Substituenten des vorstehend für $Z^1$ definierten Typs aufweisen können, und die beiden daran gebundenen

Ar's unabhängig voneinander jeweils einen bivalenten Rest auf Basis eines aromatischen Systems analog der oben sonst für monovalentes Ar identischen Bedeutung bezeichnen.

Als bevorzugt im Sinne der vorliegenden Erfindung sollen vor allem solche Verbindungen der Formel (I) herausgestellt werden, gemäß welcher

wenn n gleich 0 ist - die Symbole D und $R^1$ sowie

wenn n gleich 1 ist - die Symbole $R^1$ und $R^2$

unabhängig voneinander jeweils einen Aryl- oder Heteroarylrest aus der folgenden Gruppe umfassen:

Phenyl, Phenyl mit 1 bis 3 Substituenten, Naphthyl, Naphthyl mit 1 bis 3 Substituenten, oder Biphenylyl, einen monovalenten Rest auf Basis von Biphenylen, Fluoren oder Anthrachinon, der jeweils 1 bis 3 Substituenten aufweisen kann, und

einen monovalenten Rest auf Basis eines monocyclischen oder eines polycyclischen, aus 2 bzw. 3 benzokondensierten aromatischen Ringen zusammengesetzten heterocyclischen Systems, in das 1 oder 2 stickstoffhaltige, fünf- oder sechsgliedrige ringförmige Strukturelemente mit insgesamt bis zu 4, pro Einzelring höchstens 3 zugehörigen, gleichen oder verschiedenen Heteroatomen, hauptsächlich aus der Gruppe bis zu 3

Stickstoff, Stickstoff/Schwefel und Schwefel/Sauerstoff, gegebenenfalls auch 2 miteinander verschmolzene 5er- und/oder 6er-Heterocyclen, einbezogen sind,
wie beispielsweise auf Basis von Benzimidazol, Benzimidazol-2-on, Benzimidazol-2-thion, Benzoxazol, Benzoxazol-2-on, Benzothiazol, Benzothiazol-2-on, Indazol, Benzotriazol, Indol, Isoindol, Phthalimid, Phthalimid-2-on, Naphthalimid, Naphthalimid-2-on, Thiazol, Isothiazol, 1,2,4-Thiadiazol, 1,3,4-Thiadiazol, Thiophen, Thionaphthen, Chinolin, Chinolin-2-on, Chinolin-2,4-dion, Isochinolin, Cinnolin, Chinazolin, Chinazolin-4-on, Chinazolin-2,4-dion, Phthalazin, Phthalazin-1,4-dion, Chinoxalin,
Chinoxalin-2,3-dion, Carbazol, Phenazin,
Benzimidazo[1,2-a]pyrimid-2-on,
Benzo[e][1,3]oxazin-2,4-dion, Benzo[e][1,4]oxazin-3-on,
Benzo[cd]indol-2-on, Benzo[de]isochinolin-1,3-dion und
Dibenzo[a,c]phenazin,
und welches sowohl an den heterocyclischen als auch an den benzokondensierten Bestandteilen jeweils noch 1 bis 3, insgesamt aber höchstens 4 Substituenten aufweisen kann, wobei solche Substituenten an den eben erwähnten Aryl- oder Heteroarylresten unabhängig voneinander die nachstehende Bedeutung von $Z^1$ oder $Z^2$ besitzen und in erster Linie von nichtionogenem Charakter sind.

Aus der vorgängigen Aufzählung von heterocyclischen Systemen, die als Bestandteil D, $R^1$ oder $R^2$ in den Verbindungen gemäß Formel (I) in Frage kommen, haben sich folgende als besonders geeignet erwiesen:
Benzothiazol, Benzimidazol, Benzimidazol-2-on,
Chinolin-2-on, Chinazolin-2,4-dion, Carbazol,
Benzoxazol-2-on, Phthalimid, Chinoxalin-2,3-dion und
Phthalazin-1,4-dion.

Von den an dieser Stelle als engere Auswahl in Betracht zu ziehenden Substituenten $Z^1$ und $Z^2$ an den zuvor als günstig eingestuften Aryl- bzw. Heteroarylresten steht

$Z^1$ vorzugsweise für einen Rest aus der Gruppe $C_1$-$C_4$-Alkyl, wie z.B. Methyl, Ethyl, Propyl, Isopropyl, Butyl, Isobutyl, 2-Butyl oder 2-Methyl-prop-2-yl, insbesondere Methyl und Ethyl, $C_1$-$C_4$-Alkoxy, wie z.B. Methoxy, Ethoxy, Propoxy, Isopropoxy, Butoxy, Isobutoxy, 2-Butoxy oder tert.-Butoxy, insbesondere Methoxy und Ethoxy, $C_2$-$C_5$-Alkoxycarbonyl, $C_2$-$C_5$-Alkanoyloxy, $C_2$-$C_5$-Alkanoylamino, Carboxy, Carbamoyl, N-($C_1$-$C_4$-Alkyl)-aminocarbonyl, N,N-Di-($C_1$-$C_4$-Alkyl)-aminocarbonyl, $C_1$-$C_4$-Alkylsulfonyl, Sulfamoyl, N-($C_1$-$C_4$-Alkyl)-aminosulfonyl, N,N-Di-($C_1$-$C_4$-Alkyl)-aminosulfonyl, Sulfo, Chlor, Brom, Nitro, Cyano, Trifluormethyl und Hydroxy, sowie

$Z^2$ für einen Rest der Formel Ar-W-, in der W eine direkte Bindung ist oder vorzugsweise einer brückenbildenden Gruppierung der Formeln
-O-, -CO-O-, -O-CO-, -CO-NH-, -NH-CO-, -S-, $-SO_2-$, $-SO_2-NH-$, $-NH-SO_2-$, $-CH_2-$, $CH_2-CH_2-$, -NH-, $-NH-CH_2-$ oder -N=N- oder einer Kombination aus mindestens 2 derartigen bivalenten Gruppierungen entspricht, und das daran gebundene
Ar Phenyl, Naphthyl, oder Phenyl samt ankondensiertem fünf- oder sechsgliedrigen, stickstoffhaltigen aromatischen Ring mit 1 oder 2 zugehörigen, gleichen bzw. verschiedenen Heteroatomen, insbesondere nur Stickstoff oder Stickstoff/Schwefel, oder einen solchen monovalenten Aryl- oder Heteroarylrest Ar mit zusätzlich 1 bis 3, gewöhnlich bloß bis zu 2, gleichen oder verschiedenen Substituenten des vorstehend für $Z^1$ definierten Typs bezeichnet.

Im Rahmen der obigen Zusammenstellung von erfindungsgemäß als vorteilhaft beurteilten Verbindungen der Formel (I) umfaßt

wenn n gleich 1 ist - das Symbol D
einen Arylen- oder Heteroarylenrest aus der folgenden Gruppe:
Phenylen, Phenylen mit 1 bis 3 Substituenten, Naphthylen, Naphthylen mit 1 bis 3 Substituenten, oder Biphenyldiyl, einen bivalenten Rest auf Basis von Biphenylen, Fluoren oder Anthrachinon, der jeweils 1 bis 3 Substituenten aufweisen kann, und
einen bivalenten Rest auf Basis eines monocyclischen oder eines polycyclischen, aus 2 bzw. 3 benzokondensierten aromatischen Ringen zusammengesetzten heterocyclischen Systems, in das 1 oder 2 stickstoffhaltige, fünf- oder sechsgliedrige ringförmige Strukturelemente mit insgesamt bis zu 4, pro Einzelring höchstens 3 zugehörigen, gleichen oder verschiedenen Heteroatomen, hauptsächlich aus der Gruppe bis zu 3 Stickstoff, Stickstoff/Schwefel und Schwefel/Sauerstoff, gegebenenfalls auch 2 miteinander verschmolzene 5er- und/oder 6er-Heterocyclen, einbezogen sind,
wie beispielsweise auf Basis von Benzimidazol,
Benzimidazol-2-on, Benzoxazol, Benzothiazol, Benzotriazol,
Phthalimid, Chinolin, Isochinolin, Chinazolin,
Chinazolin-4-on, Chinoxalin, Chinoxalin-2,3-dion,

Thionaphthen, Carbazol, 2,2'-Bipyridin,
Benzo[e][1,3]oxazin-2,4-dion,
Dibenzo[b,d]thiophen-5,5-dioxid, Thioxanthen-10,10-dioxid,
Pyrrolo[3,4-f]isoindol,1,3,5,7-tetraon,
5H-Phenanthridin-6-on und
4,9-Dihydro-pyrido[2,3,4,5-1mn]phenanthridin-5,10-dion, und welches sowohl an den heterocyclischen als auch an den benzokondensierten Bestandteilen jeweils noch 1 bis 3, insgesamt aber höchstens 4 Substituenten aufweisen kann, wobei solche Substituenten an den eben erwähnten Arylen- oder Heteroarylenresten unabhängig voneinander jeweils die obige Bedeutung von $Z^1$ oder $Z^2$ besitzen und in erster Linie von nichtionogenem Charakter sind,
oder eine Kombination aus 2 derartigen, aneinander einfach gebundenen heterocyclischen Resten oder eines davon zusammen mit Phenylen,
aber weiterhin auch
einen bivalenten Rest der Formel -Ar-V-Ar-, in der V die zuvor für W als Bestandteil von $Z^2$ identische Bedeutung zukommt oder einer brückenbildenden Gruppierung der Formeln

$-O-C_2H_4-O-$, $-CO-O-C_2H_4-O-CO-$,
$-O-C_3H_6-O-$, $-CO-O-C_3H_6-O-CO-$,
$-SO_2-C_2H_4-SO_2-$, $-CO-NH-C_2H_4-NH-CO$,
$-SO_2-NH-C_2H_4-NH-SO_2-$,

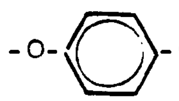, 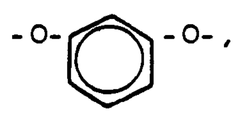,

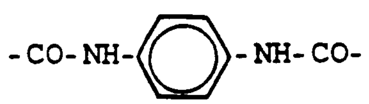, 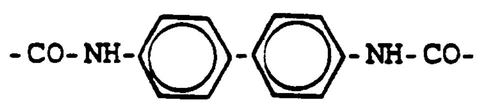,

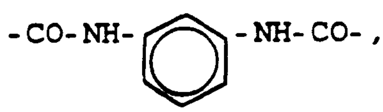, 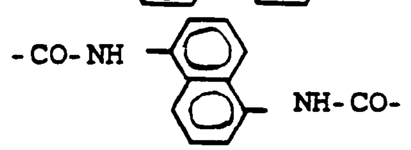,

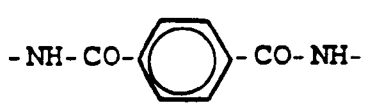, 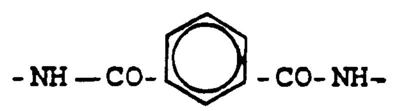,

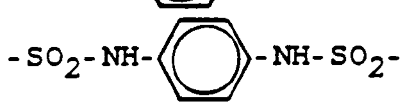 oder 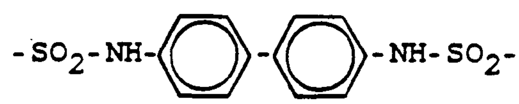

entspricht, wobei in einem derartigen Brückenglied V gegebenenfalls vorhandene Arylenbestandteile insgesamt noch 1 bis 4, gewöhnlich bloß bis zu 2, gleiche oder verschiedene Substituenten des vorstehend für $Z^1$ definierten Typs aufweisen können, und die beiden daran gebundenen Ar's unabhängig voneinander jeweils einen bivalenten aromatischen Rest auf Basis eines der oben sonst für monovalentes Ar identischen speziellen Ringsysteme bezeichnen.

Eine weitere Möglichkeit zur Präzisierung der erläuterten erfindungsgemäßen Verbindungen nach Formel (I) zeigen die mit den benzoiden Ringen A bzw. B verschmolzenen heterocyclischen Strukturelemente
einmal dadurch, daß - sofern $X^1$ bzw. $X^2$ eine
substituierte Imidgruppierung >$NR^3$ verkörpern -
$R^3$ am ringbildenden Imidstickstoff einen Rest aus der Gruppe $C_1$-$C_{18}$-Alkyl oder $C_2$-$C_5$-Alkanoyl, Aryl, Aralkyl oder Aroyl mit jeweils 1 oder 2 hierin vorhandenen, fünf- oder sechsgliedrigen Ringstruktur(en), insbesondere aber einen Rest aus der Gruppe $C_1$-$C_4$-Alkyl, Acetyl, Phenyl, Naphthyl, Benzyl oder Benzoyl, wobei gegebenenfalls vorliegende Ringstrukturen jeweils noch 1 bis 2 nichtionogene Substituenten aufweisen können;
und zum anderen dadurch, daß die benzokondensierten Ringe A bzw. B jeweils unsubstituiert sind oder 1 bis 4 gleiche oder verschiedene Substituenten der Bedeutung von $Z^1$ oder $Z^2$, gewöhnlich aber bloß bis zu

2 Substituenten vom Typ $Z^1$ besitzen, und/oder die Ringe A bzw. B weiterhin anellierte carbocyclische Ringe tragen können,
beispielsweise unter Entstehung eines Naphthorestes, die gegebenenfalls noch dem Typ $Z^1$ zugehörige Substituenten enthalten.

Ganz besondere Aufmerksamkeit im Zuge der Erfindung genießen wegen ihrer unmittelbaren praktischen Bedeutung diejenigen Farbmittel der Formel (I), worin
der Index n den Wert 0 hat und
der ringbildende Heterobestandteil $X^1$ ätherartig gebundenen Sauerstoff -O- oder eine unsubstituierte Imidgruppierung >NH darstellt,
also die diesbezüglichen Monoazoverbindungen.

Die allgemeine Formel (I) für die erfindungsgemäßen Azofarbmittel ist als idealisierte Formel zu verstehen und erfaßt auch die entsprechenden tautomeren Verbindungen sowie die möglichen Konfigurationsisomere jeder tautomeren Form. Die zur Veranschaulichung der strukturellen Verhältnisse benutzte idealisierte Formel (I) schließt deshalb vor allem auch die Hydrazon- bzw. Bishydrazonform mit ein.

Gegenstand der Erfindung ist auch das Verfahren zur Herstellung der erfindungsgemäßen Verbindungen der idealisierten allgemeinen Formel (I) und von deren Gemischen, dadurch gekennzeichnet, daß man ein oder mehrere unterschiedliche Amine der Formel $D\text{-}NH_2$ bzw. Diamine der Formel $H_2N\text{-}D\text{-}NH_2$, worin dem Symbol D jeweils die entsprechend Formel (I) dafür aus den vorstehenden Erläuterungen ersichtliche Bedeutung zukommt, diazotiert und unter Kupplung mit 1 Äquivalent einer Verbindung der allgemeinen Formel (II)

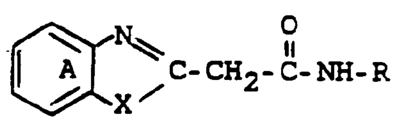
(II)

oder eines Gemisches mehrerer unterschiedlicher Verbindungen der Formel (II) pro Äquivalent insgesamt reagierender Diazoniumgruppierungen umsetzt, wobei die Symbole X und R in Formel (II) mit der entsprechend Formel (I) jeweils aus den vorstehenden Erläuterungen ersichtlichen Bedeutung für die Symbole $X^1$ bzw. $X^2$ sowie $R^1$ bzw. $R^2$ identisch sind und der Ring A in gleicher Weise anelliert bzw. substituiert sein kann, wie dort für die Ringe A und B angegeben ist.

Als Diazokomponenten werden für das erfindungsgemäße Verfahren diazotierbare aromatische Amine der Formel $D\text{-}NH_2$ in Betracht gezogen, insbesondere Aniline, Naphthylamine, Aminobiphenylene, Aminofluorene, Aminoanthrachinone und heterocyclische Amine, wobei diese primären Amine jeweils ein- oder mehrfach substituiert sein können. Zu solchen Ausgangsstoffen für die Erzeugung von Monoazoverbindungen (n = 0) der Formel (I) gehören vor allem aromatische Amine $D\text{-}NH_2$, in denen das Symbol D einen der zuvor namentlich charakterisierten Aryl- oder Heteroarylreste bedeutet.

Beispiele für aromatische Amine des obengenannten Typs sind u.a.
Anilin und substituierte Aniline, vorzugsweise Anilin mit 1 bis 3 Substituenten aus der Gruppe niederes Alkyl wie Methyl oder Ethyl; niederes Alkoxy wie Methoxy oder Ethoxy; Phenoxy; Carboxy; Carbalkoxy wie Carbomethoxy, Carboethoxy, Carbopropoxy, Carboisopropoxy oder Carbobutoxy; Acyl wie Acetyl oder Benzoyl; Acyloxy wie Acetoxy; Acylamino wie Acetylamino oder Benzoylamino; gegebenenfalls N-mono- oder N,N-disubstituiertes Carbamoyl oder Sulfamoyl, wobei als Substituenten wiederum niederes Alkyl oder, eventuell ein- oder mehrfach substituiertes, Phenyl in Frage kommt; Alkyl- oder Phenylamino; Alkyl- oder Phenylsulfonyl; Phenylsulfonylamino; gegebenenfalls substituiertes Phenylazo; Sulfo; Cyano; Halogen wie Chlor oder Brom; Nitro, Hydroxy und Trifluormethyl; fernerhin Aminobiphenyl und seine durch bis zu 4 der vorstehenden Reste ringsubstituierten Derivate.

Geeignete speziell substituierte Aniline sind z.B. 2-, 3- und 4-Nitroanilin, -Chloranilin, -Methylanilin, -Ethylanilin, -Trifluormethylanilin oder -Methoxyanilin; 2,3-, 2,4-, 2,5-, 2,6-, 3,4- und 3,5-Dinitroanilin oder -Dichloranilin, 4-Chlor-2-nitroanilin, 4-Methyl-2-nitroanilin oder 4-Methoxy-2-nitroanilin; 5-Chlor-2-nitroanilin, 5-Methyl-2-nitroanilin oder 5-Methoxy-2-nitroanilin; 2-Chlor-4-nitroanilin, 2-Methyl-4-nitroanilin oder 2-Methoxy-4-nitroanilin; 2-Chlor-5-nitroanilin, 2-Methyl-5-nitroanilin oder 2-Methoxy-5-nitroanilin; 2-Chlor-4-methylanilin oder 2-Chlor-4-methoxyanilin; 2-Chlor-5-methylanilin, 2-Chlor-5-methoxyanilin oder 2-Chlor-5-trifluormethylanilin; 3-Chlor-2-methylanilin oder 3-Chlor-2-methoxyanilin; 4-Chlor-2-methylanilin, 4-Chlor-2-methoxyanilin, 4-Chlor-2,5-dimethylanilin oder 4-Chlor-2-trifluormethylanilin; 5-Chlor-3-methylanilin, 5-Chlor-3-methoxyanilin, 5-Chlor-2-phenoxyanilin oder 5-Chlor-2-(4-chlorphenoxy)-anilin; 2,4,5-, 2,3,4-, 2,3,5-, 2,4,6-, 2,3,6- und 3,4,5-Trichloranilin; 4-Phenoxyanilin; 3,5-Bis(trifluormethyl)-anilin; 5-Methyl-2-methoxyanilin; 4-Phenylazoanilin; 4-(2-Methylphenylazo)-anilin, 2,5-Dimethoxy-4-(4-nitrophenylazo)-anilin, 4-(2,6-Dichlor-4-nitrophenylazo)-2,5-dimethoxyanilin, 2-(2-Chlor-4-nitrophenylazo)-5-methoxy-4-methylanilin, 4-(2-Methylphenylazo)-2-methylanilin, 4-(3-Methylphenylazo)-3-methylanilin oder 4-(4-Methyl-2-nitrophenylazo)-2-methoxy-5-methylanilin; 4-Phenylaminoanilin, 2-Methoxy-4-phenylaminoanilin oder 4-(4-Methoxyphenylamino)-anilin; 4-Acetylaminoanilin oder 2-Chlor-4-methyl-5-acetylaminoanilin; 4-Benzoylamino-2,5-dimethoxyanilin, 4-Benzoylamino-2-chlor-5-methoxyanilin, 4-Benzoylamino-2-methoxy-5-methylanilin oder 5-Benzoylamino-2,4-dimethylanilin; 4-Cyano-2,5-dimethoxyanilin oder 2-Chlor-4-cyano-5-methylanilin; 2-, 3- und 4-Aminobenzoesäure; 2-, 3- und 4-Aminobenzoesäuremethylester, -ethylester, -propylester oder -butylester, insbesondere 2-Aminobenzol-1,4-dicarbonsäuredimethylester oder -diethylester (Aminoterephthalsäureester), fernerhin 5-Aminobenzol-1,3-dicarbonsäuredimethylester oder -diethylester (Aminoisophthalsäureester); 2-, 3- und 4-Aminobenzamid; 3-Aminobenzamid, das in 4-Stellung durch Chlor, Methyl, Methoxy oder Carbomethoxy substituiert ist, oder 4-Aminobenzamid, das in 3-Stellung durch Chlor, Methyl, Methoxy oder Carbomethoxy substituiert ist, sowie Derivate der vorstehenden Benzamide, die am Amid-Stickstoffatom durch Methyl, Ethyl, Phenyl, Methylphenyl oder Dimethylphenyl, bevorzugt 2,4-Dimethylphenyl, Chlor- und Dichlorphenyl, insbesondere 4-Chlorphenyl und 2,5-Dichlorphenyl, 2-, 3- und 4-Carbamoylphenyl, Methoxyphenyl, Benzothiazol-2-yl oder Benzimidazol-2-on-5-yl substituiert sind, wie 3-Amino-4-chlorbenzamid, 3-Amino-4-methylbenzamid, 3-Amino-4-methylbenzoesäure-N-methylamid, 3-Amino-4-methoxybenzanilid, 3-Amino-4-methoxycarbonylbenzoesäure-N-(2,5-dichlorphenyl)-amid, 3-Amino-4-methoxybenzoesäure-N-(4-carbamoylphenyl)-amid, 3-Amino-4-methylbenzoesäure-N-(4-sulfophenyl)-amid, 4-Amino-2,5-dimethoxybenzoesäure-N-(2,4-dimethylphenyl)-amid, N-(2,4-Dihydroxychinazolin-6-yl)-4-aminobenzamid, und N-(6-Chlorbenzothiazol-2-yl)-4-aminobenzamid; 2-Phenylsulfonylanilin, 2-Ethylsulfonyl-5-trifluormethylanilin, 5-Ethylsulfonyl-2-methoxyanilin und 5-Benzylsulfonyl-2-methoxyanilin; 2-, 3- und 4-Aminobenzolsulfonsäure, 2-Aminobenzol-1,4-disulfonsäure, 2-Amino-4-methylbenzolsulfonsäure, 2-Amino-4-chlor-5-methylbenzolsulfonsäure, 2-Amino-5-chlor-4-methylbenzolsulfonsäure und 2-Amino-5-chlor-4-carboxybenzolsulfonsäure; 2-, 3- und 4-Aminobenzolsulfonamid; 4-Amino-3-methoxybenzolsulfonamid, 4-Amino-2,5-dimethoxybenzolsulfonamid und 4-Amino-2-methoxy-5-methylbenzolsulfonamid, sowie Derivate der vorstehenden Benzolsulfonamide, die am Amid-Stickstoffatom durch Methyl, Ethyl, Phenyl, Chlorphenyl, Dichlorphenyl, Methylphenyl, Dimethylphenyl oder Methoxyphenyl substituiert sind, wie 3-Amino-4-methoxybenzol-N,N-diethylsulfonamid, 3-Amino-4-methoxybenzol-N-butylsulfonamid, 3-Amino-2-methylbenzol-N,N-dimethylsulfonamid, 4-Amino-2,5-dimethoxybenzolsulfanilid, 4-Amino-2,5-dimethoxybenzol-N-methylsulfonamid, 4-Amino-2-methoxy-5-methylbenzol-N-methylsulfonamid und 5-Amino-2-methylbenzolsulfanilid.

Geeignete aromatische Amine sind auch Naphthylamine und substituierte Naphthylamine, wie z.B. 1-Naphthylamin und 2-Naphthylamin, 4-Chlor-1-naphthylamin, 4-Nitro-1-naphthylamin, 2- oder 4-Methyl-1-naphthylamin, 2- oder 4-Methoxy-1-naphthylamin, 2- oder 4-Ethoxy-1-naphthylamin, 4-(2-Methoxyphenylazo)-naphthylamin und 4-(2-Ethoxyphenylazo)-naphthylamin; fernerhin Aminobiphenylene und Aminofluorene wie z.B. 2-Aminofluoren; weiterhin Aminoanthrachinone, wie z.B. 1-Aminoanthrachinon und 2-Aminoanthrachinon, sowie substituierte Aminoanthrachinone, wie z.B. 1-Amino-2-chloranthrachinon, 1-Amino-3-chloranthrachinon, 1-Amino-4-chloranthrachinon, 1-Amino-5-chloranthrachinon, 1-Amino-6-chloranthrachinon, 1-Amino-5,8-dichloranthrachinon, 1-Amino-6,7-dichloranthrachinon, 1-Amino-2-bromanthrachinon, 1-Amino-3-bromanthrachinon, 1-Amino-2,4-dibromanthrachinon, 1-Amino-6-fluoranthrachinon, 1-Amino-7-fluoranthrachinon, 1-Amino-6,7-difluoranthrachinon, 2-Amino-1-chloranthrachinon, 2-Amino-3-chloranthrachinon, 2-Amino-3-bromanthrachinon, 1-Amino-4-nitroanthrachinon, 1-Amino-5-nitroanthrachinon, 1-Amino-2-methylanthrachinon, 1-Amino-2-methyl-4-chloranthrachinon, 1-Amino-2-methyl-4-bromanthrachinon, 1-Aminoanthrachinon-2-carbonsäure, 1-Aminoanthrachinon-2-carbonsäureamid, 1-Aminoanthrachinon-2-carbonsäuremethylester, 1-Amino-4-nitroanthrachinon-2-carbonsäure, 1-Amino-2-acetylanthrachinon, 1-Amino-4-acetylaminoanthrachinon, 1-Amino-5-acetylaminoanthrachinon, 1-Amino-5-benzoylaminoanthrachinon, 1-Amino-4-benzoylaminoanthrachinon, 1-Amino-8-benzoylaminoanthrachinon, 1-Amino-4-hydroxyanthrachinon, 1-Amino-5-hydroxyanthrachinon, 1-Amino-4-methoxyanthrachinon, 1-Amino-2-methoxy-4-hydroxyanthrachinon, 1-Amino-4-methylaminoanthrachinon, 1-Amino-4-methylaminoanthrachinon, 1-Amino-4-cyclohexyl-1-Amino-4-benzylaminoanthrachinon, 1-Amino-4-cyclohexylaminoanthrachinon, 1-Amino-4-anilinoanthrachinon, 1-Amino-2-brom-4-methylthioanthrachinon, 1-Amino-4-(4-methylphenylsulfonylamino)-2-phenylthioanthrachinon und 1-Amino-6-methylthioanthrachinon.

Weitere geeignete aromatische Amine sind solche auf Basis heterocyclischer Strukturen sowie deren Substitutionsprodukte, wie z.B. 4-Amino-6-chlorbenzimidazol und 4-Amino-6-chlor-2-methylbenzimidazol, 5-Amino-2-acetamidobenzimidazol und 5-Amino-2-carbomethoxyaminobenzimidazol, 5-Aminobenzimidazol-2-on, das gegebenenfalls in 6-Stellung durch Chlor, Brom, Nitro, Methoxy, Ethoxy, Carboxy, Carboxymethyl, Carboxyethyl oder Carboxybutyl substituiert ist, 5-Aminobenzimidazol-2-on, das gegebenenfalls in 7-Stellung durch Chlor, Brom, Methyl, Ethyl, Methoxy oder Ethoxy substituiert ist, insbesondere 5-Amino-1-methylbenzimidazol-2-on, 5-Amino-6-methylbenzimidazol-2-on, 5-Amino-4,6-dichlorbenzimidazol-2-on, 5-Amino-4,6,7-trichlorbenzimidazol-2-on, 6-Amino-4-chlor-5-nitrobenzimidazol-2-on und 7-Amino-5-chlor-1-methylbenzimidazol-2-on, sowie 5-Amino-6-methylbenzimidazol-2-thion; 5-Amino-7-chlorbenzoxazol-2-on und 6-Amino-5-chlorbenzoxazol-2-on; 2-Amino-6-methoxybenzothiazol, 2-Amino-6-ethoxybenzothiazol, 2-Amino-6-nitrobenzothiazol, 6-Aminobenzothiazol, 6-Amino-2-acetamidobenzothiazol und 6-Aminobenzothiazol-2-on; 3-Amino-6-chlorindazol, 5-Aminoindazol und 6-Aminoindazol; 5-Aminophthalimid und 3-Amino-1,8-naphthalimid; 5-Amino-2-(2-hydroxyphenyl)-benzotriazol; 6-Amino-2-hydroxy-4-methyl-chinolin, das zusätzlich durch 5-Methyl, 7-Chlor, 7-Methyl, 7-Ethoxy, 8-Methyl, 8-Methoxy oder 8-Carboxymethyl substituiert sein kann, insbesondere 6-Amino-5-chlor-4,8-dimethyl-2-hydroxychinolin, 6-Amino-8-chlor-4,5-dimethyl-2-hydroxychinolin, 6-Amino-5,8-dimethoxy-4-methyl-2-hydroxychinolin, 6-Amino-5-chlor-4-methyl-8-methoxy-2-hydroxychinolin, 6-Amino-4,5,8-trimethyl-2-hydroxychinolin und 6-Amino-5,8-dimethyl-2-hydroxychinolin, 7-Aminochinolin, 7-Amino-2-hydroxychinolin, 7-Amino-2-hydroxy-4-methylchinolin, das zusätzlich durch 6-Nitro, 6-Sulfo, 6-Methoxy, 6-Isopropoxy, 6-Butoxy, 6-Methyl oder 6-Chlor, 5-Chlor oder 5-Methyl substituiert sein kann, insbesondere 7-Amino-2-hydroxy-4-methylchinolin und 7-Amino-2-hydroxy-4-methyl-6-methoxychinolin; 6-Amino-2-methyl-chinazolin-4-on, 6-Amino-chinazolin-2,4-dion, 6-Amino-3-methylchinazolin-2,4-dion, 6-Amino-7-nitrochinazolin-2,4-dion, 6-Amino-7-chlorchinazolin-2,4-dion, 6-Amino-8-nitrochinazolin-2,4-dion, 7-Amino-chinazolin-2,4-dion und 7-Amino-6-nitrochinazolin-2,4-dion; 6-Amino-phthalazin-1,4-dion; 6-Amino-chinoxalin-2,3-dion, das gegebenenfalls in 7-Stellung durch Chlor, Nitro, Methyl, Methoxy, Ethoxy oder Carboxy substituiert ist, insbesondere 6-Amino-5,7-dichlorchinoxalin-2,3-dion und 6-Amino-5,7,8-trichlorchinoxalin-2,3-dion, 7-Amino-5-chlorchinoxalin-2,3-dion und 8-Amino-6-chlor-1-methylchinoxalin-2,3-dion; schließlich 2-Aminocarbazol sowie Aminobenzo[c,d]indol-2-on, 7(8)-Amino-4-methyl-benzimidazo[1,2-a]pyrimid-2-on, 6- oder 7-Amino-benzo[e][1,3]oxazin-2,4-dion 6(7)-Amino-3-phenylbenzo[e][1,3]oxazin-2,4-dion, 7-Amino-benzo[e][1,4]oxazin-3-on und 11-Amino-dibenzo[a,c]phenazin.

Als Bisdiazokomponenten werden für das erfindungsgemäße Verfahren diazotierbare aromatische Diamine der Formel $H_2N$-D-$NH_2$ in Betracht gezogen, insbesondere Phenylendiamine, Naphthylendiamine, Diaminobiphenylene, Diaminofluorene, Diaminoanthrachinone, Benzidine und heterocyclische aromatische Diamine, wobei diese primären Diamine jeweils ein- oder mehrfach substituiert sein können. Zu solchen Ausgangsstoffen für die Erzeugung von Disazoverbindungen (n = 1) der Formel (I) gehören vor allem aromatische Diamine $H_2N$-D-$NH_2$, in denen das Symbol D einen der zuvor namentlich charakterisierten Arylen- oder Heteroarylenreste bedeutet.

Geeignete spezielle aromatische Diamine $H_2N$-D-$NH_2$ sind beispielsweise p-Phenylendiamin, m-Phenylendiamin, 2-Chlor-p-phenylendiamin, 2-Methyl-p-phenylendiamin, 2-Methoxy-p-phenylendiamin, 2-Nitro-p-phenylendiamin, 2,5-Dichlor-p-phenylendiamin, 2,5-Dimethyl-p-phenylendiamin, 2,5-Dimethoxy-p-phenylendiamin, 2,5-Diaminobenzotrifluorid, 2,5-Diaminobenzoesäure-methylester, 3,5-Diamino-4-chlorbenzolsulfonsäure, 1,5-Diaminonaphthalin, 1,4-Diaminoanthrachinon, Benzidin, 3,3′,5,5′-Tetrachlorbenzidin, 2,2′,5,5′-Tetrachlorbenzidin, 2,2′-Dichlor-3,3′-dimethylbenzidin, 2,2′-Dimethoxybenzidin, 2,2′-Dichlorbenzidin, 2,2′-Dimethylbenzidin, 5,5′-Dimethoxy-2,2′-dinitrobenzidin, 5,5′-Dimethyl-2,2′-difluorbenzidin, 2,2′-Dichlor-5,5′-dimethoxybenzidin, 5,5′-Dichlor-2,2′-dimethylbenzidin, 2,2′-Dichlor-5,5′-dinitrobenzidin, 2,2′-Dinitrobenzidin, 3,3′-Dimethoxybenzidin, 3,3′-Dinitrobenzidin, 3,3′-Diethoxybenzidin, 3,3′-Dimethylbenzidin, 3,3′-Dichlorbenzidin, 3,3′-Diphenoxybenzidin, 3,3′-Diisopropylbenzidin, 3,3′-Di-(2-methoxyethoxy)-benzidin, 3,3′-Diethylbenzidin, 3,3′-Di-n-butoxybenzidin, 3,3′-Dipropoxybenzidin, 3,3′-Di-(2-methylpropoxy)-benzidin, 3,3′-Diisopropoxybenzidin, 3,3′-Di-n-butylbenzidin, 3,3′-Di-(2-methylpropyl)-benzidin, 3,3′-Dipropylbenzidin, Benzidin-3,3′-dicarbonsäure, Benzidin-3,3′-dicarbonsäure-diethylester, Benzidin-3,3′-dicarbonsäure-dibutylester, Benzidin-3,3′-dicarbonsäure-dimethylester, 2,5-Diaminodiphenylsulfon und 5,5′-Diamino-2,2′-bipyridin, sowie die nachfolgenden, durch Strukturformel wiedergegebenen heterocyclischen Diamine, die dem allgemeinen Aufbauprinzip $H_2N$-Ar-V-Ar-$NH_2$ entsprechen:

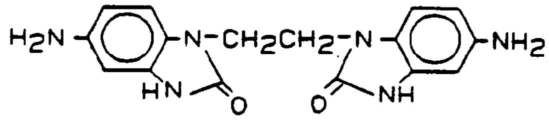

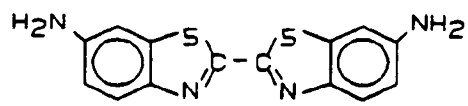

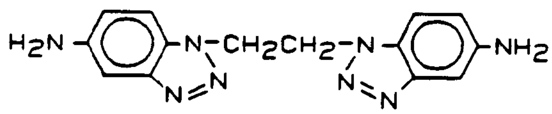

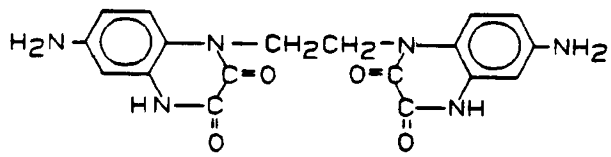

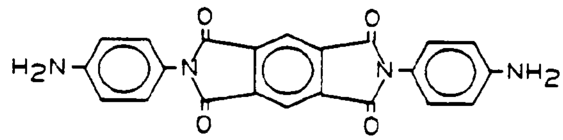

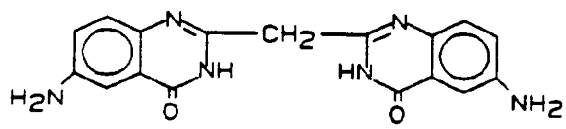

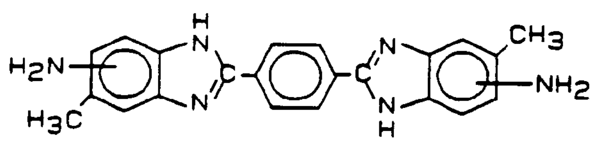

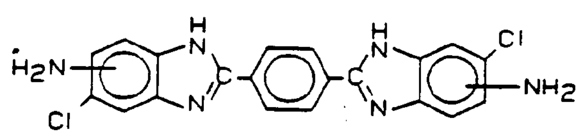

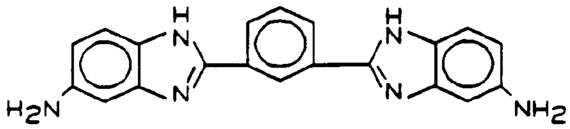

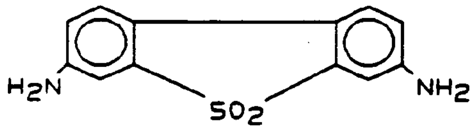

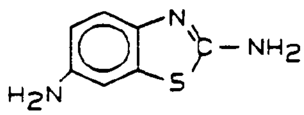

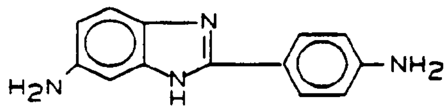

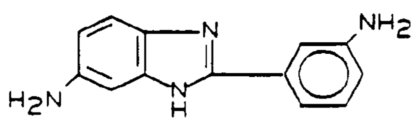

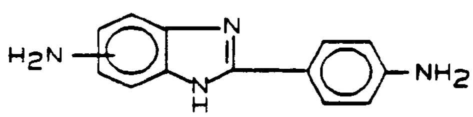

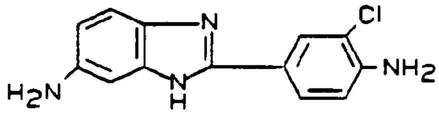

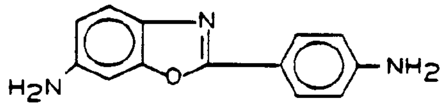

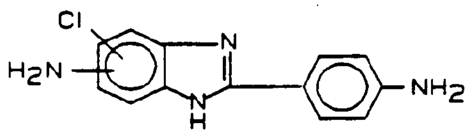

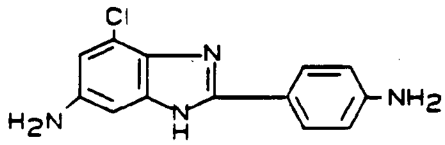

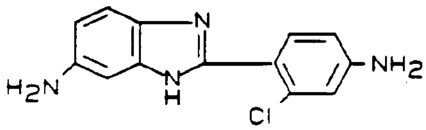

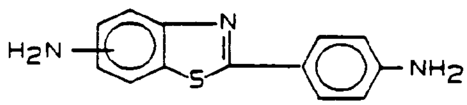

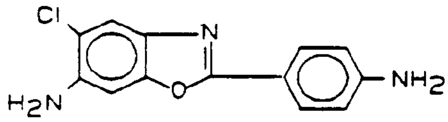

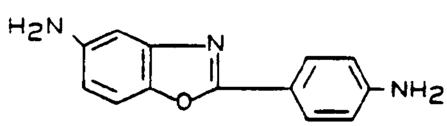

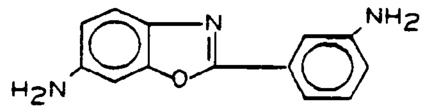

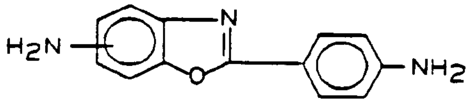

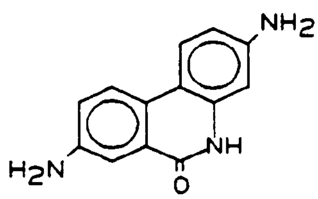

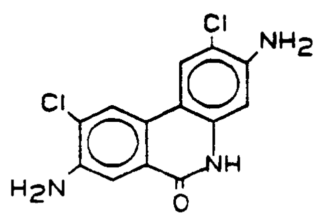

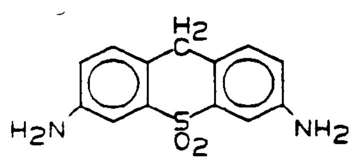

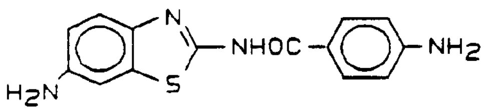

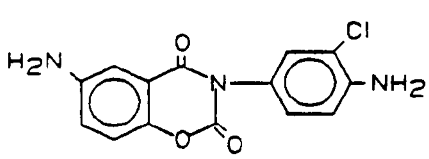

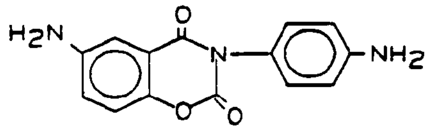

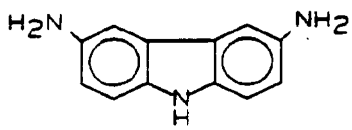

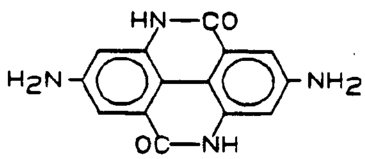

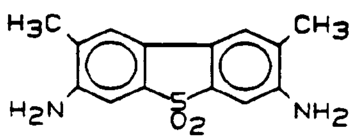

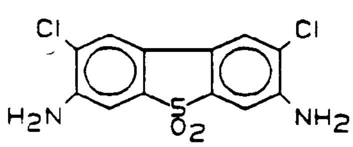

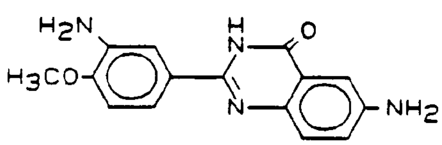

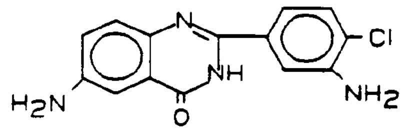

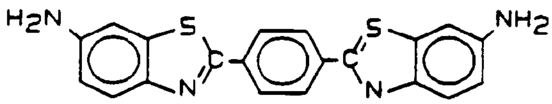

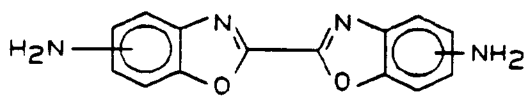

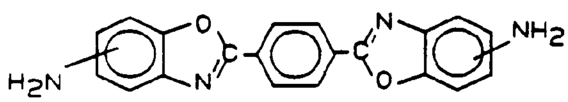

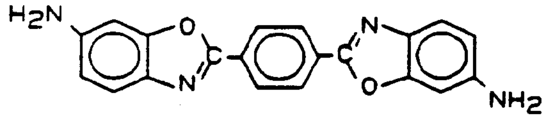

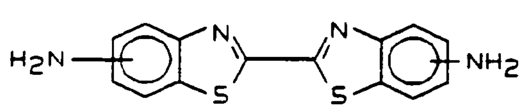

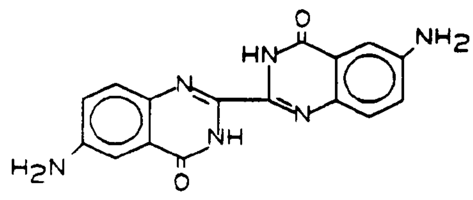

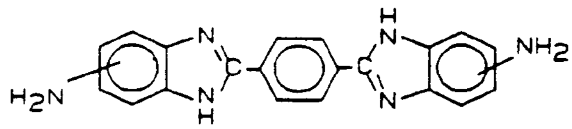

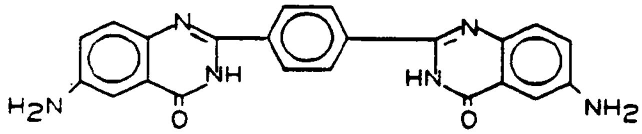

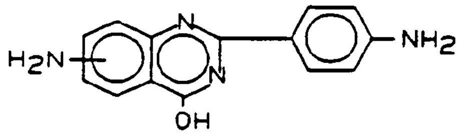

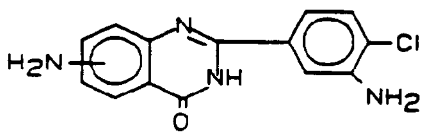

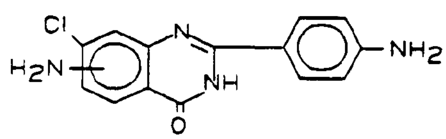

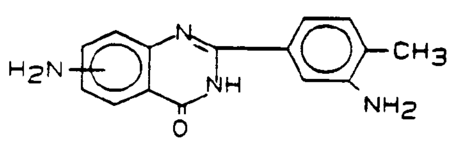

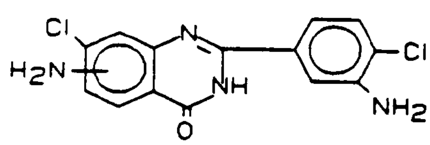

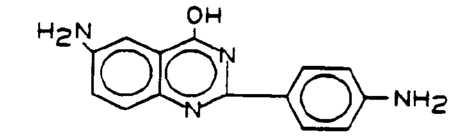

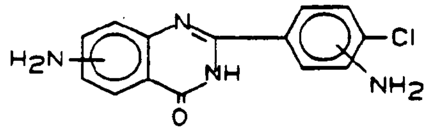

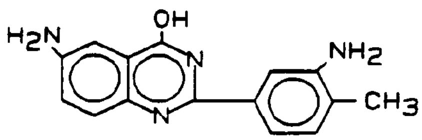

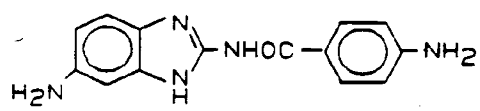

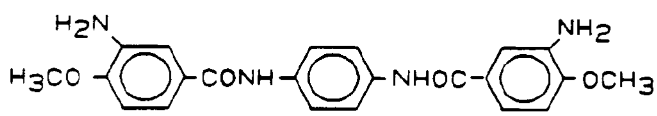

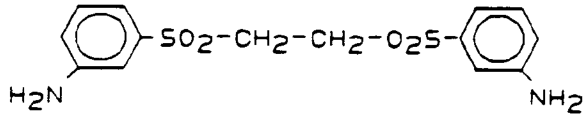

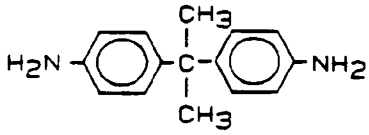

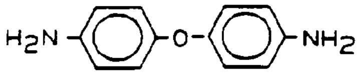

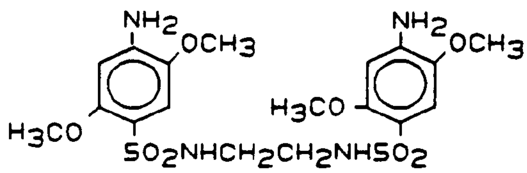

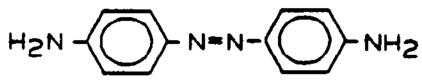

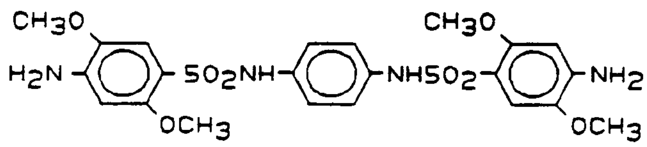

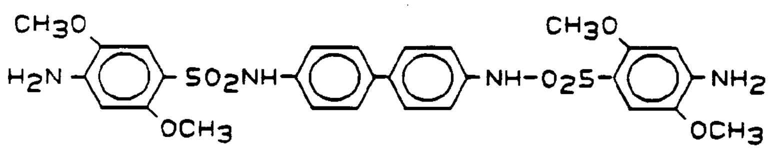

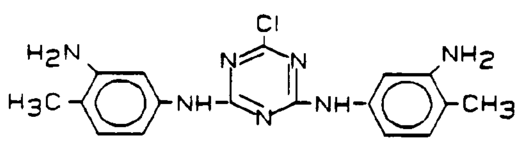

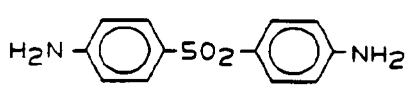

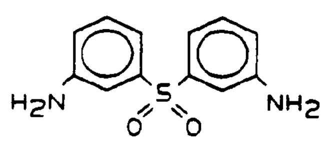

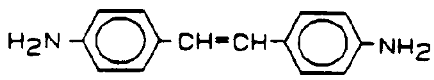

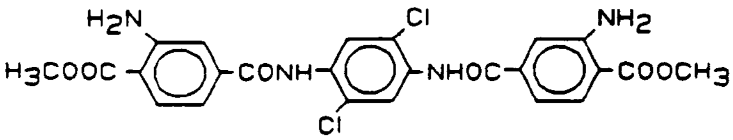

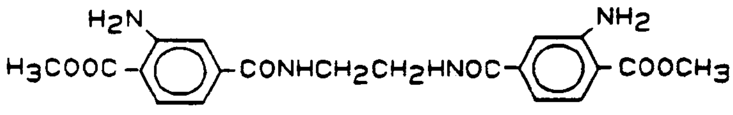

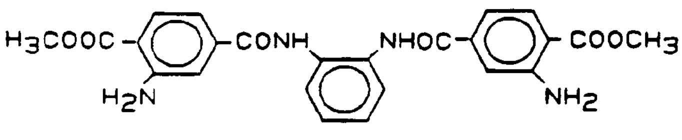

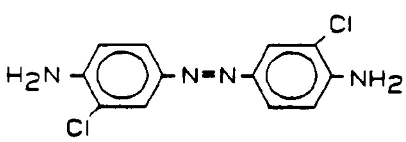

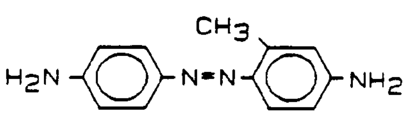

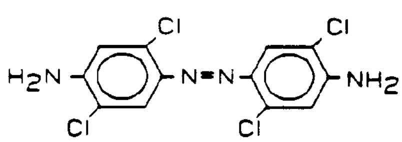

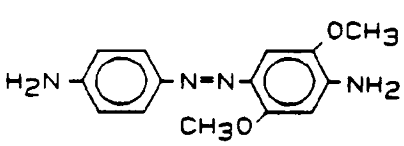

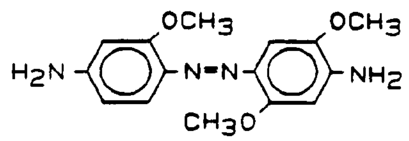

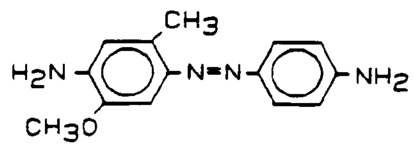

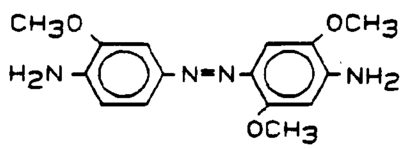

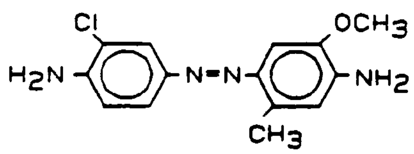

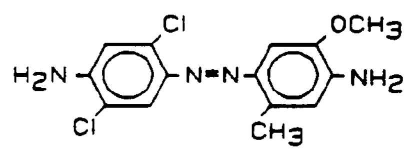

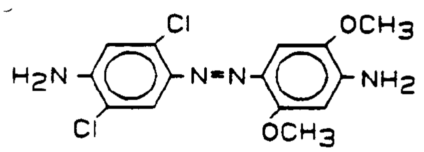

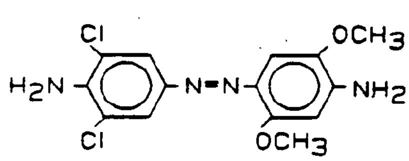

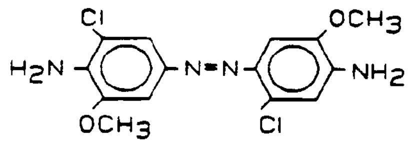

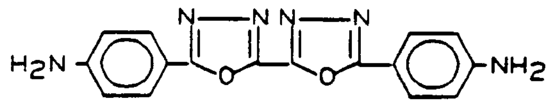

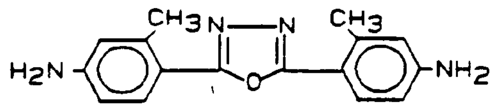

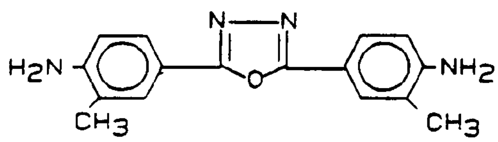

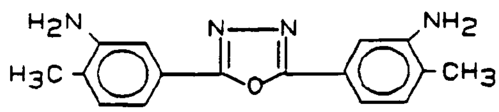

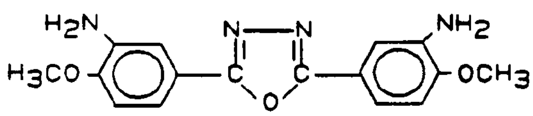

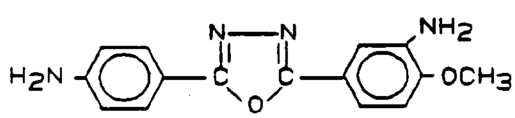

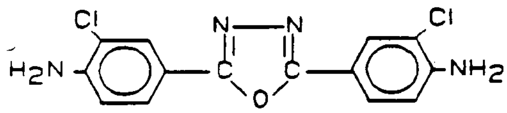

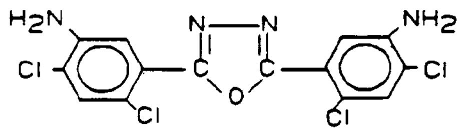

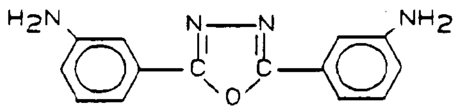

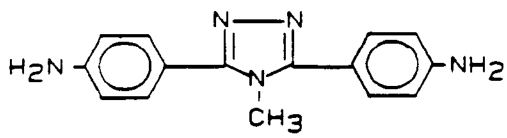

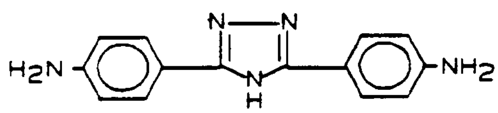

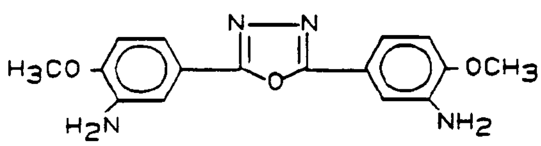

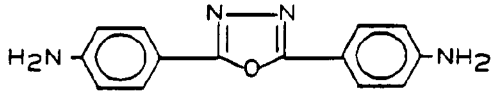

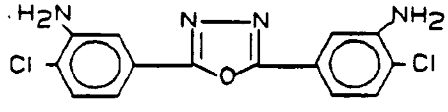

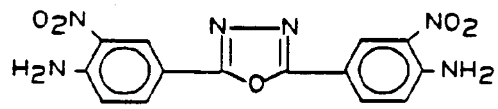

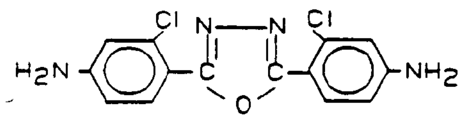

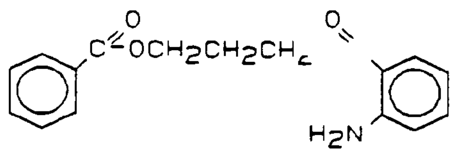

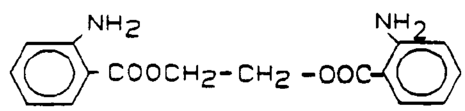

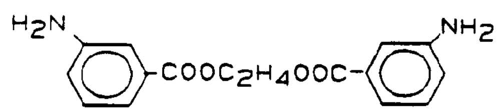

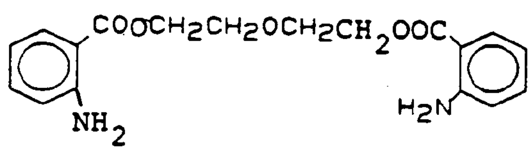

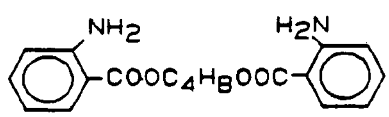

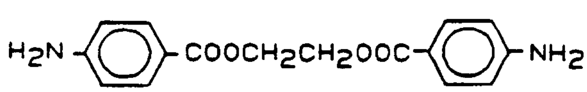

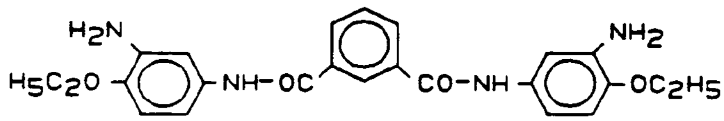

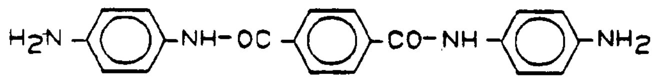

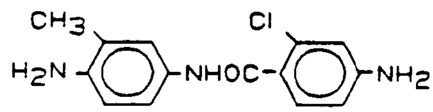

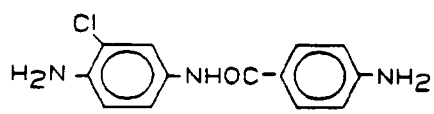

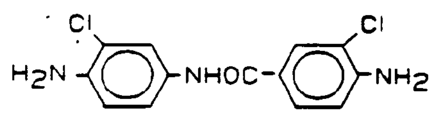

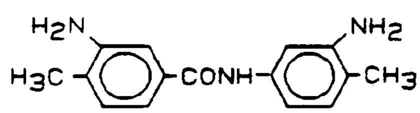

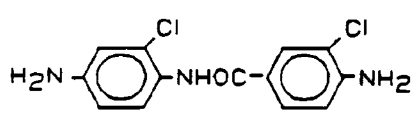

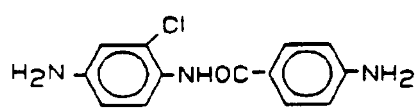

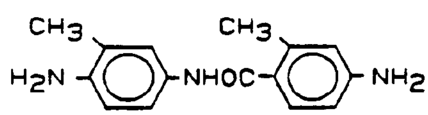

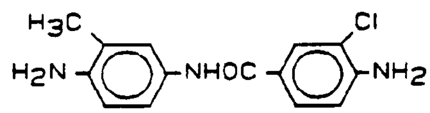

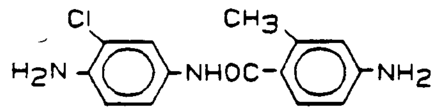

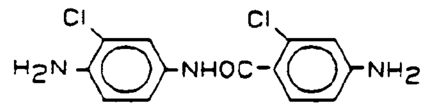

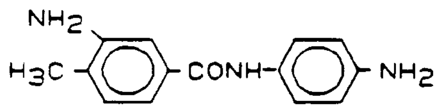

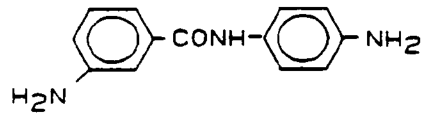

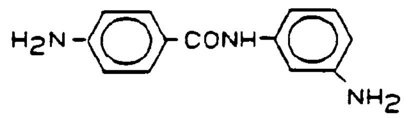

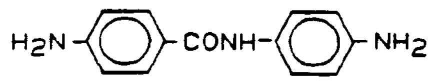

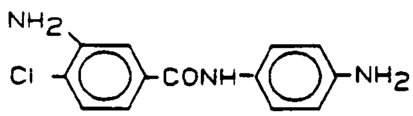

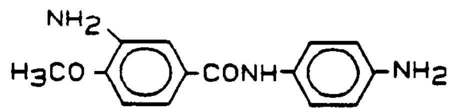

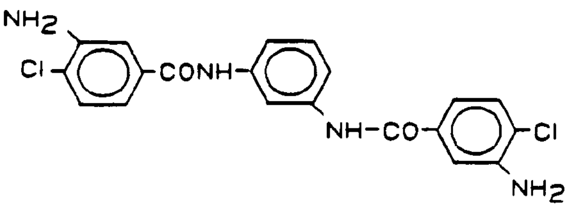

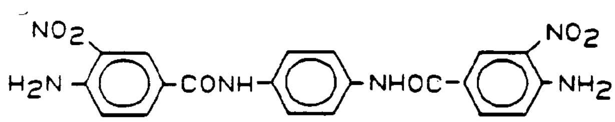

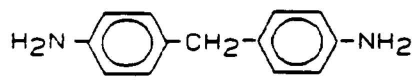

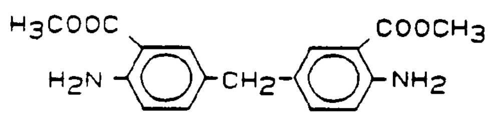

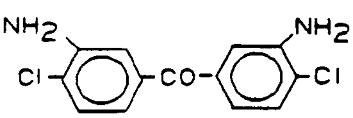

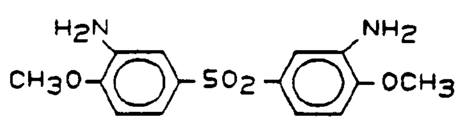

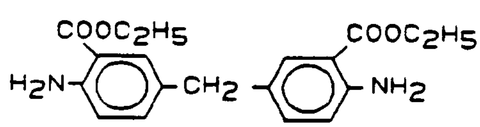

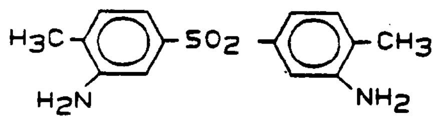

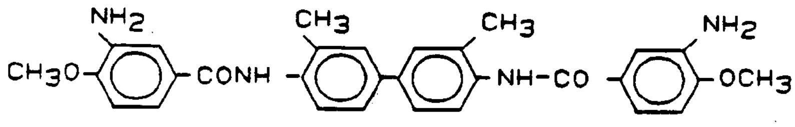

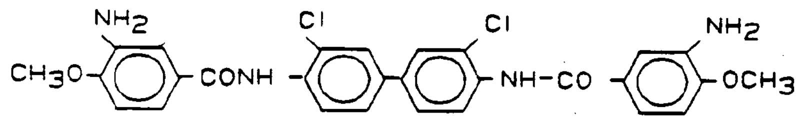

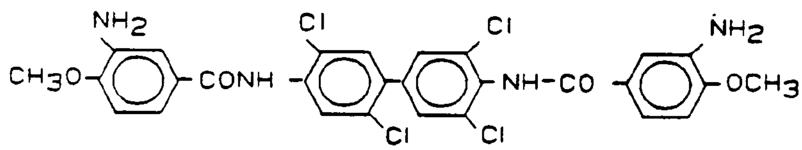

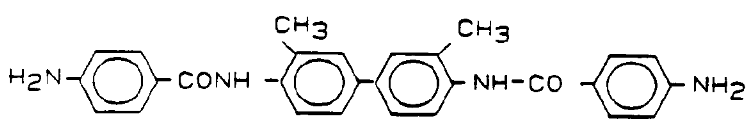

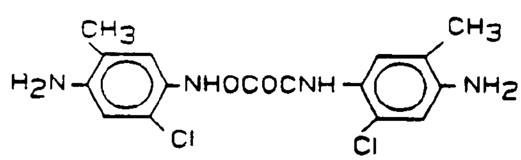

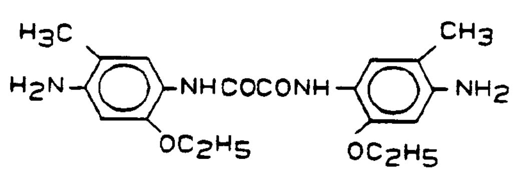

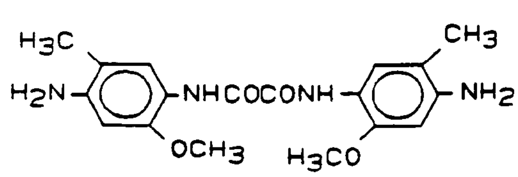

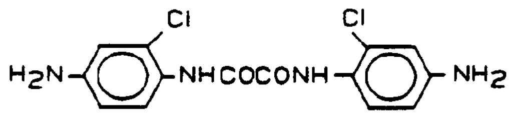

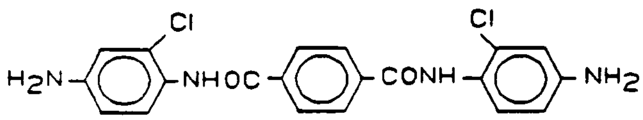

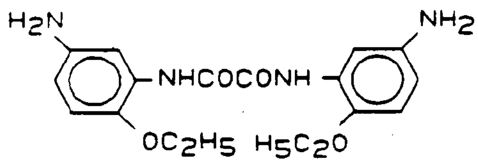

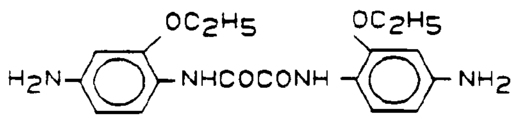

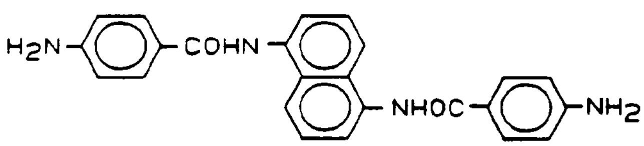

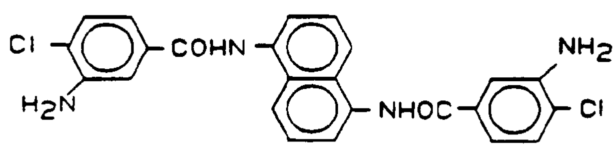

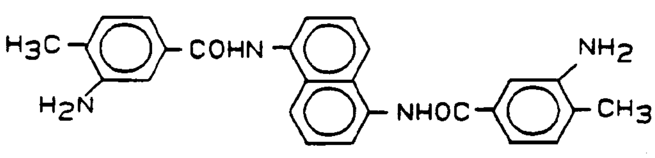

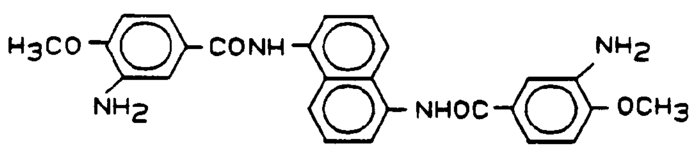

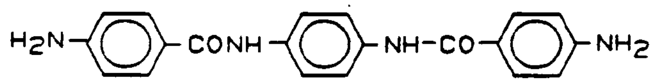

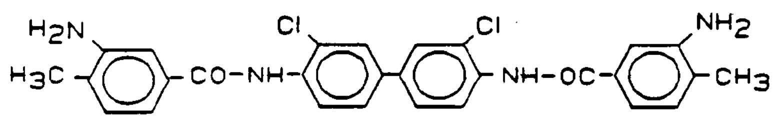

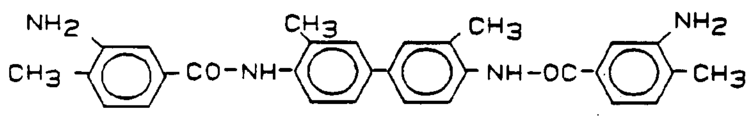

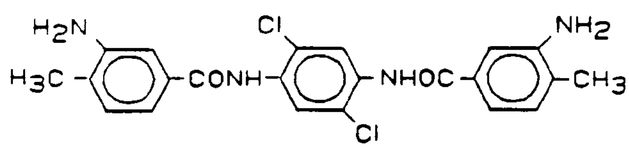

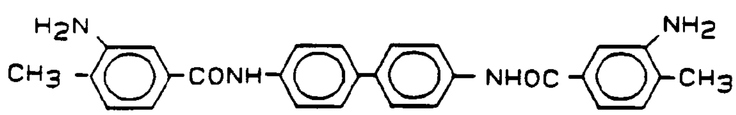

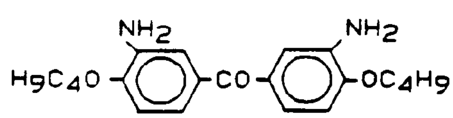

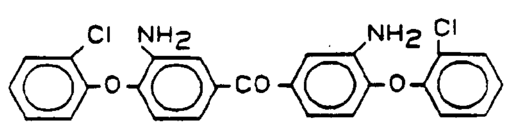

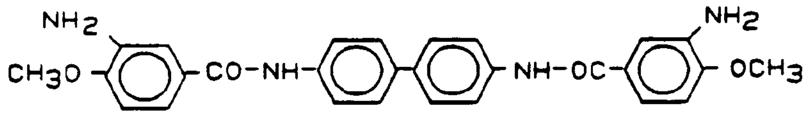

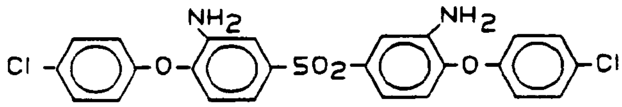

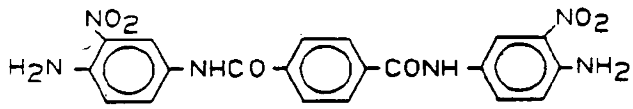

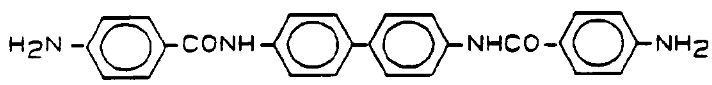

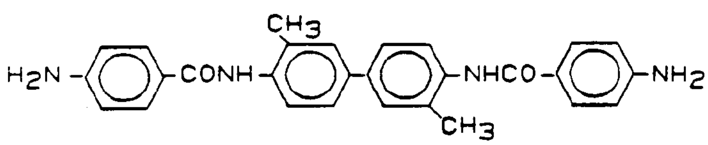

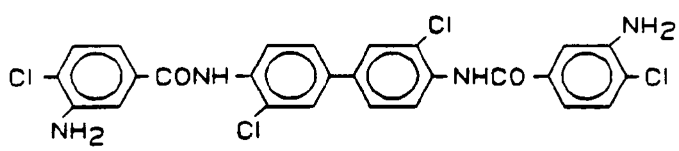

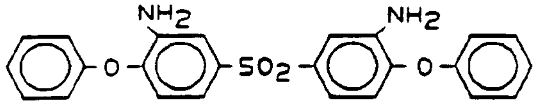

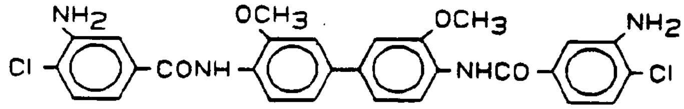

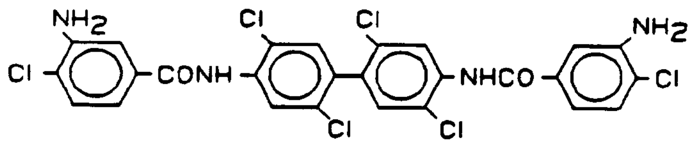

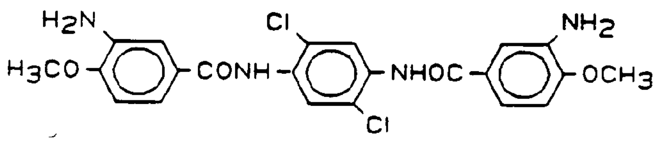

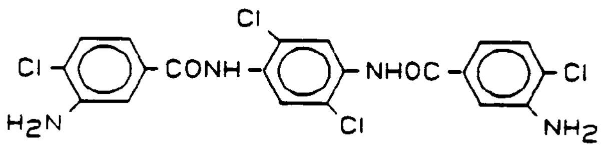

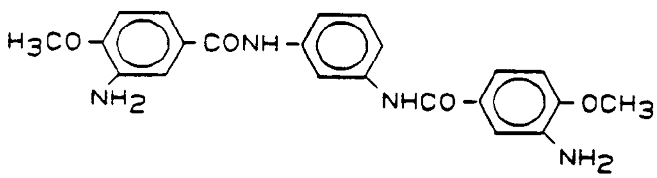

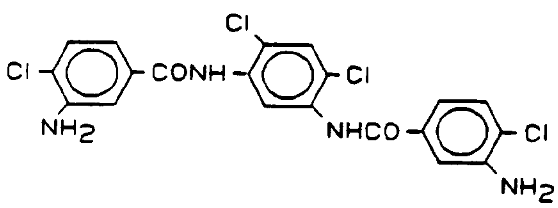

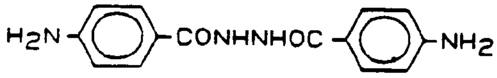

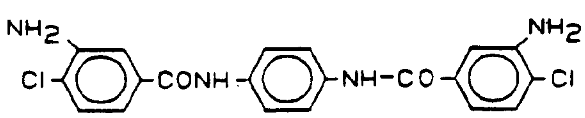

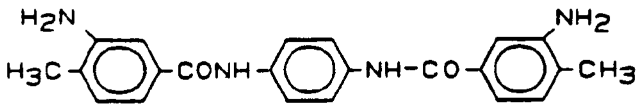

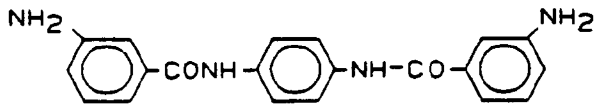

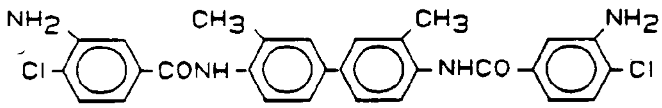

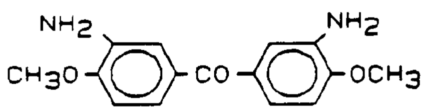

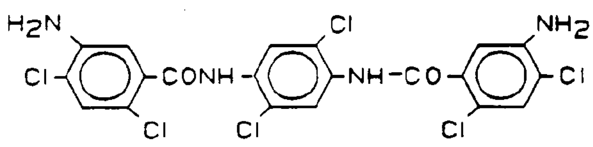

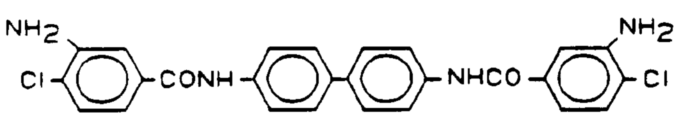

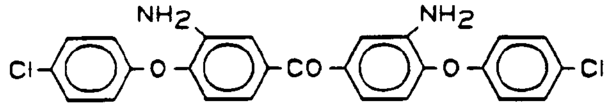

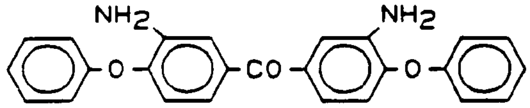

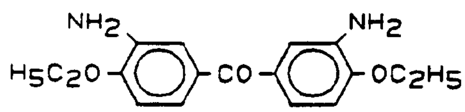

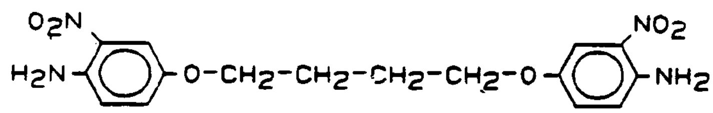

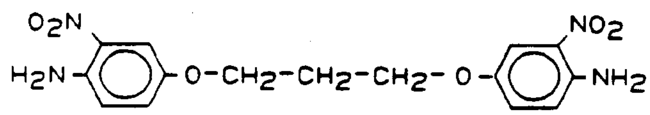

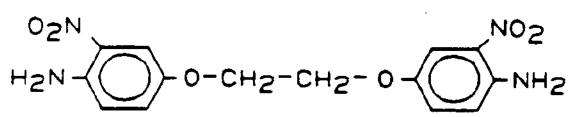

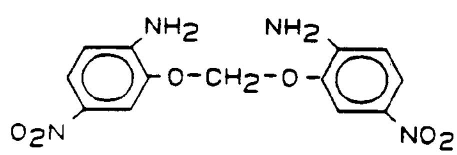

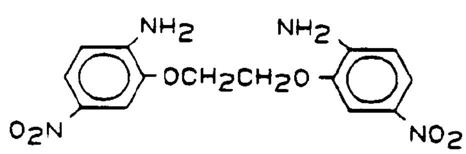

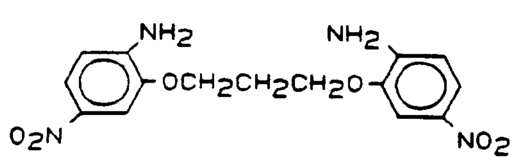

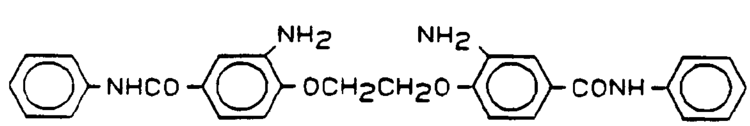

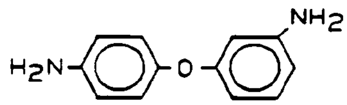

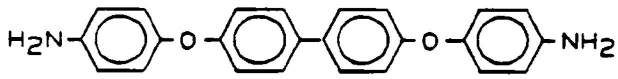

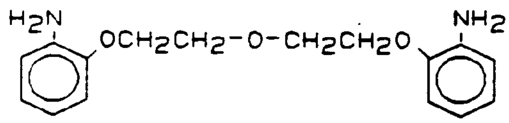

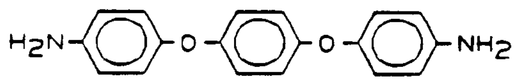

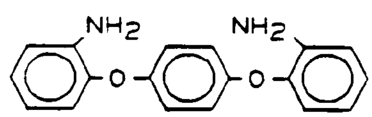

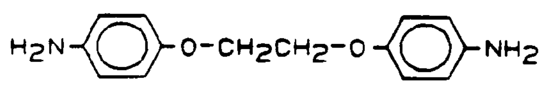

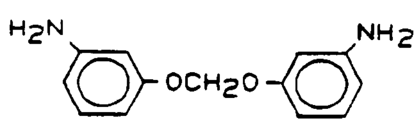

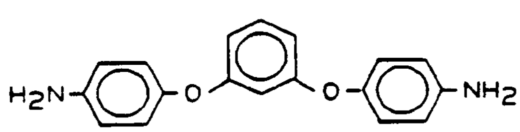

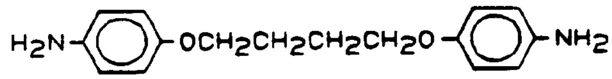

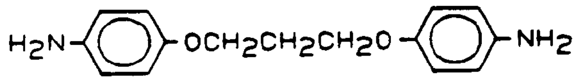

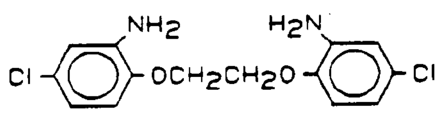

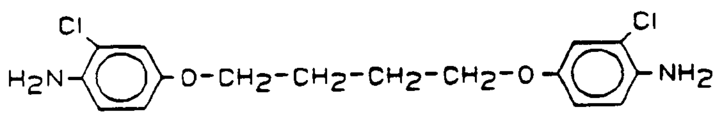

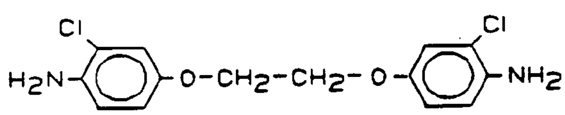

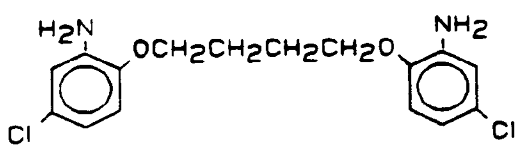

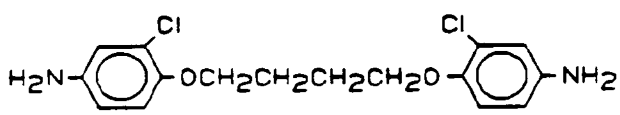

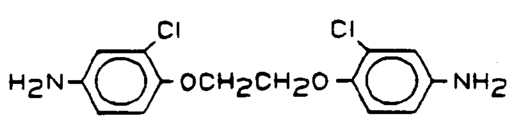

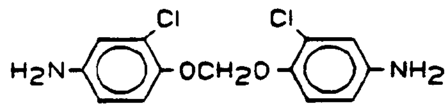

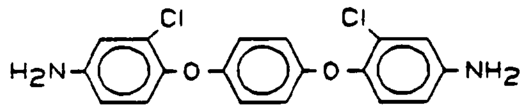

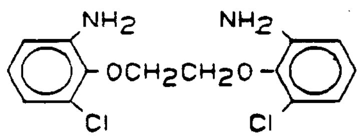

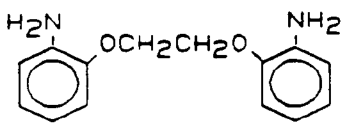

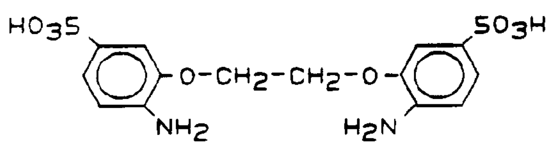

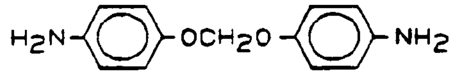

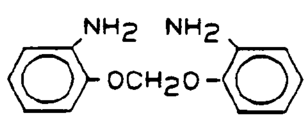

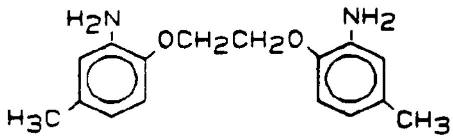

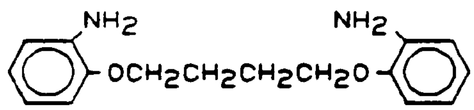

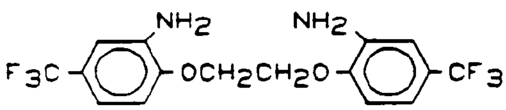

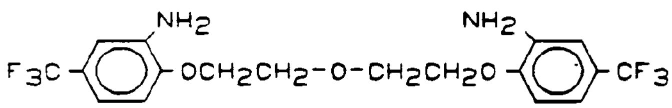

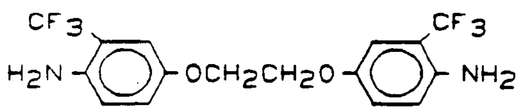

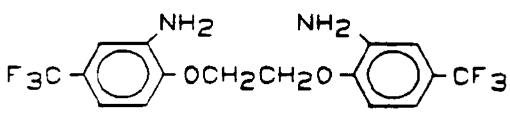

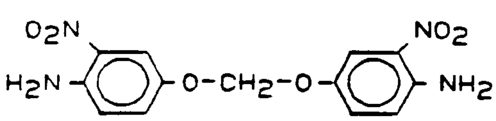

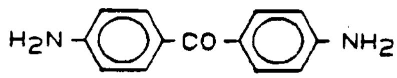

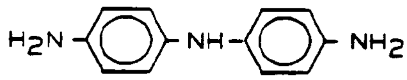

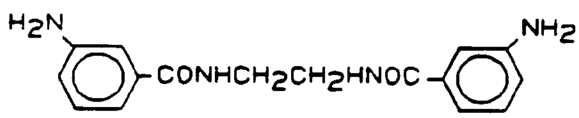

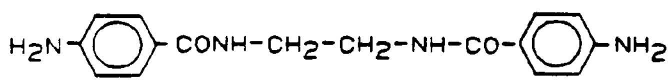

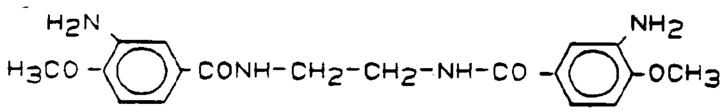

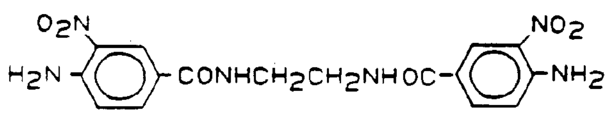

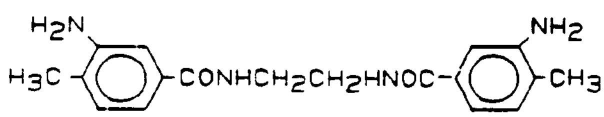

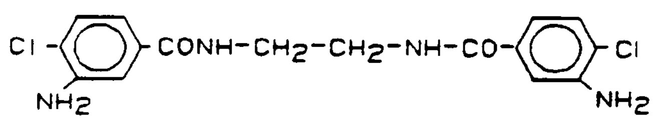

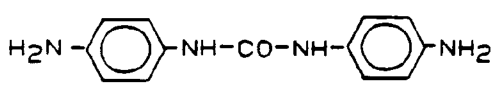

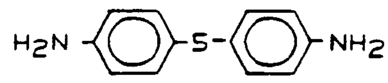

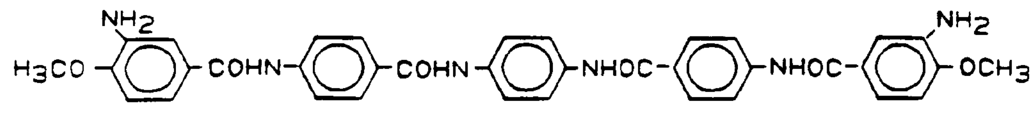

Die für die Azokupplung nach der vorliegenden Erfindung als Kupplungskomponenten zu verwendenden (Benzoxazol-2-yl)-bzw. (Benzimidazol-2-yl)-essigsäure-arylamide oder -heteroarylamide der Formel (II) lassen sich beispielsweise in Analogie zu den Vorschriften für die Synthese einer Anzahl ähnlich aufgebauter Vertreter dieser Verbindungsklasse im J. Amer. Chem. Soc. 65, 1072 (1943) und in der BE-PS 815 673 aus den Estern der oben erwähnten heterocyclisch substituierten Essigsäuren der Formel (III) durch Umsetzung mit aromatischen Aminen vom Typ $R-NH_2$ gemäß dem folgenden Schema

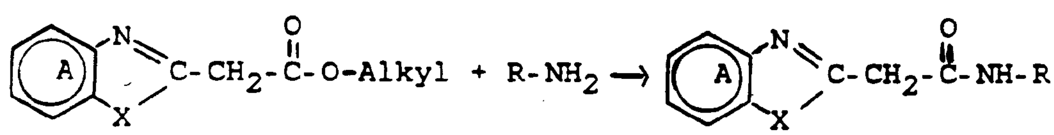

(III) (II)

herstellen, wobei die Symbole R bzw. X dieselbe Bedeutung wie $R^1$, $R^2$ bzw. $X^1$, $X^2$ entsprechend Formel (I) besitzen, der Ring A in gleicher Weise anelliert bzw. substituiert sein kann wie in Formel (I) und die Bezeichnung Alkyl in Formel (III) einen Alkylrest, insbesondere den Ethylrest charakterisiert.

Die zur Synthese der Kupplungskomponenten (II) benötigten Ester (III) sind nach aus den unten aufgeführten Literaturstellen bekannten Methoden oder davon abgeleiteten Arbeitsweisen zugänglich:

- J. Amer. Chem. Soc. 65, 1072-1075 (1943)
- BE-PS 815 673
- DE-OS 26 32 402
- Chem. Ber. 84, 719-729 (1951)
- J. Amer. Chem. Soc. 65, 1854-1858 (1943)
- Chem. Ber. 113, 2311-2313 (1980)
- JP-OS 48/34747 (1973)
- Liebigs Ann. Chem. 1973, 573-577
- FR-PS 1 580 823
- Chem. Ber. 100, 1661-1666 (1967).

Die Auswahl der dafür in Betracht zu ziehenden aromatischen Amine $R-NH_2$ richtet sich nach der beabsichtigten Natur des Aryl- bzw. Heteroarylrestes R und befindet sich im Einklang mit der Bedeutung von $R^1$ sowie $R^2$ in Formel (I). Damit stehen -bedingt durch die besonderen strukturellen Verhältnisse- für diesen Zweck prinzipiell alle diejenigen Monoamine zur Verfügung, welche in der vorgängigen Beschreibung für den Einsatz als Diazokomponente tauglich angesehen worden sind.

Die Erzeugung der erfindunsgemäßen Monoazo- bzw. Disazoverbindungen der Formel (I) findet nach an sich bekannten Verfahren durch Kuppeln der diazotierten Amine bzw. Diamine mit den obengenannten Kupplungskomponenten gewöhnlich im wäßrigen Medium statt, wobei die Anwesenheit von nichtionogenen, anionaktiven oder kationaktiven oberflächenaktiven Substanzen zweckmäßig sein kann. Gegebenenfalls können beim Herstellungsprozeß der Azoverbindungen auch andere Hilfsmittel wie natürliche oder synthetische Harze oder Harzderivate zur Verwendung gelangen, oder Lack-, Druckfarben- oder Kunstoffadditive zugesetzt werden. Desgleichen kann es bei gewissen Situationen günstig sein, die Kupplungsreaktion ganz oder teilweise in Gegenwart von geeigneten organischen Lösungsmitteln vorzunehmen.

Wenn man für den zuvor erläuterten Kupplungsvorgang der Diazokomponente jedoch eine Kombination von mehreren unterschiedlichen Kupplungskomponenten einsetzt, dann werden als Ergebnis einer solchen

Mischkupplung mehrere unterschiedliche Monoazoverbindungen gebildet, ebenso für den Fall, daß man bloß eine Kupplungskomponente mit mehreren diazotierten Aminen umsetzt. Anwendungstechnisch besonders interessante Pigmentgemische werden gewonnen, wenn man ein Bisdiazoniumsalz auf ein Gemisch von mehreren, vorzugsweise zwei verschiedenen Kupplungskomponenten einwirken läßt. Hierbei entstehen Gemische aus symmetrischen und asymmetrischen Disazoverbindungen (n = 1), im Fall von zwei Kupplungskomponenten resultieren zwei symmetrische und ein asymmetrischer Körper.

Methylenaktive Kupplungskomponenten zur Herstellung von Azopigmenten sind bereits in M. Rolf und R. Neeff, Dyes and Pigments 5, 189 (1984) beschrieben. Anstelle eines Benzoxazol- oder Benzimidazolrestes tritt dort jedoch ein elektronendefizitärer 6-gliedriger Heterocyclus, nämlich ein 4-Hydroxychinazolinylacetanilid.

Die erfindungsgemäßen Verbindungen der Formel (I) stellen wertvolle wasserunlösliche Farbmittel dar und können nach der Kupplungsreaktion in üblicher Weise isoliert werden. Häufig ist es zweckmäßig, die nach der Kupplungsreaktion erhaltenen Azofarbmittel, insbesondere im Falle von rohen Pigmenten, zur Erzielung der vollen Farbstärke und einer besonders günstigen Kornbeschaffenheit sowie zweckmäßiger Kristallstruktur einer thermischen Nachbehandlung z.B. bei Temperaturen zwischen 60 ° und 100 °C, bevorzugt von 120 ° bis 160 °C, zu unterwerfen. Beispielsweise kann man zu diesem Zweck die feuchten Preßkuchen oder die getrockneten und gemahlenen Verbindungen in Pulverform in inerten organischen Lösungsmitteln, vornehmlich von polarer Natur, wie beispielsweise Pyridin, N-Methyl-2-pyrrolidon, Dimethylformamid, Dimethylsulfoxyd, Sulfolan (Tetramethylensulfon), Alkoholen, Chlorbenzol, Dichlorbenzol, Eisessig, Chinolin, Glykol, Nitrobenzol oder hochsiedenden aromatischen Kohlenwasserstoffen, oder Gemischen davon einige Zeit unter Rückfluß oder unter erhöhtem Druck auf höhere Temperaturen erhitzen. Bei bestimmten Gelegenheiten gelingt die Überführung in eine besonders vorteilhafte Kristallstruktur auch schon durch Erhitzen mit Wasser, gegebenenfalls unter erhöhtem Druck und eventuell unter Zusatz von Dispergiermitteln oder organischen Lösungsmitteln, beispielsweise der vorstehend genannten Art.

Weiterhin lassen sich solche erfindungsgemäße Verbindungen der Formel (I), die eine oder mehrere verlackbare saure Gruppen, wie Sulfo- oder Carboxygruppen enthalten, nach bekannten Verfahren in Farblacke überführen. Zur Bildung der Farblacke dienen die üblichen Metallionen, vorzugsweise Mangan- oder Strontium-, insbesondere aber Calcium- und Bariumionen.

Gegenstand der Erfindung ist auch die Verwendung der wasserunlöslichen Monoazo- und Disazoverbindungen gemäß Formel (I) oder deren Gemische zum Färben oder Pigmentieren von hochmolekularen organischen Materialien natürlicher oder synthetischer Herkunft. Je nachdem, ob die erfindungsgemäß hergestellten Verbindungen keine oder nur kurze Alkylketten bis etwa $C_4$, oder aber mittlere oder lange Alkylketten aufweisen, sind sie beispielsweise als Pigmente, Dispersionsfarbstoffe oder Fettfarbstoffe brauchbar. Bevorzugt ist die Nutzung von Verbindungen der Formel (I) mit kurzen Alkylketten oder ohne Alkylketten als polymerunlösliches Farbmittel zum Einfärben von verformbaren Kunststoffen. Beispielsweise sind sie geeignet zum Pigmentieren von Polystyrol, Polyolefinen, insbesondere Polyethylen oder Polypropylen, Polyacrylverbindungen, Polyvinylverbindungen, insbesondere Polyvinylchlorid oder Polyvinylacetat, Polyestern, Gummi, Caseinharzen und Silikonharzen. Sie lassen sich ferner einsetzen für die Herstellung von Druckfarben, für die Zubereitung von Lacken und Dispersionsanstrichfarben, für den Druck auf Substraten wie Textilfasern oder auch auf anderen flächenförmigen Gebilden, wie beispielsweise Papier.

Die erfindungsgemäßen Pigmente oder Gemische - vorzugsweise in feinverteilter Form - haben sich auch zum Färben von Kunstseide aus Viskose oder Celluloseethern, Celluloseestern, Polyamiden, Polyurethanen oder Polyglykolterephthalaten in der Spinnmasse oder zum Einfärben von Papier bewährt.

In den folgenden Beispielen beziehen sich "Teile" auf das Gewicht, "Volumenteile" verhalten sich zu Gewichtsteilen wie Liter zu Kilogramm.

**Beispiel 1:**

a) 123,2 Teile 2-Amino-4-methylphenol und 195,6 Teile Malonsäure-ethylester-iminoethylester-hydrochlorid [hergestellt nach J. Amer. Chem. Soc. 67, 1019 (1945)] werden in 1500 Volumenteilen Chloroform unter Feuchtigkeitsausschluß 24 Stunden bei Raumtemperatur gerührt. Dann filtriert man die resultierende Reaktionsmischung und wäscht den Rückstand mit Chloroform. Die vereinigten Filtrate werden zunächst mit verd. Salzsäure und anschließend mit Wasser ausgeschüttelt, die abgetrennte organische Phase wird über Calciumchlorid getrocknet und zur Trockne eingeengt. Daraufhin wird der feste Rückstand mit einer Mischung aus Ethanol und Wasser (1:1) verrührt und abgesaugt, danach mit einem 1:1-Gemisch aus Ethanol und Wasser gewaschen und getrocknet. Man erhält 82,5 Teile (5-Methylbenzoxazol-2-yl)essigsäure-ethylester vom Schmp. 68-69 °C.

b) Aus 143,6 Teilen 2-Amino-4-chlorphenol und 195,6 Teilen Malonsäure-ethylester-iminoethylester-hydrochlorid erhält man auf die in Beispiel 1a beschriebene Weise 84,3 Teile (5-Chlorbenzoxazol-2-yl)essigsäure-ethylester vom Schmp. 90-91 °C.
c) 156,5 Teile 1,2-Diamino-4-chlor-5-methylbenzol und 195,6 Teile Malonsäure-ethylester-iminoethylesterhydrochlorid werden in 2000 Volumenteilen Chloroform unter Feuchtigkeitsauschluß 24 Stunden bei Raumtemperatur gerührt. Nachdem die Reaktionsmischung zuvor filtriert und der Rückstand mit Chloroform gewaschen worden ist, dampft man die vereinigten Filtrate zur Trockne ein. Der feste Rückstand wird aus Essigsäure-ethylester (A-Kohle) umkristallisiert. Man erhält 110,0 Teile [5(6)-Chlor-6(5)-methylbenzimidazol-2-yl]essigsäure-ethylester vom Schmp. 150-152 °C.
d) 50,0 Teile Malonsäure-ethylester-iminoethylesterhydrochlorid und 31,2 Teile 1,2-Diamino-4-methylbenzol werden entsprechend der in Beispiel Ic erläuterten Methode umgesetzt und aufgearbeitet. Man erhält 18,5 Teile [5(6)-Methylbenzimidazol-2-yl]-essigsäure-ethylester vom Schmp. 153,5-154,5 °C.
e) 50,0 Teile Malonsäure-ethylester-iminoethylesterhydrochlorid und 31,2 Teile 1,2-Diamino-4-methylbenzol werden in 400 Volumenteilen absol. Ethanol gelöst und unter Feuchtigkeitsausschluß 2 Stunden bei Raumtemperatur gerührt. Dann engt man die Reaktionsmischung zur Trockne ein, verrührt den Rückstand mit 500 Volumenteilen siedendem Essigsäure-ethylester und filtriert ab. Das Filtrat wird mit A-Kohle geklärt und auf 200 Volumenteile Restflüssigkeit eingeengt. Der nach Abkühlen ausgeschiedene Niederschlag wird abfiltriert und getrocknet. Man erhält 28,7 Teile [5-(6)-Methylbenzimidazol-2-yl]-essigsäure-ethylester vom Schmp. 153-154,5 °C.

**Beispiel 2:**

a) 102 Teile (Benzimidazol-2-yl)essigsäure-ethylester [hergestellt nach J. Amer. Chem. Soc. 65, 1075 (1943)] und 61,5 Teile 2-Aminoanisol werden miteinander vermischt und 3 Stunden auf 190 °C erhitzt, wobei das im Verlauf der Reaktion entstehende Ethanol abdestilliert wird. Daraufhin läßt man auf 110 °C abkühlen und beschickt das Umsetzungsgemisch mit 500 Volumenteilen Toluol, rührt 10 Minuten nach und saugt vom ausgefallenen Produkt noch heiß ab. Der Filterrückstand wird mit Toluol gewaschen und getrocknet.
Das so erhaltene Rohprodukt wird in 2000 Volumenteilen siedendem Methanol gelöst, mit A-Kohle versetzt und filtriert. Das Filtrat gießt man unter Rühren auf 3000 Volumenteile Eiswasser und saugt den gebildeten Niederschlag ab. Der resultierende Preßkuchen wird mit einer 3:1-Mischung aus Wasser und Methanol gewaschen und getrocknet.
Man erhält 84,3 Teile einer Verbindung mit der Formel

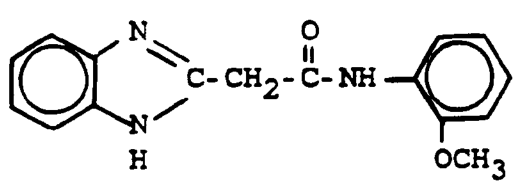

vom Schmp. 182-184 °C.
b) 204 Teile (Benzimidazol-2-yl)essigsäure-ethylester und 149 Teile 5-Aminobenzimidazol-2-on werden in 1000 Volumenteilen 1,2,4-Trichlorbenzol 3 Stunden auf 190 °C erhitzt. Hierbei wird das während der Umsetzung abgespaltene Ethanol fortlaufend abdestilliert. Nach Abkühlen auf 100 °C setzt man der Reaktionsmischung 300 Volumenteile Toluol zu und saugt die festen Bestandteile ab. Der Filterrückstand wird mit Toluol gewaschen und getrocknet.
Man erhält 287 Teile einer Verbindung der Formel

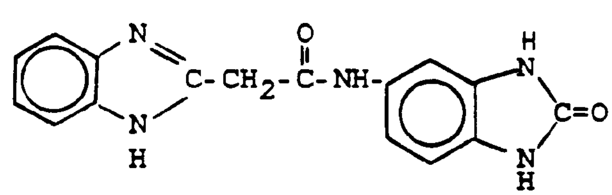

mit einem Schmp. von über 350 °C.
c) 44,7 Teile 5-Aminobenzimidazol-2-on und 65,8 Teile (5-Methylbenzoxazol-2-yl)essigsäure-ethylester [nach Beispiel Ia hergestellt] werden in 200 Volumenteilen N-Methyl-2-pyrrolidon auf 200 °C (Bad) erhitzt und 2 Stunden bei dieser Temperatur gehalten, wobei das freiwerdende Ethanol abdestilliert wird. Daraufhin läßt man die Reaktionsmischung auf Raumtemperatur abkühlen, versetzt mit 1000 Volumenteilen Ethanol und filtriert ab.

Der feste Rückstand wird mit Ethanol gewaschen und getrocknet.

Man erhält 83,3 Teile einer Verbindung der Formel

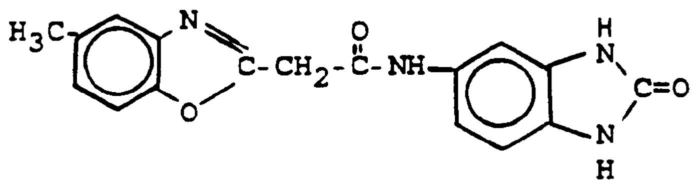

mit einem Schmp. von über 350 °C.

**Beispiele 2d bis 2o:**

In analoger Weise zu den Beispielen 2a bis 2c erhält man durch Umsetzung von Verbindungen der Formel (III), in der Alkyl den Ethylrest bedeutet, mit Aminen der Formel R-$NH_2$, worin R jeweils wie unten erläutert variiert ist, die in der folgenden Tabelle I aufgeführten Kupplungskomponenten der Formel (IIa).

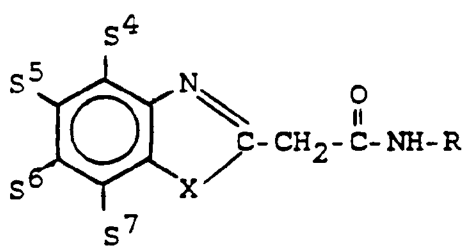

(IIa)

**Tabelle I:**

| Bsp. | X | $S^4$ | $S^5$ | $S^6$ | $S^7$ | R | Schmp. [°C] * = unter Zersetzung |
|---|---|---|---|---|---|---|---|
| 2d | NH | H | H | H | H | 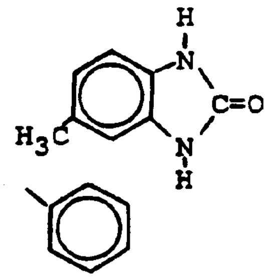 | 265 * |
| 2e | NH | H | H | H | H | | 238 * |
| 2f | NH | H | H | H | H | 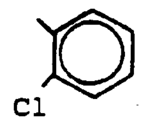 | 217 * |
| 2g | NH | H | H | H | H | 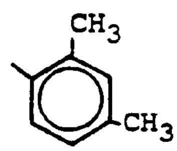 | 254-256 |
| 2h | NH | H | H | H | H | 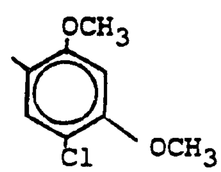 | 248-249 |
| 2i | NH | H | H | H | H | 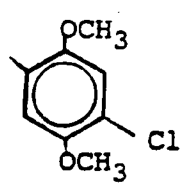 | 256-258 |
| 2j | NH | H | $CH_3$(Cl) | Cl($CH_3$) | H | 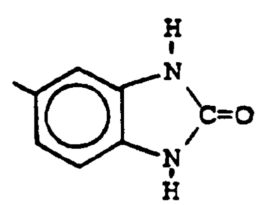 | > 350 |
| 2k | NH | H | $CH_3$(H) | H($CH_3$) | H | 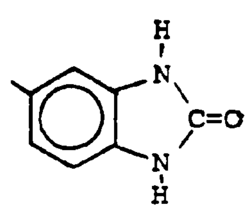 | > 350 |

**Forsetzung von Tabelle I**

| Bsp. | X | $s^4$ | $s^5$ | $s^6$ | $s^7$ | R | Schmp. [°C] * = unter Zersetzung |
|---|---|---|---|---|---|---|---|
| 2l | O | H | H | H | H | 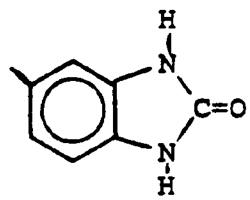 | > 350 |
| 2m | O | H | Cl | H | H | 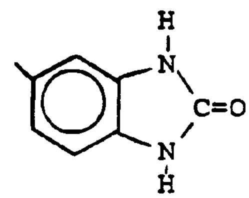 | > 350 |
| 2n | O | H | $OCH_3$ | H | H | 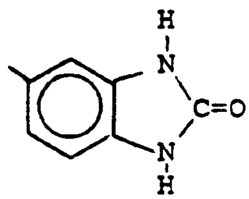 | > 350 |
| 2o | O | H | Cl | H | H | 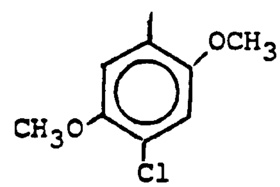 | 205 |

**Beispiel 3:**

8,63 Teile 4-Chlor-2-nitroanilin werden in 100 Volumenteilen Wasser und 15 Volumenteilen 31%iger Salzsäure über Nacht verrührt. Bei 0-5 °C (Außenkühlung) wird das vorgelegte Amin durch Zugabe von 10 Volumenteilen Sn-Natriumnitritlösung diazotiert. Daraufhin läßt man den Ansatz noch 1 Stunde nachrühren, klärt die hergestellte Diazoniumsalzlösung durch Filtration und zerstört den Nitritüberschuß mit Amidosulfonsäure.

14,1 Teile der nach Vorschrift von Beispiel 2a erzeugten Kupplungskomponente werden in 300 Volumenteilen Wasser und 30 Volumenteilen Eisessig gelöst und mit 10 Volumenteilen einer 12,5%igen wäßrigen Formulierung eines anionischen Hilfsmittels auf Basis eines veresterten Alkylphenol-novolak-oxalkylates entsprechend Beispiel 3.5.4. der EP-PS 0 065 751 sowie 17,0 Teilen Natriumacetat versetzt. Zu der so bereiteten Mischung läßt man bei 15-20 °C die Lösung des obengenannten Diazoniumsalzes langsam zutropfen oder zulaufen. Nach beendeter Kupplung wird der pH-Wert des Reaktionsgemisches mittels verd. Natronlauge auf 4 eingestellt, man erhitzt durch Einleiten von Dampf auf 85 °C, hält diese Temperatur 30 Minuten aufrecht, saugt das ausgefällte Pigment ab und wäscht es mit Wasser.

Der feuchte Preßkuchen wird anschließend mit 500 Volumenteilen Aceton 10 Minuten bei Raumtemperatur verrührt. Nach Absaugen und Trocknen erhält man 18,2 Teile eines rotstichig gelben Monoazopigments mit der Formel

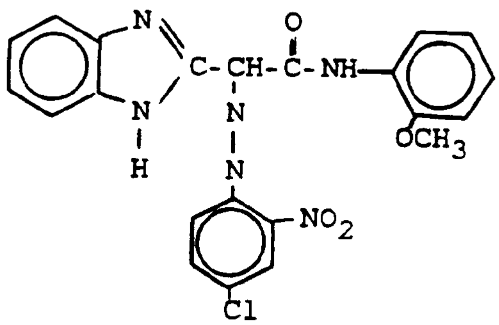

vom Schmp. 256-258 °C.

**Beispiel 4:**

10,46 Teile Aminoterephthalsäure-dimethylester werden in 300 Volumenteilen Wasser und 15 Volumenteilen 31%iger Salzsäure 2 Stunden verrührt. Bei 0-5 °C (Außenkühlung) wird das vorgelegte Amin mit 10 Volumenteilen 5n-Natriumnitritlösung diazotiert und 1 Stunde nachgerührt. Die so erhaltene Diazoniumsalzlösung klärt man durch Filtration und man zerstört den Nitritüberschuß mit Hilfe von Amidosulfonsäure.

In einem Kuppelgefäß werden 300 Volumenteile Wasser, 20 Volumenteile 4n-Natriumacetatlösung und 5 Volumenteile einer 12,5%igen Formulierung des in Beispiel 3 beschriebenen anionischen Hilfsmittels aus der EP-PS 0 065 751 vorgelegt. Hierzu gibt man eine 80 °C warme Lösung aus 15,40 Teilen der nach den Angaben von Beispiel 2b hergestellten Kupplungskomponente in 200 Volumenteilen Eisessig und 100 ml Wasser. Zu dieser Mischung läßt man bei 10-15 °C die Lösung der zuvor erzeugten Diazokomponente langsam zulaufen oder zutropfen. Nach beendeter Kupplung wird das Umsetzungsgemisch durch Einleiten von Dampf auf 95 °C erhitzt, sowie 30 Minuten bei dieser Temperatur gehalten. Das gebildete Rohpigment wird abgesaugt und mit Wasser gewaschen.

Der feuchte Preßkuchen wird in 800 Volumenteilen Eisessig 15 Minuten am Rückfluß erhitzt, nach dem Erkalten abgesaugt, mit Eisessig und Wasser gewaschen, getrocknet und gemahlen.
Auf diese Weise erhält man 19,6 Teile des Monoazopigments mit der Formel

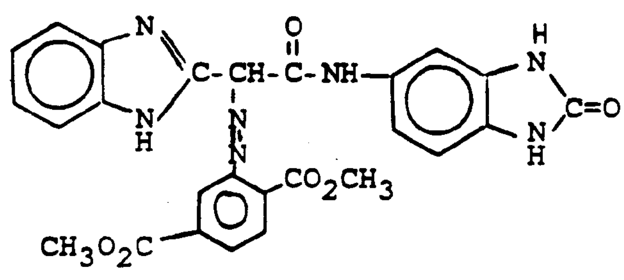

und einem Zers.-P. von 336 °C.
Das resultierende farbstarke Pigment ergibt beim Einarbeiten in Polyvinylchlorid oder Polyethylen eine grünstichig gelbe Färbung von guter Lichtechtheit, einwandfreier Ausblutechtheit sowie ausgezeichneter Hitzebeständigkeit.

**Beispiel 5:**

7,61 Teile 2-Methyl-4-nitroanilin werden in 30 Volumenteilen Eisessig und 20 Volumenteilen 31%iger Salzsäure verrührt und bei 5-10 °C (Außenkühlung) mit 10 Volumenteilen Sn-Natriumnitritlösung diazotiert und 30 Minuten nachgerührt. Man klärt die Diazoniumsalzlösung durch Filtration und zerstört den Nitritüberschuß mit Amidosulfonsäure.

In einem Kuppelgefäß werden 500 Volumenteile Wasser, 15 Teile Natriumacetat und 1 Teil eines nichtionogenen Hilfsmittels vom Typ des Fettalkoholpolyglykolethers aus 1 Mol Isotridecylalkohol und 6 Molen Ethylenoxid vorgelegt. In diesen Ansatz bringt man eine 80 °C warme Lösung aus 15,40 Teilen der nach Beispiel 2b hergestellten Kupplungskomponente in 200 Volumenteilen Eisessig und 100 Volumenteilen Wasser ein. Zu der vorgelegten Mischung läßt man bei 50-60 °C die Lösung der oben erwähnten Diazokomponente

langsam zulaufen oder zutropfen. Nach beendeter Kupplung wird durch Einleiten von Dampf das Reaktionsgemisch auf 90 °C erhitzt, das entstandene Kupplungsprodukt wird dann abgesaugt, mit Wasser gewaschen, getrocknet und gemahlen.

Das auf diese Weise isolierte trockene Pigment wird anschließend in 180 Volumenteilen eines 1:1-Gemisches aus N-Methyl-2-pyrrolidon und Eisessig 1 Stunde am Rückfluß erhitzt, abgesaugt, zuerst mit Eisessig und hernach mit Ethanol gewaschen, getrocknet und gemahlen.
Man erhält 20,57 Teile eines Pigments mit der Formel

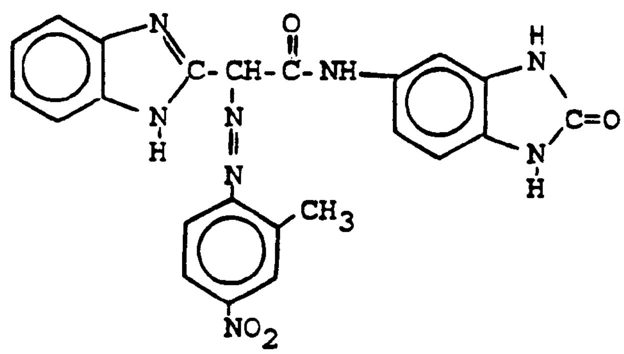

mit einem Schmp. von über 350 °C.
Dieses sehr farbstarke Monoazopigment ergibt beim Einarbeiten in Polyvinylchlorid oder in einen Alkyd-/Melaminharz-Lack sehr reine, rotstichig gelbe Färbungen mit guter Ausblutechtheit bzw. einwandfreier Überlackierechtheit.

**Beispiel 6:**

10,46 Teile Aminoterephthalsäure-dimethylester werden in 150 Volumenteilen Eisessig und 20 Volumenteilen 31%iger Salzsäure bei 5-10 °C (Außenkühlung) mit 10 Volumenteilen 5n-Natriumnitritlösung diazotiert. Nach weiteren 30 Minuten Rühren klärt man die Diazoniumsalzlösung durch Filtration und zerstört den Nitritüberschuß mit Hilfe von Amidosulfonsäure.

Der vorgelegten Lösung obiger Diazokomponente wird eine Suspension von 16,50 Teilen der nach Vorschrift von Beispiel 2c erzeugten Kupplungskomponente in 150 Volumenteilen Pyridin und 30 Volumenteilen 4n-Natriumacetatlösung protionsweise bei Raumtemperatur zugefügt. Nach beendeter Kupplung setzt man dem Reaktionsgemisch noch 250 Volumenteile Wasser hinzu, erhitzt auf 70 °C und hält diese Temperatur für 30 Minuten aufrecht. Danach saugt man das Kupplungsprodukt ab und wäscht es mit 90%iger Essigsäure.

Der feuchte Preßkuchen wird in 250 Volumenteilen Eisessig verrührt und 10 Minuten am Rückfluß erhitzt. Das so behandelte Pigment wird abgesaugt, mit Eisessig und Aceton gewaschen, getrocknet und gemahlen.

Man erhält 22,62 Teile eines Pigments mit der Formel

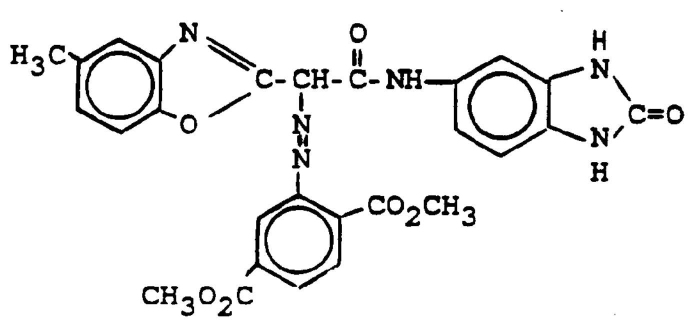

vom Schmp. 348-350 °C. Es ergibt beim Einarbeiten in einen Alkyd-/Melaminharz-Lack rotstichig gelbe Färbungen von einwandfreier Überlackierechtheit.

**Beispiele 7 bis 58:**

In analoger Weise zu den Beispielen 3 bis 6 erhält man erfindungsgemäß unter Verwendung von unten

näher bezeichneten Diazokomponenten der Formel $D\text{-}NH_2$ und Kupplungskomponenten der Formel (II) jeweils im entsprechenden Molverhältnis weitere in der folgenden Tabelle II durch Farbton und Schmp. charakterisierte Monoazopigmente der Formel (I) mit n = 0.

**Tabelle II:**

| Bsp. | Diazokomponente $D\text{-}NH_2$ | Kupplungskomponente aus Beispiel | Schmp. [°C] * = unter Zersetzung | Farbton |
|---|---|---|---|---|
| 7 | 3-Amino-4-carboxymethyl-benzoesäure-(2,5-di-chloranilid) | 2a | 251 | grünstichig gelb |
| 8 | 5-Amino-benzimidazol-2-on | 2a | 325* | rotstichig gelb |
| 9 | 3-Amino-4-methoxybenzanilid | 2a | 283* | grünstichig gelb |
| 10 | Aminoterephthalsäure-dimethylester | 2a | 183 | grünstichig gelb |
| 11 | 3-Amino-4-chlorbenzamid | 2a | 315* | grünstichig gelb |
| 12 | 5-Amino-6-methylbenzimidazol-2-on | 2a | 340* | orange |
| 13 | 5-Aminoisophthalsäure-dimethylester | 2a | 229 | rotstichig gelb |
| 14 | 4-Methoxy-2-nitroanilin | 2a | 239 | gelbstichig rot |
| 15 | 4-Methyl-2-nitroanilin | 2a | 235 | rotstichig gelb |
| 16 | 2-Aminobenzoesäuremethylester | 2a | 215 | rotstichig gelb |
| 17 | 2-Methyl-4-nitroanilin | 2a | 290 | rotstichig gelb |
| 18 | 3-Amino-4-chlorbenzamid | 2b | > 350 | grünstichig gelb |
| 19 | 3-Amino-4-methoxybenzanilid | 2b | 345* | gelb |
| 20 | 3-Amino-4-carboxymethyl-benzoesäure-(2,5-dichloranilid) | 2b | 333* | gelb |
| 21 | 4-(3-Amino-4-carboxymethyl-benzoylamino)-benzamid | 2b | > 350 | grünstichig gelb |

**Forsetzung von Tabelle II:**

| Bsp. | Diazokomponente $D-NH_2$ | Kupplungskomponente aus Beispiel | Schmp. [°C] * = unter Zersetzung | Farbton |
|---|---|---|---|---|
| 22 | 5-Aminoisophthalsäure-dimethylester | 2b | 343* | grünstichig gelb |
| 23 | 4-Chlor-2-nitroanilin | 2b | > 350 | orange |
| 24 | 2-Methyl-5-nitroanilin | 2b | > 350 | grünstichig gelb |
| 25 | 2-Methoxy-4-nitroanilin | 2b | > 350 | orange |
| 26 | 4-Methoxy-2-nitroanilin | 2b | > 350 | orange |
| 27 | 4-Methyl-2-nitroanilin | 2b | 335* | rotstichig gelb |
| 28 | 2-Aminobenzoesäure-methylester | 2b | 341* | gelb |
| 29 | 2-Aminobenzotrifluorid | 2b | 350* | grünstichig gelb |
| 30 | 3-Amino-4-methoxybenzanilid | 2d | 338* | grünstichig gelb |
| 31 | 3-Amino-4-carboxymethyl-benzoesäure-(2,5-dichloranilid) | 2g | 268-270 | grünstichig gelb |
| 32 | 3-Amino-4-chlorbenzamid | 2g | 327-329 | grünstichig gelb |
| 33 | 2-Methoxy-5-nitroanilin | 2g | 288 | gelb |
| 34 | 3-Amino-4-carboxymethyl-benzoesäure-(2,5-dichloranilid) | 2h | 309 | grünstichig gelb |
| 35 | 3-Amino-4-chlorbenzamid | 2h | 310 | grünstichig gelb |
| 36 | 2-Methoxy-5-nitroanilin | 2h | 313* | gelb |

**Forsetzung von Tabelle II:**

| Bsp. | Diazokomponente D-$NH_2$ | Kupplungskomponente aus Beispiel | Schmp. [°C] * = unter Zersetzung | Farbton |
|---|---|---|---|---|
| 37 | 3-Amino-4-carboxy-methyl-benzoesäure-(2,5-dichloranilid) | 2i | 299-301 | gelb |
| 38 | 3-Amino-4-chlor-benzamid | 2i | 325 | grünstichig gelb |
| 39 | Aminoterephthalsäure-dimethylester | 2i | 219 | gelb |
| 40 | 2-Methoxy-5-nitro-anilin | 2i | 306 | gelb |
| 41 | Aminoterephthalsäure-dimethylester | 2j | > 350 | rotstichig gelb |
| 42 | Aminoterephthalsäure-dimethylester | 2k | 328* | rotstichig gelb |
| 43 | Aminoterephthalsäure-dimethylester | 2l | 315* | rotstichig gelb |
| 44 | 4-(3-Amino-4-methoxy-benzoylamino)-benzamid | 2l | 330 | grünstichig gelb |
| 45 | 3-Amino-4-methoxy-benzanilid | 2l | 322* | grünstichig gelb |
| 46 | 4-Chlor-2-nitroanilin | 2l | 326* | gelb |
| 47 | 3-Amino-4-carboxy-methyl-benzoesäure-(2,5-dichloranilid) | 2m | > 350 | grünstichig gelb |
| 48 | Aminoterephthalsäure-dimethylester | 2m | > 350 | rotstichig gelb |
| 49 | 3-Amino-4-methoxy-benzanilid | 2m | 330* | rotstichig gelb |
| 50 | 2-Methoxy-4-nitro-anilin | 2m | > 350 | orange |
| 51 | 2-Aminobenzoesäure-methylester | 2m | 323 | gelb |
| 52 | 2-Chlor-4-nitroanilin | 2m | > 350 | orange |

Forsetzung von Tabelle II:

| Bsp. | Diazokomponente D-$NH_2$ | Kupplungskomponente aus Beispiel | Schmp. [°C] * = unter Zersetzung | Farbton |
|---|---|---|---|---|
| 53 | 2,5-Dichloranilin | 2m | 348* | rotstichig gelb |
| 54 | 4-Chlor-2-nitroanilin | 2m | 340-342 | orange |
| 55 | 3-Amino-4-methoxybenzanilid | 2c | 317-319 | rotstichig gelb |
| 56 | 4-Chlor-2-nitroanilin | 2c | 328* | orange |
| 57 | 4-Amino-2,5-dimethoxybenzolsulfanilid | 2o | 310 | gelb |
| 58 | Aminoterephthalsäuredimethylester | 2n | 325* | grünstichig gelb |
| 59 | 1-Aminoanthrachinon | 2b | > 340 | orange |
| 60 | 2-Methoxy-5-nitroanilin | 2m | > 340 | rotstichig gelb |

**Beispiel 61:**

11,1 Teile 2-Amino-5-chlor-4-methylbenzolsulfonsäure werden in 100 Volumenteilen Eisessig und 15 Volumenteilen 31%iger Salzsäure vorgelegt und bei 5-10 °C (Außenkühlung) mit 10 Volumenteilen 5n-Nitriumnitritlösung diazotiert. Der Ansatz wird noch 1 Stunde nachgerührt und anschließend der Nitritüberschuß mit Amidosulfonsäure zerstört.

In die durch Filtration geklärte Diazoniumsalzlösung werden 20 Volumenteile 4n-Natriumacetatlösung und 10 Volumenteile einer 10%igen wäßrigen Lösung eines nichtionogenen Hilfsmittels auf Basis des Reaktionsproduktes aus 1 Mol Oleylalkohol und 25 Molen Ethylenoxid eingetragen. Zu dieser Mischung tropft man dann innerhalb von 30 Minuten bei 15-20 °C eine die Lösung von 17,2 Teilen der aus Beispiel 2m in Tabelle I aufgeführten Kupplungskomponente in 250 Volumenteilen N-Methyl-2-pyrrolidon und 20 Volumenteilen Eisessig. Nach beendeter Kupplung wird das Umsetzungsgemisch mit 250 Volumenteilen Eisessig versetzt und der Niederschlag abfiltriert. Der Filterrückstand wird in 500 Volumenteilen 10%iger Salzsäure 1 Stunde verrührt, abgesaugt, mit Wasser gewaschen und getrocknet.

24,0 Teile des isolierten rohen Produktes werden in 100 Volumenteilen N-Methyl-2-pyrrolidon bei 90 °C gelöst und diese Lösung wird mit 100 Volumenteilen Wasser verdünnt. Zur Farblack-Bildung gibt man eine Lösung aus 12,0 Teilen Bariumhydroxid-oktohydrat in 150 Volumenteilen Wasser hinzu und man erwärmt die Mi

schung 1 Stunde unter Rückfluß. Dann werden 400 Volumenteile N-Methyl-2-pyrrolidon zugefügt und man stellt den pH-Wert des Ansatzes mittels Eisessig auf 6 bis 6,5 ein. Anschließend wird 1 Stunde am Rückfluß erhitzt, die als Ca-Salz ausgefällte Monoazoverbindung abgesaugt, zuerst mit einem 1:1-Gemisch aus Wasser und N-Methyl-2-pyrrolidon, anschließend mit Wasser allein gewaschen, getrocknet und gemahlen.

Man erhält ein verlacktes Gelbpigment mit der Formel

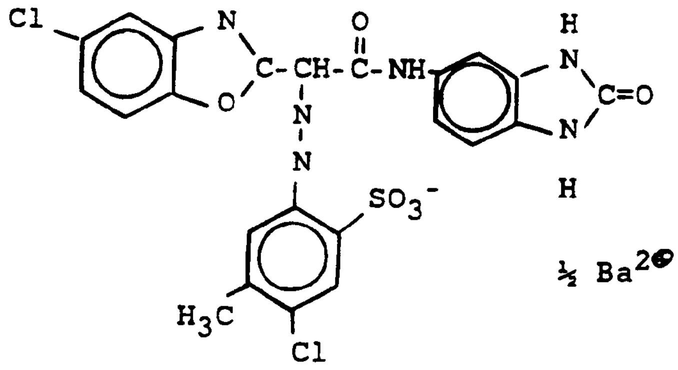

das sich ab 344 °C zersetzt.

**Beispiele 62 bis 66:**

Verfährt man zur Durchführung der Kupplungsreaktion analog den Vorschriften von Beispielen 3 bis 6, verwendet hierbei jedoch anstelle der dortigen monovalenten Diazokomponenten in den nachfolgenden Fällen aromatische Diamine der Formel $H_2N\text{-}D\text{-}NH_2$, so erhält man beim Einsatz von jeweils mindestens 2 Äquivalenten der dafür in Tabelle III aufgelisteten Kupplungskomponenten der Formel (II) im Verlauf der erfindungsgemäßen Umsetzung Disazopigmente der Formel (I) mit dem strukturellen Aufbauprinzip n = 1, $X^1 = X^2$, $R^1 = R^2$, Ring A = Ring B.

**Tabelle III:**

| Bsp. | Bisdiazokomponente $H_2N\text{-}D\text{-}NH_2$ | Kupplungskomponente aus Beispiel | Schmp. [°C] * = unter Zersetzung | Farbton |
|---|---|---|---|---|
| 62 | 3,3'-Dichlorbenzidin | 2a | > 350 | rotstichig gelb |
| 63 | 1,2-Bis(2-aminophenoxy)ethan | 2a | > 350 | rotstichig gelb |

Forsetzung von Tabelle III:

| Bsp. | Bisdiazokomponente $H_2N-D-NH_2$ | Kupplungskomponente aus Beispiel | Schmp. [°C] * = unter Zersetzung | Farbton |
|---|---|---|---|---|
| 64 | 1,2-Bis(2-aminophenoxy)ethan | 2m | > 350 | rotstichig gelb |
| 65 | 1,2-Bis-(4-amino-3-nitrophenoxy)ethan | 2m | 293* | orange |
| 66 | 1,2-Bis(2-amino-5-nitrophenoxy)ethan | 2b | > 340 | orange |

**Beispiel 67:**

13,70 Teile 2-Methyl-4-nitroanilin und 1,52 Teile 2-Methyl-5-nitroanilin werden in 600 Volumenteilen Eisessig und 40 Volumenteilen 31%iger Salzsäure über Nacht verrührt. Durch Zugabe von Eis wird die Kombination aus den beiden Aminen auf 0 °C gekühlt und mit 20 Volumenteilen 5n-Natriumnitritlösung diazotiert. Man läßt den Ansatz noch 1 Stunde nachrühren, klärt die entstandene Diazoniumsalzlösung durch Filtration und zerstört den Nitritüberschuß mit Hilfe von Amidosulfonsäure.

In einem Kuppelgefäß werden 1000 Volumenteile Wasser, 60 Teile Natriumacetat und 4 Teile des nichtionogenen Hilfsmittels aus Beispiel 5 vorgelegt. Hierzu gibt man eine 80°C warme Lösung aus 31,0 Teilen der nach Vorschrift von Beispiel 2b hergestellten Kupplungskomponente in 400 Volumenteilen 50 %iger Essigsäure und läßt die Diazoniumsalzlösung innerhalb von 30 Minuten bei 60 °C zutropfen. Nach beendeter Kupplung wird das Reaktionsgemisch durch Einleiten von Dampf auf 90 °C erwärmt, das Kupplungsprodukt wird abfiltriert, mit Wasser gewaschen und getrocknet.

Das rohe Pigment wird in 1000 Volumenteilen eines 1:1-Gemisches aus N-Methyl-2-pyrrolidon und Eisessig 1 Stunde auf 100 °C erhitzt, abgesaugt, zuerst mit Eisessig und anschließend mit Aceton gewaschen, getrocknet und gemahlen.

Es resultiert ein rotstichig gelbes Pigmentpulver mit einem Schmp. von über 350 °C, das ein Gemisch zweier unterschiedlicher Monoazoverbindungen darstellt.

**Beispiel 68:**

Es wird verfahren wie in Beispiel 5, jedoch mit der Abänderung, daß anstelle der dort verwendeten einzelnen Kupplungskomponente hier eine Kombination aus 13,82 Teilen der nach Beispiel 2b erzeugten und 1,78 Teilen der als Beispiel 2j in Tabelle I erläuterten Verbindungen für die Azokupplung zum Einsatz kommt.

Man erhält ein rotstichig gelbes Pigmentgemisch mit einem Schmp. von über 350 °C, bestehend aus zwei unterschiedlichen Monoazoverbindungen.

**Beispiel 69:**

12,2 Teile 1,2-Bis(2-aminophenoxy)ethan werden auf die in Beispiel 67 beschriebene Art diazotiert und die hergestellte Bisdiazoniumsalzlösung wird wie dort angegeben geklärt.

In einem Kupplungsgefäß werden 1000 Volumenteile Wasser, 60 Teile Natriumacetat und 4 Teile des nichtionogenen Hilfsmittels aus Beispiel 5 vorgelegt. Hierzu gibt man eine 100°C heiße Lösung einer Kombination aus 27,64 Teilen der nach den Angaben von Beispiel 2b hergestellten und 3,56 Teilen der als Beispiel 2j in Tabelle I aufgelisteten Kupplungskomponenten in 400 Volumenteilen 50 %iger Essigsäure. Nun läßt man zu diesem Ansatz die Bisdiazoniumsalzlösung innerhalb 45 Minuten bei 65-70 °C zutropfen. Nach beendeter Kupplung wird das Reaktionsgemisch auf 90°C geheizt, das ausgefallene Umsetzungsprodukt wird abgesaugt, mit Wasser gewaschen und getrocknet.

Als Ergebnis der vorstehenden Mischkupplung erhält man ein rotstichig gelbes Pigment, welches aus zwei

symmetrischen sowie einer asymmetrischen Disazoverbindung zusammengesetzt ist und das einen Schmp. von über 350 °C aufweist.

## Patentansprüche

1. Verbindungen der idealisierten allgemeinen Formel (I)

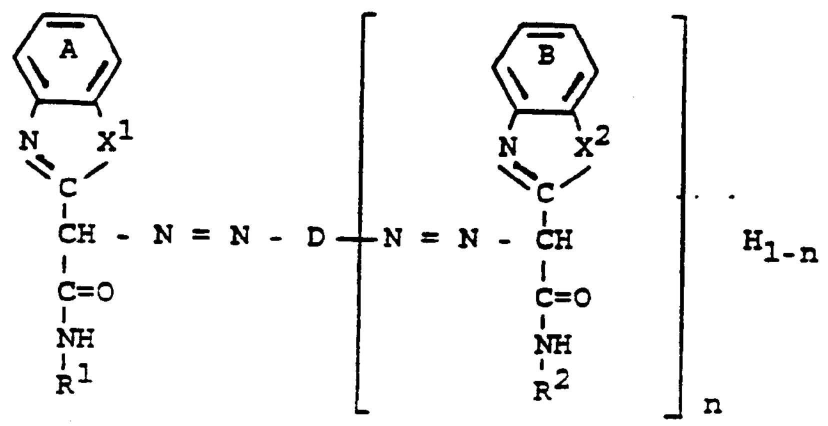

(I)

und deren Gemische, worin

D den Rest einer Diazo- oder Bisdiazokomponente auf Basis eines carbocyclischen oder heterocyclischen, aromatischen Systems bedeutet,

$R^1$ und $R^2$ unabhängig voneinander jeweils einen unsubstituierten oder substituierten, carbocyclischen oder heterocyclischen, aromatischen Rest bezeichnen,

$X^1$ und $X^2$ unabhängig voneinander jeweils für ein ringbildendes -O-Atom oder eine Gruppierung der Formeln >NH oder >$NR^3$ stehen, in der

$R^3$ am Imidstickstoff einen aliphatischen oder aromatischen Rest darstellt, sowie

n den Wert 0 oder 1 hat,

und wobei die Ringe A und B unabhängig voneinander jeweils noch substituiert sein und/oder gegebenenfalls substituierte, anellierte Ringe tragen können.

2. Verbindungen nach Anspruch 1 und deren Gemische, dadurch gekennzeichnet, daß in der dort angegebenen Formel (I)

für den Fall von n = 0 die Symbole D und $R^1$ sowie

für den Fall von n = 1 die Symbole $R^1$ und $R^2$

unabhängig voneinander jeweils einen monovalenten aromatischen Rest auf Basis einer Verbindung aus der Benzol-, Naphthalin-, Biphenylen-, Fluoren- oder Anthrachinon-Reihe, oder auf Basis einer aus einem einzelnen oder mehreren ringförmigen Strukturelement(en) bestehenden heterocyclischen Verbindung, und

für den Fall von n = 1 das Symbol D

einen bivalenten aromatischen Rest auf Basis einer Verbindung aus der Benzol-, Naphthalin-, Biphenylen-, Fluoren- oder Anthrachinon-Reihe, oder auf Basis einer aus einem einzelnen oder mehreren ringförmigen Strukturelement(en) bestehenden heterocyclischen Verbindung

bedeuten und solche Reste D, $R^1$ und $R^2$ unabhängig voneinander jeweils noch Substituenten, meistenteils von nichtionogenem Charakter, tragen können,

$X^1$ und $X^2$ jeweils die dafür aus Anspruch 1 ersichtliche Bedeutung zukommt, in denen dann

$R^3$ am Imidstickstoff eine unsubstituierte oder substituierte Alkyl-, Aryl-, Aralkyl- oder Acylgruppe darstellt,

und wobei in diesen beiden, wegen ihrer strukturellen Unterschiede für n = 0 oder n = 1 abweichenden Fällen der Ring A oder, unabhängig voneinander, die Ringe A und B jeweils noch Substituenten, meistenfalls von nichtionogenem Charakter, und/oder gegebenenfalls gleichermaßen substituierte, anellierte Ringe tragen können.

3. Verbindungen nach Anspruch 1 oder 2 und deren Gemische, dadurch gekennzeichnet, daß in der dort

angegebenen Formel (I)

für den Fall von n = 0 die Symbole D und $R^1$ sowie

für den Fall von n = 1 die Symbole $R^1$ und $R^2$

unabhängig voneinander jeweils einen unsubstituierten oder substituierten Aryl- oder Heteroarylrest aus der folgenden Gruppe umfassen:

Phenyl, Phenyl mit 1 bis 3 Substituenten, Naphthyl, oder Naphthyl mit 1 bis 4 Substituenten,

einen monovalenten Rest auf Basis von Biphenylen, Fluoren oder Anthrachinon, der jeweils bis zu 4 Substituenten aufweisen kann, und

einen monovalenten Rest auf Basis eines aus bis zu 5 kondensierten aromatischen Ringen zusammengesetzten heterocyclischen Systems, in das mindestens ein fünf- oder sechsgliedriges ringförmiges Strukturelement mit jeweils 1 bis 3 zugehörigen, gleichen oder verschiedenen Heteroatomen einbezogen ist und welches insgesamt noch bis zu 4 Substituenten aufweisen kann,

wobei solche Substituenten an den eben erwähnten Aryl- oder Heteroarylresten unabhängig voneinander die nachstehende Bedeutung von $Z^1$ oder $Z^2$ besitzen und in dieser Hinsicht dann

$Z^1$ für einen Rest aus der Gruppe $C_1$-$C_{24}$-Alkyl, $C_1$-$C_{24}$-Hydroxyalkyl, $C_5$-$C_{10}$-Cycloalkyl, $C_1$-$C_{24}$-Alkenyl, $C_1$-$C_{24}$-Alkoxy, $C_2$-$C_{25}$-Alkoxycarbonyl (Carbalkoxy), $C_2$-$C_{25}$-Alkoxycarbonylamino, $C_2$-$C_{25}$-Alkanoyl (Acyl), $C_2$-$C_{25}$-Alkanoyloxy (Acyloxy), $C_2$-$C_{25}$-Alkanoylamino (Acylamino), Carboxy, $C_2$-$C_{13}$-Carboxyalkyl, N-($C_1$-$C_{12}$-Alkyl)-amino, N,N-Di-($C_1$-$C_{12}$-Alkyl)-amino, Carbomoyl, N-($C_1$-$C_{12}$-Alkyl)-aminocarbonyl (Alkylcarbamoyl), N,N-Di-($C_1$-$C_{12}$-Alkyl)-aminocarbonyl (Dialkylcarbamoyl), (Aminocarbonyl)-amino (Ureido), $C_1$-$C_{12}$-Alkylthio, $C_1$-$C_{24}$-Alkylsulfonyl, Sulfamoyl, N-($C_1$-$C_{12}$-Alkyl)-aminosulfonyl (Alkylsulfamoyl), N,N-Di-($C_1$-$C_{12}$-Alkyl)-aminosulfonyl (Dialkylsulfamoyl), (Aminosulfonyl)-amino (Sulfamido), Sulfo, Halogen, Nitro, Cyano, Trifluormethyl, Hydroxy und Mercapto steht, sowie

$Z^2$ für einen Rest der Formel Ar-W- steht, in der W eine direkte Bindung ist oder einer brückenbildenden Gruppierung der Formeln

-O-, -CO-, -CO-O-, -O-CO-, -CO-NH-, -NH-CO-, -S-, -SO-, $-SO_2-$, $-SO_2-NH-$, $-NH-SO_2-$, $-(CH_2)_p-$ (p = 1-4), $-CH(CH_3)-$, $-C(CH_3)_2-$, -NR'- (worin R' Wasserstoff oder $C_1$-$C_6$-Alkyl darstellt), $-CH_2-NH-$ oder -N=N-

oder einer Kombination aus mindestens 2 derartigen bivalenten Gruppierungen entspricht, und das daran gebundene

Ar einen monovalenten Rest auf Basis eines aus bis zu 2 kondensierten aromatischen Ringen zusammengesetzten Systems von carbocyclischer Natur oder eines diesem analogen Systems bezeichnet, in das ein fünf- oder sechsgliedriges ringförmiges Strukturelement mit 1 bis 3 zugehörigen, gleichen oder verschiedenen Heteroatomen einbezogen ist und welches insgesamt noch 1 bis 3 gleiche oder verschiedene Substituenten des vorstehend für $Z^1$ definierten Typs aufweisen kann; und

für den Fall von n = 1 das Symbol D

einen unsubstituierten oder substituierten Arylen- oder Heteroarylenrest aus der folgenden Gruppe umfaßt:

Phenylen, Phenylen mit 1 bis 3 Substituenten, Naphthylen, oder Naphthylen mit 1 bis 4 Substituenten,

einen bivalenten Rest auf Basis von Biphenylen, Fluoren oder Anthrachinon, der jeweils bis zu 4 Substituenten aufweisen kann, und

einen bivalenten Rest auf Basis eines aus bis zu 5 kondensierten aromatischen Ringen zusammengesetzten heterocyclischen Systems, in das mindestens ein fünf- oder sechsgliedriges ringförmiges Strukturelement mit jeweils 1 bis 3 zugehörigen, gleichen oder verschiedenen Heteroatomen einbezogen ist und welches insgesamt noch bis zu 4 Substituenten aufweisen kann,

wobei solche Substituenten an den eben erwähnten Arylen- oder Heteroarylenresten unabhängig voneinander die obige Bedeutung von $Z^1$ oder $Z^2$ besitzen,

aber weiterhin auch

einen bivalenten Rest der Formel -Ar-V-Ar-, in der V die zuvor für W als Bestandteil von $Z^2$ identische Bedeutung zukommt oder einer brückenbildenden Gruppierung der Formeln

$-O-CH_2-O-$,

$-O-C_2H_4-O-$,

$-O-C_3H_6-O-$,

$-O-C_4H_8-O-$,

$-O-CH_2-C(CH_3)_2-CH_2-O-$,

$-O-C_2H_4-O-C_2H_4-O-$,

$-O-CO-O-$,

$-NH-CO-NH-$,

$-NH-CO-CO-NH-$,

$-NH-CO-C_2H_4-CO-NH-$,

$-CH=CH-$,

$-CO-O-CH_2-O-CO-$,

$-CO-O-C_2H_4-O-CO-$,

$-CO-O-C_3H_6-O-CO-$,

$-CO-O-C_4H_8-O-CO-$,

$-CO-O-C_2H_4-O-C_2H_4-O-CO-$,

$-CO-NH-NH-CO-$,

$-CO-NH-C_2H_4-NH-CO-$,

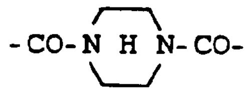 ,

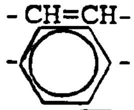 , 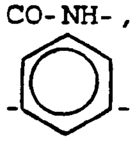 , 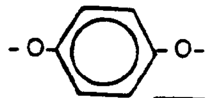 , 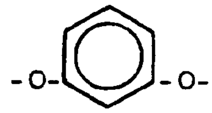 ,

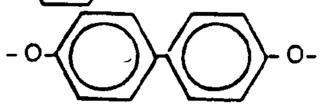 , 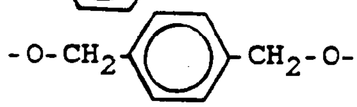 ,

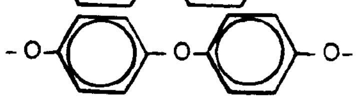 , 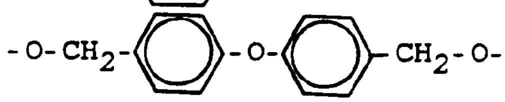 ,

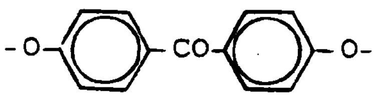 ,

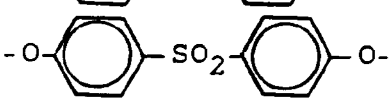 ,

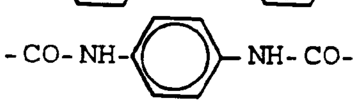 , 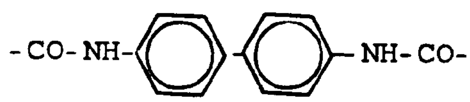 ,

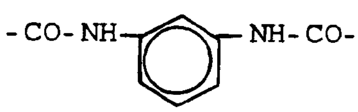 , 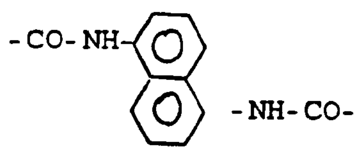 ,

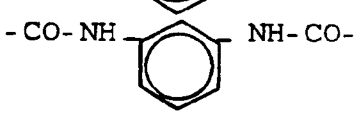 ,

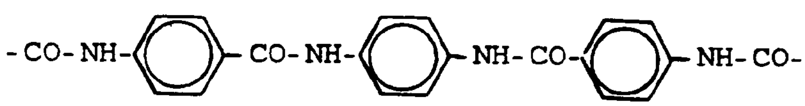 ,

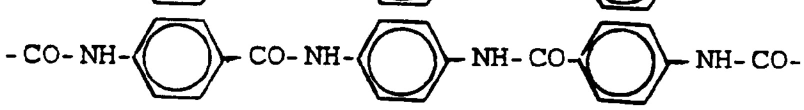 ,

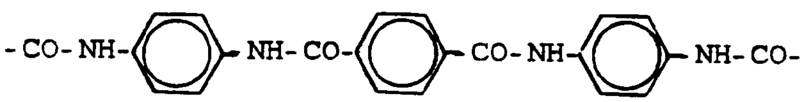 ,

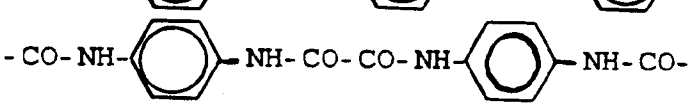 ,

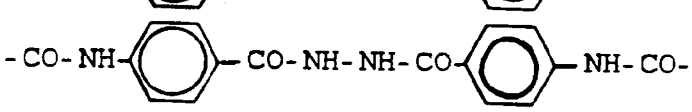 ,

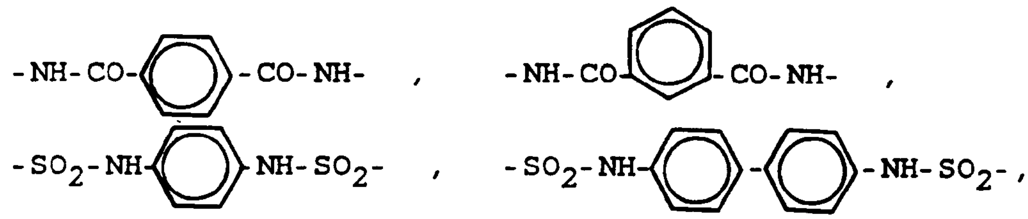

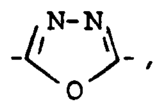, 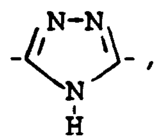, 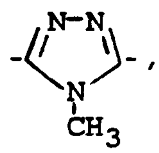, 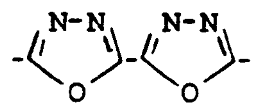 oder 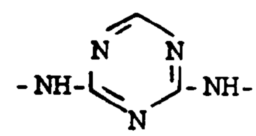

entspricht, wobei in einem derartigen Brückenglied V gegebenenfalls vorhandene Arylenbestandteile insgesamt noch 1 bis 4 gleiche oder verschiedene Substituenten des vorstehend für $Z^1$ definierten Typs aufweisen können, und die beiden daran gebundenen
Ar's unabhängig voneinander jeweils einen bivalenten Rest auf Basis eines aromatischen Systems analog der oben sonst für monovalentes Ar identischen Bedeutung bezeichnen;

$X^1$ und $X^2$ jeweils die dafür aus Anspruch 1 ersichtliche Bedeutung zukommt, in denen dann

$R^3$ am Imidstickstoff einen Rest aus der Gruppe $C_1$-$C_{18}$-Alkyl oder $C_2$-$C_5$-Alkanoyl, Aryl, Aralkyl oder Aroyl mit jeweils 1 oder 2 hierin vorhandenen fünf- oder sechsgliedrigen Ringstruktur(en) darstellt, wobei letztere noch substituiert sein können;

und wobei in diesen beiden, wegen ihrer strukturellen Unterschiede für n = 0 oder n = 1 abweichenden Fällen der Ring A oder, unabhängig voneinander, die Ringe A und B jeweils unsubstituiert sind oder aber 1 bis 4 gleiche oder verschiedene Substituenten aufweisen und solche Substituenten dann die obige Bedeutung von $Z^1$ oder $Z^2$ besitzen,
und/oder der Ring A oder, unabhängig voneinander, die Ringe A und B weiterhin anellierte carbocyclische Ringe tragen können, die gegebenenfalls noch dem Typ $Z^1$ zugehörige Substituenten enthalten.

**4.** Verbindungen nach mindestens einem der Ansprüche 1 bis 3 und deren Gemische, dadurch gekennzeichnet, daß in der dort angegebenen Formel (I)

für den Fall von n = 0 die Symbole D und $R^1$ sowie

für den Fall von n = 1 die Symbole $R^1$ und $R^2$

unabhängig voneinander jeweils einen Aryl- oder Heteroarylrest aus der folgenden Gruppe umfassen:
Phenyl, Phenyl mit 1 bis 3 Substituenten, Naphthyl, oder Naphthyl mit 1 bis 3 Substituenten,
einen monovalenten Rest auf Basis von Biphenylen, Fluoren oder Anthrachinon, der jeweils 1 bis zu 3 Substituenten aufweisen kann, und
einen monovalenten Rest auf Basis eines monocyclischen oder eines polycyclischen, aus 2 bzw. 3 benzokondensierten aromatischen Ringen zusammengesetzten heterocyclischen Systems, in das 1 oder 2 stickstoffhaltige, fünf- oder sechsgliedrige ringförmige Strukturelemente mit insgesamt bis zu 4 zugehörigen, gleichen oder verschiedenen Heteroatomen einbezogen sind und welches sowohl an den heterocyclischen als auch an den benzokondensierten Bestandteilen jeweils noch 1 bis 3, insgesamt aber höchstens 4 Substituenten aufweisen kann,
wobei solche Substituenten an den eben erwähnten Aryl- oder Heteroarylresten unabhängig voneinander die nachstehende Bedeutung von $Z^1$ oder $Z^2$ besitzen und in dieser Hinsicht dann

$Z^1$ für einen Rest aus der Gruppe $C_1$-$C_4$-Alkyl, $C_1$-$C_4$-Alkoxy, $C_2$-$C_5$-Alkoxycarbonyl, $C_2$-$C_5$-Alkanoyloxy, $C_2$-$C_5$-Alkanoylamino, Carboxy, Carbamoyl, N-($C_1$-$C_4$-Alkyl)-aminocarbonyl, N,N-Di-($C_1$-$C_4$-Alkyl)-aminocarbonyl, $C_1$-$C_4$-Alkylsulfonyl, Sulfamoyl, N-($C_1$-$C_4$-Alkyl)-aminosulfonyl, N,N-Di-($C_1$-$C_4$-Alkyl)-aminosulfonyl, Sulfo, Chlor, Brom, Nitro, Cyano, Trifluormethyl und Hydroxy steht, sowie

$Z^2$ für einen Rest der Formel Ar-W- steht, in der W eine direkte Bindung ist oder einer brückenbildenden Gruppierung der Formeln
-O-, -CO-O-, -O-CO-, -CO-NH-, -NH-CO-, -S-, $-SO_2-$, $-SO_2$-NH-, -NH-$SO_2$-, $-CH_2-$, $-CH_2-CH_2-$, -NH-, -NH-$CH_2$- oder -N=N- oder einer Kombination aus mindestens 2 derartigen bivalenten Gruppierungen entspricht, und das daran gebundene
Ar Phenyl, Naphthyl, oder Phenyl samt. ankondensiertem fünf- oder sechsgliedrigen, stickstoffhaltigen aromatischen Ring mit 1 oder 2 zugehörigen, gleichen bzw. verschiedenen Heteroatomen, oder einen solchen monovalenten Aryl- oder Heteroarylrest Ar mit zusätzlich 1 bis 3 gleichen oder verschiedenen Substituenten des vorstehend für $Z^1$ definierten Typs bezeichnet; und

für den Fall von n = 1 das Symbol D

einen Arylen- der Heteroarylenrest aus der folgenden Gruppe umfaßt:

Phenylen, Phenylen mit 1 bis 3 Substituenten, Naphthylen, oder Naphthylen mit 1 bis 3 Substituenten,

einen bivalenten Rest auf Basis von Biphenylen, Fluoren oder Anthrachinon, der jeweils 1 bis 3 Substituenten aufweisen kann, und

einen bivalenten Rest auf Basis eines monocyclischen oder eines polycyclischen, aus 2 bzw. 3 benzokondensierten aromatischen Ringen zusammengesetzten heterocyclischen Systems, in das 1 oder 2 stickstoffhaltige, fünf- oder sechsgliedrige ringförmige Strukturelemente mit insgesamt bis zu 4 zugehörigen, gleichen oder verschiedenen Heteroatomen einbezogen sind und welches sowohl an den heterocyclischen als auch an den benzokondensierten Bestandteilen jeweils noch 1 bis 3, insgesamt aber höchstens 4 Substituenten aufweisen kann,

wobei solche Substituenten an den eben erwähnten Arylen- oder Heteroarylenresten unabhängig voneinander die obige Bedeutung von $Z^1$ oder $Z^2$ besitzen,

aber weiterhin auch

einen bivalenten Rest der Formel -Ar-V-Ar-, in der V wie zuvor für W als Bestandteil von $Z^2$ identische Bedeutung zukommt oder einer brückenbildenden Gruppierung der Formeln

$-O-C_2H_4-O-$, $-CO-O-C_2H_4-O-CO-$,

$-O-C_3H_6-O-$, $-CO-O-C_3H_6-O-CO-$,

$-SO_2-C_2H_4-SO_2-$, $-CO-NH-C_2H_4-NH-CO-$,

$-SO_2-NH-C_2H_4-NH-SO_2-$,

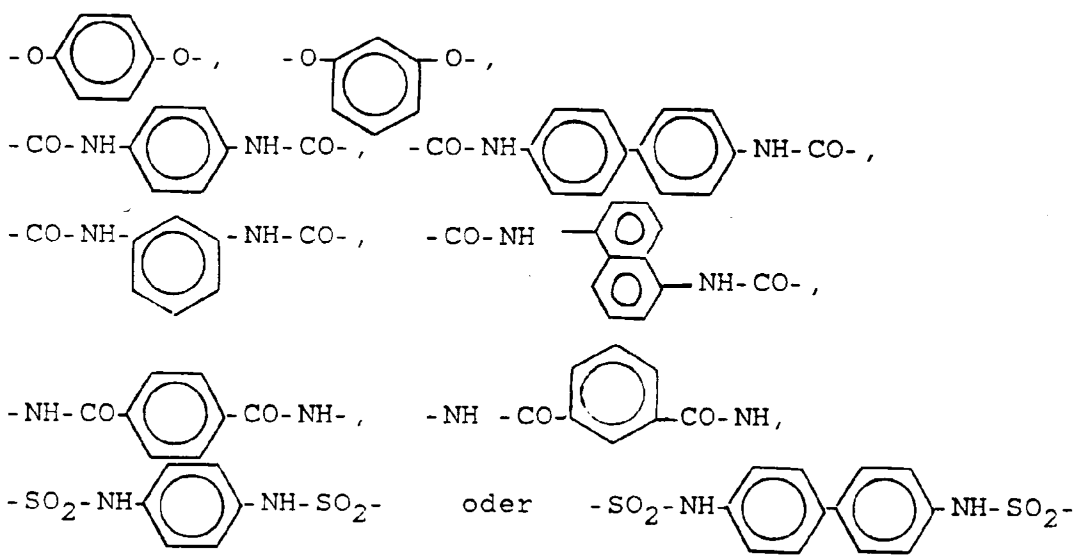

entspricht, wobei in einem derartigen Brückenglied V gegebenenfalls vorhandene Arylenbestandteile insgesamt noch 1 bis 4 gleiche oder verschiedene Substituenten des vorstehend für $Z^1$ definierten Typs aufweisen können, und die beiden daran gebundenen

Ar's unabhängig voneinander jeweils einen bivalenten aromatischen Rest auf Basis eines der oben sonst für monovalentes Ar identischen speziellen Ringsysteme bezeichnen;

$X^1$ und $X^2$ jeweils die dafür aus Anspruch 1 ersichtliche Bedeutung zukommt, in denen dann

$R^3$ am Imidstickstoff einen Rest aus der Gruppe $C_1$-$C_4$-Alkyl, Acetyl, Phenyl, Naphthyl, Benzyl oder Benzoyl darstellt, wobei die hierin vorhandenen Ringstrukturen jeweils noch 1 bis 2 nichtionogene Substituenten aufweisen können; und wobei in diesen beiden, wegen ihrer strukturellen Unterschiede für n = 0 oder n = 1 abweichenden Fällen der Ring A oder, unabhängig voneinander, die Ringe A und B jeweils unsubstituiert sind oder aber bis zu

2 gleiche oder verschiedene Substituenten vom Typ $Z^1$ aufweisen können.

5. Verbindungen nach mindestens einem der Ansprüche 1 bis 4 und deren Gemische, dadurch gekennzeichnet, daß in der dort angegebenen Formel (I)
für den Fall von n = 0 die Symbole D und $R^1$ sowie
für den Fall von n = 1 die Symbole $R^1$ und $R^2$
unabhängig voneinander jeweils einen Aryl- oder Heteroarylrest aus der folgenden Gruppe umfassen:
Phenyl, Naphthyl oder Biphenylyl,
einen monovalenten Rest auf Basis von Biphenylen, Fluoren oder Anthrachinon, und
einen monovalenten Rest von heterocyclischer Struktur auf Basis von Benzimidazol, Benzimidazol-2-on, Benzimidazol-2-thion, Benzoxazol, Benzoxazol-2-on, Benzothiazol, Benzothiazol-2-on, Indazol, Benzotriazol, Indol, Isoindol, Phthalimid, Phthalimid-2-on, Naphthalimid, Naphthalimid-2-on, Thiazol, Isothiazol, 1,2,4-Thiadiazol, 1,3,4-Thiadiazol, Thiophen, Thionaphthen, Chinolin, Chinolin-2-on, Chinolin-2,4-dion, Isochinolin, Cinnolin, Chinazolin, Chinazolin-4-on, Chinazolin-2,4-dion, Phthalazin, Phthalazin-1,4-dion, Chinoxalin, Chinoxalin-2,3-dion, Carbazol, Phenazin, Benzimidazo[1,2-a]pyrimid-2-on, Benzo[e][1,3]oxazin-2,4-dion, Benzo[e][1,4]oxazin-3-on, Benzo[cd]indol-2-on, Benzo[de]isochinolin-1,3-dion und Dibenzo[a,c]phenazin,
die jeweils noch 1 bis 3 gleiche oder verschiedene Substituenten, in erster Linie von nichtionogenem Charakter entsprechend der für $Z^1$ oder $Z^2$ aus Anspruch 4 ersichtlichen Bedeutung aufweisen können; und
für den Fall von n = 1 das Symbol D
einen Arylen- oder Heteroarylenrest aus der folgenden Gruppe umfaßt:
Phenylen, Naphthylen oder Biphenyldiyl,
einen bivalenten Rest auf Basis von Biphenylen, Fluoren oder Anthrachinon, und
einen bivalenten Rest von heterocyclischer Struktur auf Basis von Benzimidazol, Benzimidazol-2-on, Benzoxazol, Benzothiazol, Benzotriazol, Phthalimid, Chinolin, Isochinolin, Chinazolin, Chinazolin-4-on, Chinoxalin, Chinoxalin-2,3-dion, Thionaphthen, Carbazol, 2,2'-Bipyridin, Benzo[e][1,3]oxazin-2,4-dion, Dibenzo[b,d]thiophen-5,5-dioxid, Thioxanthen-10,10-dioxid, Pyrrolo[3,4-f]isoindol,1,3,5,7-tetraon, 5H-Phenanthridin-6-on und 4,9-Dihydro-pyrido[2,3,4,5-1mn] phenanthridin-5,10-dion,
die jeweils noch 1 bis 3 gleiche oder verschiedene Substituenten, in erster Linie von nichtionogenem Charakter entsprechend der für $Z^1$ oder $Z^2$ aus Anspruch 4 ersichtlichen Bedeutung aufweisen können,
oder eine Kombination aus 2 derartigen, aneinander einfach gebundenen heterocyclischen Resten oder eines davon zusammen mit Phenylen;
und wobei $X^1$, $X^2$, $R^3$, A und B jeweils die aus Anspruch 4 ersichtliche Bedeutung zukommt.

6. Verbindungen nach mindestens einem der Ansprüche 1 bis 5 und deren Gemische, dadurch gekennzeichnet, daß in der dort angegebenen Formel (I)
n den Wert 0 hat und
$X^1$ ein Brückenglied vom Typ -O- oder >NH darstellt,
wobei den Symbolen D und $R^1$ einschließlich der an D bzw. $R^1$ sowie am Ring A gegebenenfalls vorhandenen Substituenten $Z^1$ oder $Z^2$ die dafür aus Anspruch 4 oder 5 ersichtliche Bedeutung zukommt.

7. Verfahren zur Herstellung von nach mindestens einem der Ansprüche 1 bis 6 definierten Verbindungen der idealisierten allgemeinen Formel (I) und von deren Gemischen, dadurch gekennzeichnet, daß man ein oder mehrere unterschiedliche Amine der Formel $D-NH_2$ bzw. Diamine der Formel $H_2N-D-NH_2$, worin dem Symbol D jeweils die entsprechend Formel (I) dafür aus den vorstehenden Ansprüchen ersichtliche Bedeutung zukommt, diazotiert und unter Kupplung mit 1 Äquivalent einer Verbindung der allgemeinen Formel (II)

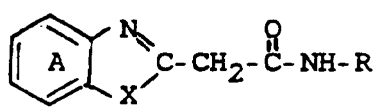

(II)

oder eines Gemisches mehrerer unterschiedlicher Verbindungen der Formel (II) pro Äquivalent insgesamt reagierender Diazoniumgruppierungen umsetzt, wobei die Symbole X und R in Formel (II) mit der entsprechend Formel (I) jeweils aus den vorstehenden Ansprüchen ersichtlichen Bedeutung für die Symbole $X^1$ bzw. $X^2$ sowie $R^1$ bzw. $R^2$ identisch sind und der Ring A in gleicher Weise anelliert bzw. substituiert sein kann, wie dort für die Ringe A und B angegeben ist.

8. Verfahren nach Anspruch 7, dadurch gekennzeichnet, daß man die Kupplung in Gegenwart von wenigstens einer nichtionogenen, anionaktiven oder kationaktiven oberflächenaktiven Substanz, oder unter Zusatz eines natürlichen oder synthetischen Harzes oder Harzderivates oder eines Lack-, Druckfarben- oder Kunststoffadditives vornimmt.

9. Verfahren nach Anspruch 7 oder 8, dadurch gekennzeichnet, daß man die erhaltenen Kupplungsprodukte einer thermischen Nachbehandlung in Wasser oder in einem inerten organischen Lösungsmittel oder Gemisch davon, gegebenenfalls unter erhöhtem Druck und/oder in Gegenwart von Dispergiermitteln unterzieht.

10. Verfahren nach mindestens einem der Ansprüche 7 bis 9, dadurch gekennzeichnet, daß man solche Kupplungsprodukte, die eine oder mehrere verlackbare saure Gruppen aufweisen, mit Hilfe von Metallionen in Farblacke überführt.

11. Verwendung von nach mindestens einem der Ansprüche 1 bis 6 definierten Verbindungen der idealisierten Formel (I) oder von deren Gemischen zum Färben oder Pigmentieren von hochmolekularen organischen Materialien natürlicher oder synthetischer Herkunft.

12. Verwendung nach Anspruch 11 als Farbmittel in feinverteilter Form aus wäßrigen oder wasserhaltigen Systemen zum Färben oder Bedrucken von textilen Substraten oder flächenförmigen Gebilden aus Papier.

13. Verwendung nach Anspruch 11 als Farbmittel zum Pigmentieren von verformbaren Kunststoffen in Form plastischer Massen, Schmelzen oder Spinnlösungen.

14. Verwendung nach Anspruch 11 als Farbmittel für die Zubereitung von Lacken, Dispersionsanstrichfarben oder Druckfarben.

## Claims

1. Compounds of the idealized formula (I)

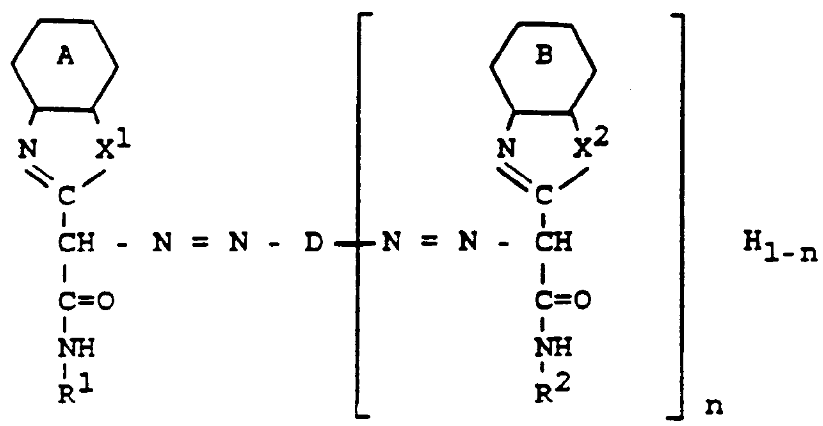

and mixtures thereof, in which

| | |
|---|---|
| D | is the radical of a diazo or bisdiazo component based on a carbocyclic or heterocyclic aromatic system, |
| $R^1$ and $R^2$, | independently of one another, are each a substituted or unsubstituted carbocyclic or heterocyclic aromatic radical, |
| $X^1$ and $X^2$, | independently of one another, are each a ring-forming -O- atom or a grouping of the formula >NH or >$NR^3$, in which |
| $R^3$ | on the imide nitrogen is an aliphatic or aromatic radical, and |
| n | has the value 0 or 1, |

and in which rings A and B, independently of one another, can each be additionally substituted and/or can carry substituted or unsubstituted fused rings.

2. Compounds according to claim 1 and mixtures thereof, characterized in that in formula (I) given there, in the case where n is 0, the symbols D and $R^1$ and, in the case where n is 1, the symbols $R^1$ and $R^2$, independently of one another, are each a monovalent aromatic radical based on a compound from the benzene, naphthalene, biphenylene, fluorene or anthraquinone series, or based on a heterocyclic compound comprising one or more than one cyclic structural element(s), and,
in the case where n is 1, the symbol D
is a bivalent aromatic radical based on a compound from the benzene, naphthalene, biphenylene, fluorene or anthraquinone series, or based on a heterocyclic compound comprising one or more than one cyclic structural element(s), and these radicals D, $R^1$ and $R^2$, independently of one another, can each additionally carry substituents of, in most cases, nonionic character,
$X^1$ and $X^2$ each have the meaning apparent for them from claim 1, in which case
$R^3$ on the imide nitrogen is a substituted or unsubstituted alkyl, aryl, aralkyl or acyl group,
and wherein in these two cases which differ from one another because of their structural differences for n = 0 or n = 1, ring A or, independently of one another, rings A and B can each additionally carry substituents of, in most cases, nonionic character and/or similarly substituted or else unsubstituted fused rings.

3. Compounds according to claim 1 or 2 and mixtures thereof, characterized in that in formula (I) given there, in the case where n is 0, the symbols D and $R^1$ and, in the case where n is 1, the symbols $R^1$ and $R^2$, independently of one another, each comprise a substituted or unsubstituted aryl or heteroaryl radical from the following group:
phenyl, phenyl containing 1 to 3 substituents, naphthyl or naphthyl containing 1 to 4 substituents, a monovalent radical based on biphenylene, fluorene or anthraquinone each of which can contain up to 4 substituents, and
a monovalent radical based on a heterocyclic system composed of up to 5 fused aromatic rings, in which system at least one five- or six-membered cyclic structural element, each containing 1 to 3 identical or different hetero atoms belonging thereto, is incorporated and which can additionally contain a total of up to 4 substituents, these substituents on the aryl or heteroaryl radicals just mentioned, independently of one another, having the following meaning of $Z^1$ or $Z^2$, in which case
$Z^1$ is a radical from the group comprising $C_1$-$C_{24}$-alkyl, $C_1$-$C_{24}$-hydroxyalkyl, $C_5$-$C_{10}$-cycloalkyl, $C_1$-$C_{24}$-alkenyl, $C_1$-$C_{24}$-alkoxy, $C_2$-$C_{25}$-alkoxycarbonyl (carbalkoxy) , $C_2$-$C_{25}$-alkoxycarbonylamino, $C_2$-$C_{25}$-alkanoyl (acyl), $C_2$-$C_{25}$-alkanoyloxy (acyloxy), $C_2$-$C_{25}$-alkanoylamino (acylamino), carboxyl, $C_2$-$C_{13}$-carboxyalkyl, N-($C_1$-$C_{12}$-alkyl)amino, N,N-di-($C_1$-$C_{12}$-alkyl)amino, carbamoyl, N-($C_1$-$C_{12}$-alkyl)aminocarbonyl (alkylcarbamoyl), N,N-di-($C_1$-$C_{12}$-alkyl)aminocarbonyl (dialkylcarbamoyl), (aminocarbonyl)amino (ureido), $C_1$-$C_{12}$-alkylthio, $C_1$-$C_{24}$-alkylsulfonyl, sulfamoyl, N-($C_1$-$C_{12}$-alkyl)aminosulfonyl (alkylsulfamoyl),N,N-di-($C_1$-$C_{12}$-alkyl)aminosulfonyl (dialkylsulfamoyl), (aminosulfonyl)amino (sulfamido), sulfo, halogen, nitro, cyano, trifluoromethyl, hydroxyl and mercapto, and
$Z^2$ is a radical of the formula Ar-W-, in which W is a direct bond or a bridge-forming grouping of the formulae -O-, -CO-, -CO-O-, -O-CO-, -CO-NH-, -NH-CO-, -S-, -SO-, $-SO_2-$, $-SO_2-NH-$, $-NH-SO_2-$, - $(CH_2)_p$- (p = 1-4), $-CH(CH_3)-$, $-C(CH_3)_2-$, -NR'- (in which R' is hydrogen or $C_1$-$C_6$-alkyl), $-CH_2-NH-$ or -N=N-
or a combination of at least 2 bivalent groupings of this type, and the Ar bound thereto is a monovalent radical based on a system of carbocyclic nature comprising up to 2 fused aromatic rings or on a system analogous thereto in which a five- or six-membered cyclic structural element, having 1 to 3 identical or different hetero atoms belonging thereto, is incorporated and which can have a total of 1 to 3 identical or different substituents of the type defined above for $Z^1$; and,
in the case where n is 1, the symbol D comprises a substituted or unsubstituted arylene or heteroarylene radical from the following group:
phenylene, phenylene containing 1 to 3 substituents, naphthylene or naphthylene containing 1 to 4 substituents, a bivalent radical based on biphenylene, fluorene or anthraquinone each of which can contain up to 4 substituents, and a bivalent radical based on a heterocyclic system composed of up to 5 fused aromatic rings in which at least one five- or six-membered cyclic structural element, each having 1 to 3 identical or different hetero atoms belonging thereto, is incorporated and which can additionally contain a total of up to 4 substituents, these substituents on the arylene or heteroarylene radicals just mentioned, independently of one another, having the above meaning of $Z^1$ or $Z^2$, but furthermore also comprises a bivalent radical of the formula - Ar-V-Ar- in which V has the same meaning as the one given above for W as component of $Z^2$ or is a bridge-forming grouping of the formulae

$-O-CH_2-O-$,

$-O-C_2H_4-O-$,

$-O-C_3H_6-O-$,

$-O-C_4H_8-O-$,

$-O-CH_2-C(CH_3)_2-CH_2-O-$,

$-O-C_2H_4-O-C_2H_4-O-$,

$-O-CO-O-$,

$-NH-CO-NH-$,

$-CO-O-CH_2-O-CO-$,

$-CO-O-C_2H_4-O-CO-$,

$-CO-O-C_3H_6-O-CO-$,

$-CO-O-C_4H_8-O-CO-$,

$-CO-O-C_2H_4-O-C_2H_4-O-CO-$,

$-CO-NH-NH-CO-$,

$-CO-NH-C_2H_4-NH-CO-$,

-NH-CO-CO-NH-,

-NH-CO-$C_2H_4$-CO-NH-,

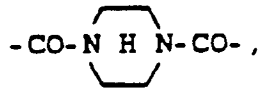,

-CH=CH-,

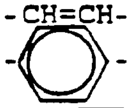, 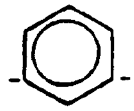, 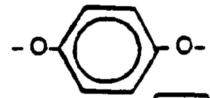, 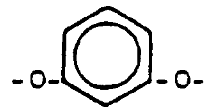,

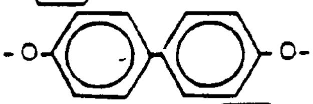, 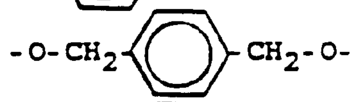,

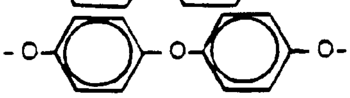, 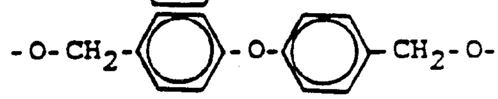,

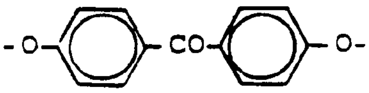,

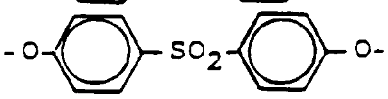,

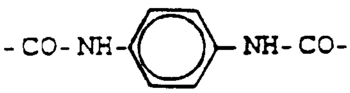, 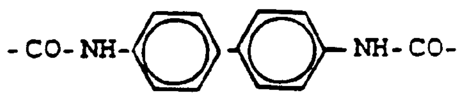,

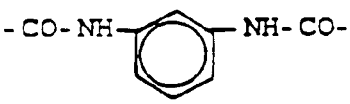, 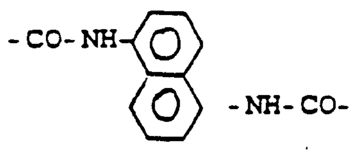,

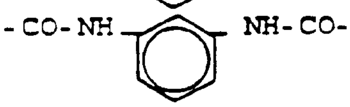,

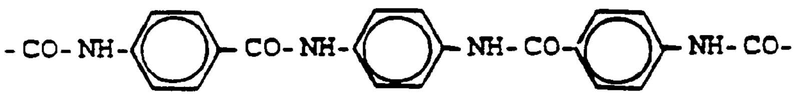,

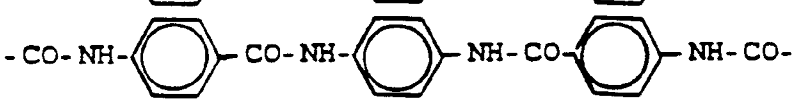,

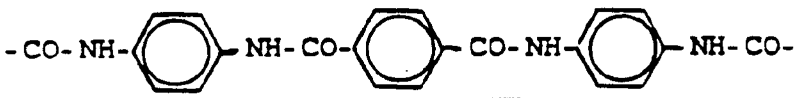,

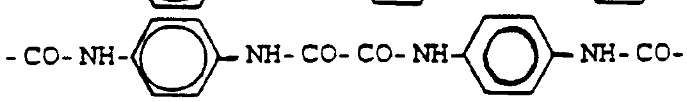,

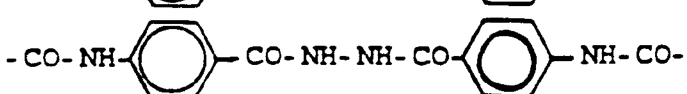,

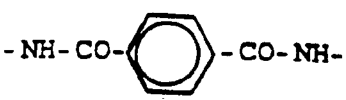, 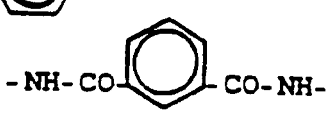,

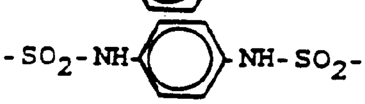, 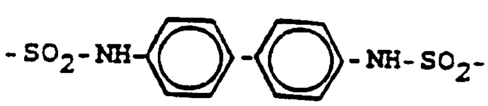,

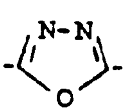, 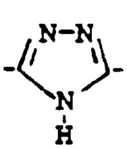, 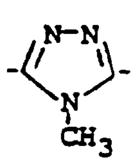, 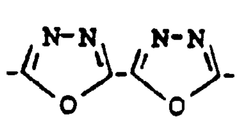 or 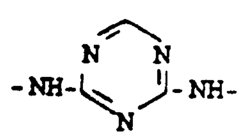

in which any arylene components which may be present in such a bridging member V can additionally contain a total of 1 to 4 identical or different substituents of the type defined above for $Z^1$, and the two Ars bound thereto are both, independently of one another, a bivalent radical based on an aromatic system, which otherwise has the same meaning as the one given above for monovalent Ar;

$X^1$ and $X^2$ each have the meaning apparent for them from claim 1, in which case

$R^3$ on the imide nitrogen is a radical from the group comprising $C_1$-$C_{18}$-alkyl or $C_2$-$C_5$-alkanoyl, aryl, aralkyl or aroyl each containing 1 or 2 five- or six-membered ring structure(s) present therein, it being possible for the latter to be additionally substituted;

and in which, in these two cases which differ from one another because of their structural differences for n = 0 or n = 1, ring A or, independently of one another, rings A and B are each unsubstituted or else have 1 to 4 identical or different substituents, in which case those substituents have the above meaning of $Z^1$ or $Z^2$,

and/or ring A or, independently of one another, rings A and B can furthermore carry fused carbocyclic rings which, if desired, additionally contain substituents belonging to the $Z^1$ type.

4. Compounds according to at least one of claims 1 to 3 and mixtures thereof, characterized in that in formula (I) given there, in the case where n is 0, the symbols D and $R^1$ and, in the case where n is 1, the symbols $R^1$ and $R^2$, independently of one another, each comprise an aryl or heteroaryl radical from the following group:

phenyl, phenyl containing 1 to 3 substituents, naphthyl or naphthyl containing 1 to 3 substituents, a monovalent radical based on biphenylene, fluorene or anthraquinone each of which can contain 1 to 3 substituents, and

a monovalent radical based on a monocyclic or polycyclic heterocyclic system composed of 2 or 3 benzo-fused aromatic rings, in which system 1 or 2 nitrogen-containing five- or six-membered cyclic structural elements, having a total of up to 4 identical or different hetero atoms belonging thereto, are incorporated and which can in each case additionally contain 1 to 3, but a total of at most 4 substituents, not only on the heterocyclic but also on the benzo-fused components, in which these substituents on the aryl or heteroaryl radicals just mentioned have, independently of one another, the meaning of $Z^1$ or $Z^2$ given below, in which case

$Z^1$ is a radical from the group comprising $C_1$-$C_4$-alkyl, $C_1$-$C_4$-alkoxy, $C_2$-$C_5$-alkoxycarbonyl, $C_2$-$C_5$-alkanoyloxy, $C_2$-$C_5$-alkanoylamino, carboxy, carbamoyl, N-($C_1$-$C_4$-alkyl)aminocarbonyl, N,N-di-($C_1$-$C_4$-alkyl)aminocarbonyl, $C_1$-$C_4$-alkylsulfonyl, sulfamoyl, N-($C_1$-$C_4$-alkyl)aminosulfonyl, N,N-di($C_1$-$C_4$-alkyl)aminosulfonyl, sulfo, chlorine, bromine, nitro, cyano, trifluoromethyl and hydroxyl, and

$Z^2$ is a radical of the formula Ar-W-, in which W is a direct bond or a bridge-forming grouping of the formulae -O-, -CO-O-, -O-CO-, -CO-NH-, -NH-CO-, -S-, $-SO_2-$, $-SO_2-NH-$, $-NH-SO_2-$, $-CH_2-$, $CH_2-CH_2-$, -NH-, $-NH-CH_2-$ or -N=N-

or a combination of at least 2 bivalent groupings of this type, and the Ar bound thereto is phenyl, naphthyl, or phenyl together with the fused-on five- or six-membered nitrogen-containing aromatic ring having 1 or 2 identical or different hetero atoms belonging thereto, or is such a monovalent aryl or heteroaryl radical Ar additionally containing 1 to 3 identical or different substituents of the type defined above for $Z^1$; and,

in the case where n is 1, the symbol D comprises an arylene or heteroarylene radical from the following group; phenylene, phenylene containing 1 to 3 substituents, naphthylene, or naphthylene containing 1 to 3 substituents, a bivalent radical based on biphenylene, fluorene or anthraquinone each of which can contain 1 to 3 substituents, and

a bivalent radical based on a monocyclic or polycyclic heterocyclic system composed of 2 or 3 benzo-fused aromatic rings in which 1 or 2 nitrogen-containing five- or six-membered cyclic structural elements, having a total of up to 4 identical or different hetero atoms belonging thereto, are incorporated and which can in each case additionally contain 1 to 3, but a total of at most 4 substituents, not only on the heterocyclic but also on the benzo-fused components, these substituents on the arylene or heteroarylene radicals just mentioned having, independently of one another, the above meaning of $Z^1$ or $Z^2$,

but furthermore also a bivalent radical of the formula -Ar-V-Ar-, in which V has the same meaning as the one given above for W as component of $Z^2$ or is a bridge-forming grouping of the formula

$-O-C_2H_4-O-$, $-CO-O-C_2H_4-O-CO-$,
$-O-C_3H_6-O-$, $-CO-O-C_3H_6-O-CO-$,
$-SO_2-C_2H_4-SO_2-$, $-CO-NH-C_2H_4-NH-CO-$,
$-SO_2-NH-C_2H_4-NH-SO_2-$,

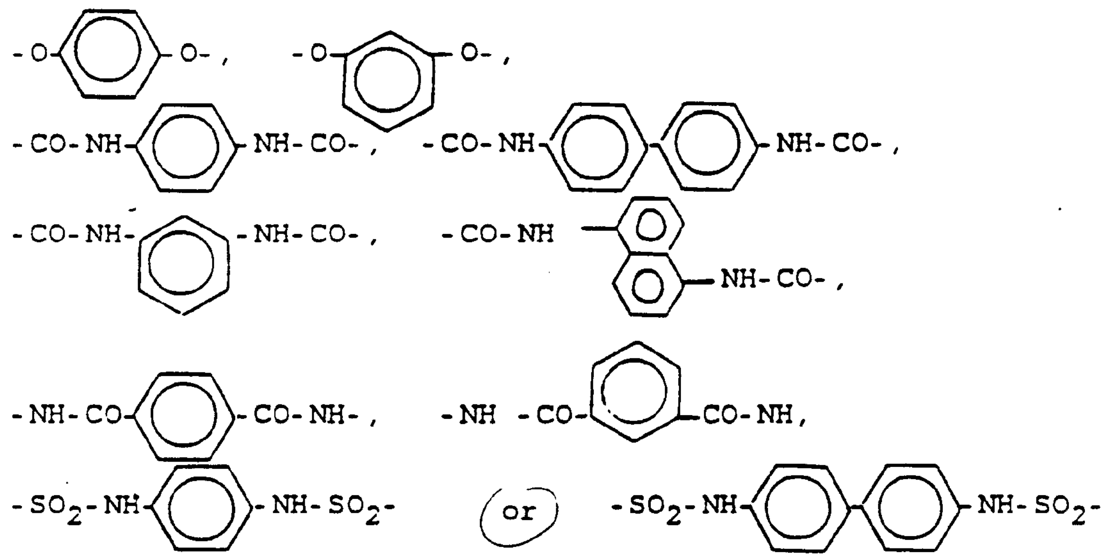

in which any arylene components which may be present in such a bridging member V can additionally contain a total of 1 to 4 identical or different substituents of the type defined above for $Z^1$, and the two Ars bound thereto are each, independently of one another, a bivalent aromatic radical based on one of the specific ring systems otherwise identical to the one given above for monovalent Ar;

$X^1$ and $X^2$ each have the meaning apparent for them from claim 1, in which case

$R^3$ on the imide nitrogen is a radical from the group comprising $C_1$-$C_4$-alkyl, acetyl, phenyl, naphthyl, benzyl or benzoyl, in which the ring structures present therein can each additionally contain 1 to 2 nonionic substituents; and in which, in these two cases which differ from one another because of their structural differences for n = 0 or n = 1, ring A or, independently of one another, rings A and B are each unsubstituted or else can contain up to 2 identical or different substituents of the $Z^1$ type.

5. Compounds according to at least one of claims 1 to 4 and mixtures thereof, characterized in that in formula (I) given there, in the case where n is 0, the symbols D and $R^1$ and, in the case where n is 1, the symbols $R^1$ and $R^2$, independently of one another, each comprise an aryl or heteroaryl radical from the following group;
phenyl, naphthyl or biphenylyl, a monovalent radical based on biphenylene, fluorene or anthraquinone, and a monovalent radical of heterocyclic structure based on benzimidazole, benzimidazol-2-one, benzimidazole-2-thione, benzoxazole, benzoxazol-2-one, benzothiazole, benzothiazol-2-one, indazole, benzotriazole, indole, isoindole, phthalimide, phthalimid-2-one, naphthalimide, naphthalimid-2-one, thiazole, isothiazole, 1,2,4-thiadiazole, 1,3,4-thiadiazole, thiophene, thionaphthene, quinoline, quinolin-2-one, quinoline-2,4-dione, isoquinoline, cinnoline, quinazoline, quinazolin-4-one, quinazoline-2,4-dione, phthalazine, phthalazine-1,4-dione, quinoxaline, quinoxaline-2,3-dione, carbazole, phenazine, benzimidazo[1,2-a]pyrimid-2-one, benzo[e][1,3]oxazine-2,4-dione, benzo[e][1,4]oxazin-3-one, benzo[cd]indol-2-one, benzo[de]isoquinoline-1,3-dione and dibenzo-[a,c]phenazine, each of which can additionally contain 1 to 3 identical or different substituents, primarily of nonionic character, in accordance with the meaning apparent for $Z^1$ or $Z^2$ from claim 4; and, in the case where n is 1, the symbol D comprises an arylene or heteroarylene radical from the following group:
phenylene, naphthylene or biphenyldiyl, a bivalent radical based on biphenylene, fluorene or anthraquinone, and a bivalent radical of heterocyclic structure based on benzimidazole, benzimidazol-2-one, benzoxazole, benzothiazole, benzotriazole, phthalimide, quinoline, isoquinoline, quinazoline, quinazolin-4-one, quinoxaline, quinoxaline-2,3-dione, thionaphthene, carbazole, 2,2′-bipyridine, benzo[e][1,3]oxazine-2,4-dione, dibenzo[b,d]thiophene 5,5-dioxide, thioxanthene 10,10-dioxide, pyrrolo-[3,4-f]isoindole-1,3,5,7-tetraone, 5H-phenanthridin-6-one and 4,9-dihydro-pyrido[2,3,4,5-1mn]phenanthridine-5,10-dione, each of which can additionally contain 1 to 3 identical or different substituents, primarily of nonionic character, in accordance with the meaning apparent for $Z^1$ or $Z^2$ from claim 4, or a combination of 2 heterocyclic radicals of this type bound to one another by a single bond or one thereof together with phenylene;
and in which $X^1$, $X^2$, $R^3$, A and B each have the meaning apparent from claim 4.

6. Compounds according to at least one of claims 1 to 5 and mixtures thereof, characterized in that in formula (I) given there n has the value 0 and $X^1$ is a bridging member of the -O- or >NH type, in which the symbols D and $R^1$, including any substituents $Z^1$ or $Z^2$ which may be present on D and $R^1$ and on ring A, have the meaning apparent for them from claim 4 or 5.

7. Process for the preparation of compounds defined according to at least one of claims 1 to 6 of the idealized formula (I) and mixtures thereof, characterized in that one or more different amines of the formula $D-NH_2$ or diamines of the formula $H_2N-D-NH_2$, in which the symbol D has in each case the meaning, in accordance with formula (I), apparent for it from the preceding claims, is/are diazotized and reacted by coupling with 1 equivalent of a compound of the formula (II)

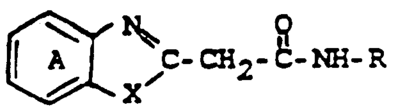

(II)

or a mixture of a plurality of different compounds of the formula (II) per equivalent of the total number of reacting diazonium groupings, in which the symbols X and R in formula (II) have the same meaning, in accordance with formula (I), as the one for the symbols $X^1$ and $X^2$ and $R^1$ and $R^2$ apparent in each case from the preceding claims and the ring A can be fused or substituted in the same manner as indicated there for rings A and B.

8. Process according to claim 7, characterized in that the coupling is carried out in the presence of at least one nonionic, anionic or cationic surface-active substance, or with the addition of a natural or synthetic resin or resin derivative or a surface-coating, printing-ink or plastics additive.

9. Process according to claim 7 or 8, characterized in that the coupling products obtained are subjected to a thermal aftertreatment in water or in an inert organic solvent or mixture thereof, if desired under increased pressure and/or in the presence of dispersants.

10. Process according to at least one of claims 7 to 9, characterized in that those coupling products which have one or more lakeable acid groups are converted into color lakes by means of metal ions.

11. Use of compounds defined according to at least one of claims 1 to 6 of the idealized formula (I) or mixtures thereof for the coloring or pigmenting of high-molecular-weight organic materials of natural or synthetic origin.

12. Use according to claim 11 as colorant in finely divided form from aqueous or water-containing systems for the coloring or printing of textile substrates or sheet-like structures made of paper.

13. Use according to claim 11 as colorant for pigmenting moldable plastics in the form of plastic compositions, melts or spinning solutions.

14. Use according to claim 11 as colorant for the preparation of surface coatings, emulsion paints or printing inks.

## Revendications

1. Composés répondant à la formule générale idéalisée (I)

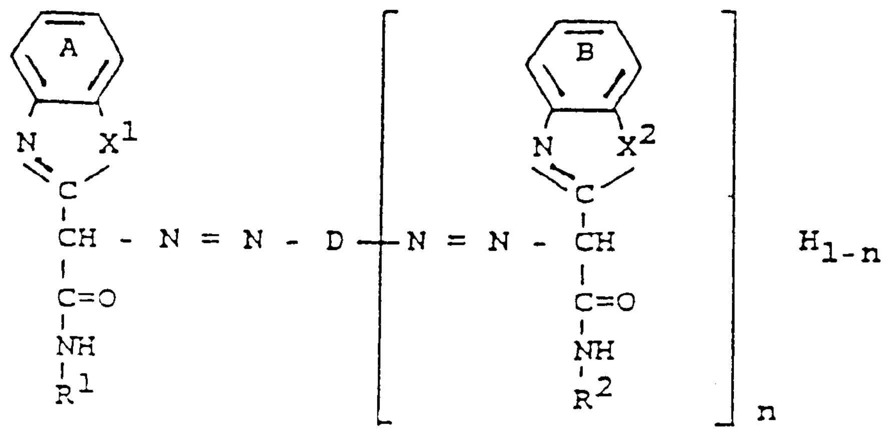

(I)

et leurs mélanges, formule dans laquelle

D désigne le radical d'un constituant diazoïque ou bisdiazoïque à base d'un système carbocyclique ou hétérocyclique aromatique,

$R^1$ et $R^2$ désignent chacun, indépendamment l'un de l'autre, un radical non substitué ou substitué, carbocyclique ou hétérocyclique aromatique,

$X^1$ et $X^2$ représentent chacun, indépendamment l'un de l'autre, un atome -O- formant un cycle ou un groupement répondant aux formules >NH ou >$NR^3$, dans lequel

$R^3$ représente un radical aliphatique ou aromatique sur l'azote de l'imide, et

n est égal à 0 ou 1,

et dans laquelle les cycles A et B, indépendamment l'un de l'autre, peuvent encore chacun être substitués et/ou porter des cycles condensés, éventuellement substitués.

2. Composés selon la revendication 1 et leurs mélanges, caractérisés en ce que, dans la formule (I) qui y est indiquée,

lorsque n = 0, les symboles D et $R^1$, ainsi que

lorsque n = 1, les symboles $R^1$ et $R^2$

désignent chacun, indépendamment l'un de l'autre, un radical aromatique monovalent à base d'un composé de la série du benzène, du naphtalène, du biphénylène, du fluorène ou de l'anthraquinone, ou à base d'un composé hétérocyclique constitué d'un ou plusieurs éléments de structure cycliques, et

lorsque n = 1, le symbole D

désigne un radical aromatique bivalent à base d'un composé de la série du benzène, du naphtalène, du biphénylène, du fluorène ou de l'anthraquinone, ou à base d'un composé hétérocyclique constitué d'un seul ou de plusieurs éléments de structure cycliques,

et ces radicaux D, $R^1$ et $R^2$ peuvent chacun porter encore, indépendamment les uns des autres, des substituants, pour la plupart de caractère non ionogène,

$X^1$ et $X^2$ prennent chacun la signification qui ressort de la revendication 1 et, dans ceux-ci,

$R^3$ sur l'azote de l'imide représente un groupe alkyle, aryle, aralkyle ou acyle non substitué ou substitué, et dans ces deux cas qui se distinguent par leurs différences de structure pour n = 0 ou n = 1, le cycle A ou, indépendamment l'un de l'autre, les cycles A et B peuvent chacun porter encore des substituants, pour la plupart de caractère non ionogène, et/ou le cas échéant, des cycles condensés, éventuellement substitués de la même manière.

3. Composés selon la revendication 1 ou 2 et leurs mélanges, caractérisés en ce que, dans la formule (I) qui y est indiquée,

lorsque n = 0, les symboles D et $R^1$ ainsi que

lorsque n = 1, les symboles $R^1$ et $R^2$, comprennent chacun, indépendamment l'un de l'autre, un radical aryle ou hétéroaryle non substitué ou substitué appartenant au groupe suivant :

phényle, phényle portant 1 à 3 substituants, naphtyle ou naphtyle portant 1 à 4 substituants,

un radical monovalent à base de biphénylène, de fluorène ou d'anthraquinone, qui peut présenter à chaque fois jusqu'à 4 substituants, et

un radical monovalent à base d'un système hétérocyclique composé de jusqu'à 5 cycles aromatiques condensés, dans lequel est inclus au moins un élément de structure cyclique à cinq ou six maillons comportant chacun 1 à 3 hétéroatomes identiques ou différents, et qui peut présenter encore jusqu'à 4

substituants au total,

ces substituants sur les radicaux aryle ou hétéroaryle mentionnés ci-dessus possédant, indépendamment les uns des autres, la signification ci-après de $Z^1$ ou de $Z^2$, c'est-à-dire que

$Z^1$ désigne un radical choisi parmi les groupes alkyle en $C_1$ à $C_{24}$, hydroxyalkyle en $C_1$ à $C_{24}$, cycloalkyle en $C_5$ à $C_{10}$, alcényle à $C_1$ à $C_{24}$, alcoxy en $C_1$ à $C_{24}$, (alcoxy en $C_2$ à $C_{25}$)carbonyle (carbalcoxy), (alcoxy en $C_2$ à $C_{25}$)carbonylamino, alcanoyle (acyle) en $C_2$ à $C_{25}$, alcanoyloxy (acyloxy) en $C_2$ à $C_{25}$, alcanoylamino (acylamino) en $C_2$ à $C_{25}$, carboxy, (carboxy en $C_2$ à $C_{13}$)alkyle, N-(alkyle en $C_1$ à $C_{12}$)-amino, N,N-di-(alkyle en $C_1$ à $C_{12}$)amino, carbamoyle, N-(alkyle en $C_1$ à $C_{12}$)aminocarbonyle (alkylcarbamoyle), N,N-di-(alkyle en $C_1$ à $C_{12}$)-aminocarbonyle (dialkylcarbamoyle), (aminocarbonyl)-amino (uréido), alkylthio en $C_1$ à $C_{12}$, alkylsulfonyle en $C_1$ à $C_{24}$, sulfamoyle, N-(alkyle en $C_1$ à $C_{12}$)-aminosulfonyle (alkylsulfamoyle), N,N-di-(alkyle en $C_1$ à $C_{12}$)aminosulfonyle (dialkylsulfamoyle), (aminosulfonyl)-amino (sulfamido), sulfo, halogéno, nitro, cyano, trifluorométhyle, hydroxy ou mercapto, et

$Z^2$ représente un radical répondant à la formule Ar-W, dans laquelle W est une liaison directe ou un groupement de pontage répondant aux formules

-O-, -CO-, -CO-O-, -O-CO-, -CO-NH-, -NH-CO-, -S-, -SO-, $-SO_2-$, $SO_2-NH-$, - $NH-SO_2-$, $-(CH_2)_p-$ (p = 1 - 4), $-CH(CH_3)-$, $-C(CH_3)_2-$, -NR'- (où R' représente H ou un groupe alkyle en $C_1$ à $C_6$), $CH_2-NH-$ ou -N=N- ou correspond à une combinaison d'au moins 2 de ces groupements bivalents, et le radical

Ar qui lui est lié désigne un radical monovalent à base d'un système composé de jusqu'à 2 cycles aromatiques condensés, de nature carbocyclique ou un système analogue à celui-ci, dans lequel est inclus un élément de structure cyclique à cinq ou six maillons contenant 1 à 3 hétéroatomes identiques ou différents lui appartenant et qui peut présenter encore un total de 1 à 3 substituants identiques ou différents du type précédemment défini pour $Z^1$ ; et

lorsque n = 1, le symbole D

comprend un radical arylène ou hétéroarylène non substitué ou substitué choisi parmi les radicaux phénylène, phénylène avec 1 à 3 substituants, naphtylène ou naphtylène avec 1 à 4 substituants,

un radical bivalent à base de biphénylène, de fluorène ou d'anthraquinone qui peut présenter dans chaque cas jusqu'à 4 substituants, et

un radical bivalent à base d'un système hétérocyclique composé de jusqu'à 5 cycles aromatiques condensés, dans lequel est inclus au moins un élément de structure cyclique à cinq ou six maillons avec dans chaque cas 1 à 3 hétéroatomes identiques ou différents lui appartenant, et qui peut présenter encore au total jusqu'à 4 substituants, ces substituants sur les radicaux arylène ou hétéroarylène mentionnés possédant, indépendamment les uns des autres, la signification de $Z^1$ ou de $Z^2$ ci-dessus, mais en outre, également,

un radical bivalent répondant à la formule -Ar-V-Ar, dans laquelle V a une signification identique à celle de W donnée plus haut en tant que constituant de $Z^2$ ou correspond à un groupement de pontage répondant aux formules

$-O-CH_2-O-$ ,

$-O-C_2H_4-O-$ ,

$-O-C_3H_6-O-$ ,

$-O-C_4H_8-O-$ ,

$-O-CH_2-C(CH_3)_2-CH_2-O-$ ,

$-O-C_2H_4-O-C_2H_4-O-$ ,

$-O-CO-O-$ ,

$-NH-CO-NH-$ ,

$-NH-CO-CO-NH-$ ,

$-NH-CO-C_2H_4-CO-NH-$ ,

$-CH=CH-$ ,

$-CO-O-CH_2-O-CO-$ ,

$-CO-O-C_2H_4-O-CO-$ ,

$-CO-O-C_3H_6-O-CO-$ ,

$-CO-O-C_4H_8-O-CO-$ ,

$-CO-O-C_2H_4-O-C_2H_4-O-CO-$ ,

$-CO-NH-NH-CO-$ ,

$-CO-NH-C_2H_4-NH-CO-$ ,

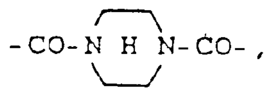 ,

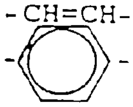 , 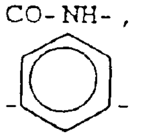 , 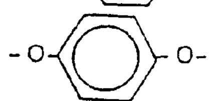 , 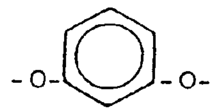 ,

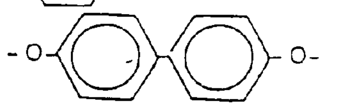 , 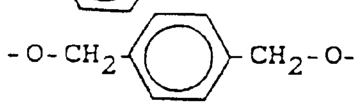 ,

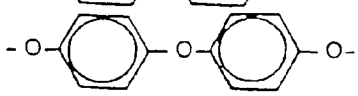 , 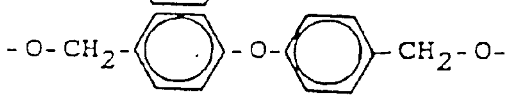 ,

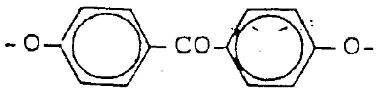 ,

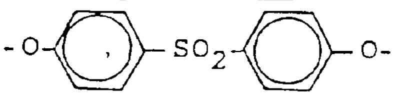 ,

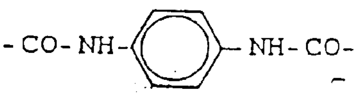 , 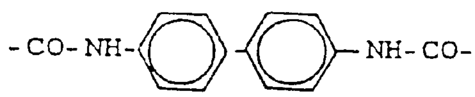 ,

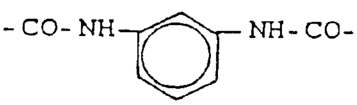 , 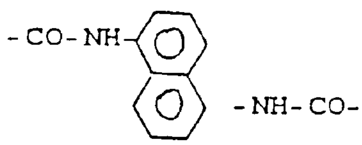 ,

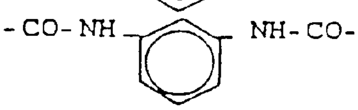 ,

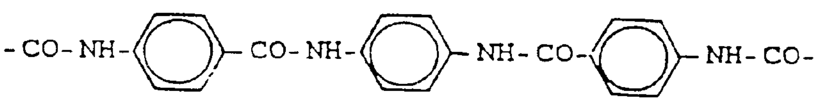 ,

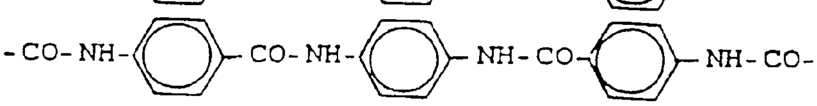 ,

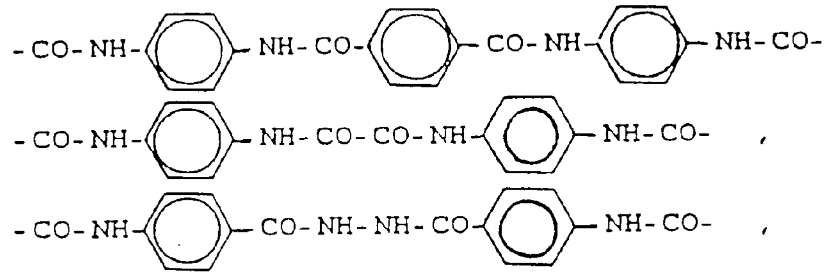

,

,

,

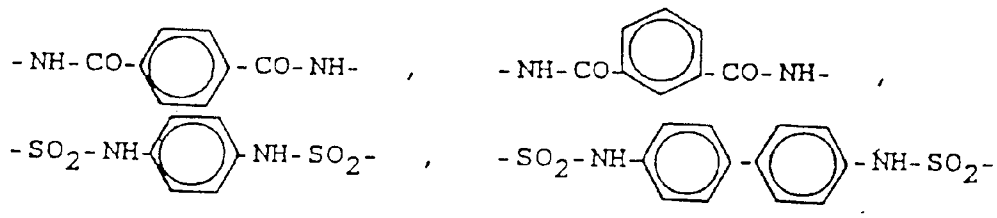

, , , ,

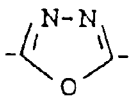 , 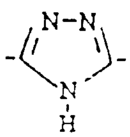 , 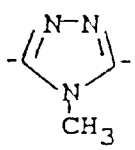 , 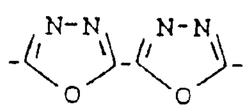 ou 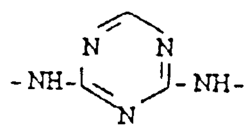 ,

les constituants arylène présents, le cas échéant, dans un tel élément de pontage V pouvant présenter, au total, encore 1 à 4 substituants identiques ou différents du type précédemment défini pour $Z^1$, et les deux radicaux Ar liés à celui-ci désignent chacun, indépendamment l'un de l'autre, un radical bivalent à base d'un système aromatique d'une manière analogue à la signification donnée par ailleurs, ci-dessus, pour le Ar monovalent ;

$X^1$ et $X^2$ ont la signification donnée pour ceux-ci dans la revendication 1, et dans ceux-ci

le radical $R^3$ sur l'azote de l'imide représente un radical choisi parmi les groupes alkyle en $C_1$ à $C_{18}$ ou alcanoyle en $C_2$ à $C_5$, aryle, aralkyle ou aroyle comprenant chacun 1 ou 2 structures cycliques à cinq ou six maillons, ces dernières pouvant encore être substituées ;

et dans ces deux acceptions distinctes pour n = 0 ou n = 1 en raison de leurs différences de structure, le cycle A ou, indépendamment l'un de l'autre, les cycles A et B sont chacun non substitués ou encore présentent 1 à 4 substituants identiques ou différents, et ces substituants possédant alors la signification de $Z^1$ ou de $Z^2$ indiquée ci-dessus,

et/ou le cycle A ou, indépendamment l'un de l'autre, les cycles A et B, peuvent porter en outre des cycles carbocycliques condensés qui contiennent encore, le cas échéant, des substituants appartenant au type $Z^1$.

4. Composés selon l'une au moins des revendications 1 à 3 et leurs mélanges, caractérisés en ce que, dans la formule (I) qui y est indiquée,

lorsque n = 0, les symboles D et $R^1$ ainsi que

lorsque n = 1, les symboles $R^1$ et $R^2$, comprennent chacun, indépendamment l'un de l'autre, un radical aryle ou hétéroaryle choisi parmi le groupe suivant :

phényle, phényle portant 1 à 3 substituants, naphtyle ou naphtyle portant 1 à 4 substituants,

un radical monovalent à base de biphénylène, de fluorène ou d'anthraquinone, qui peut présenter dans chaque cas 1 à 3 substituants, et

un radical monovalent à base d'un système hétérocyclique, monocyclique ou polycyclique, composé de 2 à 3 cycles aromatiques benzocondensés, dans lequel sont inclus un à deux éléments de structure cycliques azotés à cinq ou six maillons avec au total jusqu'à 4 hétéroatomes identiques ou différents lui appartenant, et qui peut présenter aussi bien sur les constituants hétérocycliques que sur les constituants benzocondensés, à chaque fois encore 1 à 3, mais au plus 4 substituants au total,

ces substituants sur les radicaux aryle ou hétéroaryle qui viennent d'être mentionnés possédant, indépendamment les uns des autres, la signification suivante de $Z^1$ ou de $Z^2$, c'est-à-dire que

$Z^1$ désigne un radical choisi parmi les groupes alkyle en $C_1$ à $C_4$, alcoxy en $C_1$ à $C_4$, (alcoxy en $C_2$ à $C_5$)carbonyle, alcanoyloxy en $C_2$ à $C_5$, alcanoylamino en $C_2$ à $C_5$, carboxy, carbamoyle, N-(alkyle en $C_1$ à $C_4$) -aminocarbonyle, N,N-di-(alkyle en $C_1$ à $C_4$)-aminocarbonyle, alkylsulfonyle en $C_1$ à $C_4$, sulfamoyle, N-(alkyle en $C_1$ à $C_4$)-aminosulfonyle, N,N-di-(alkyle en $C_1$ à $C_4$) -aminosulfonyle, sulfo, chloro, bromo, nitro, cyano, trifluorométhyle et hydroxy, et

$Z^2$ représente un radical répondant à la formule Ar-W-, dans laquelle W désigne une liaison directe ou un groupement de pontage répondant aux formules

-O-, -CO-O-, -O-CO-, -CO-NH-, -NH-CO-, -S-, $-SO_2-$, $-SO_2-NH-$, $NH-SO_2-$, $-CH_2-$, $-CH_2-CH_2-$,-NH-, $-NH-CH_2-$ ou -N=N-

ou une combinaison d'au moins 2 de ces groupements bivalents, et le groupe lié à ceux-ci

Ar phényle, naphtyle, ou phényl y compris un cycle aromatique azoté à cinq ou six maillons, condensé sur celui-ci, ayant 1 ou 2 hétérotaomes, identiques ou différents, lui appartenant ou un tel radical aryle ou hétéroaryle monovalent Ar avec, en outre, 1 à 3 substituants identiques ou différents du type précédemment défini pour $Z^1$ ; et

lorsque n = 1, le symbole D

comprend un radical arylène ou hétéroarylène choisi parmi les radicaux phénylène, phénylène avec 1 à 3 substituants, naphtylène ou naphtylène avec 1 à 3 substituants, un radical bivalent à base de biphénylène, de fluorène ou d'anthraquinone qui peut présenter dans chaque cas 1 à 3 substituants, et

un radical bivalent à base d'un système hétérocyclique composé d'un cycle monocyclique ou polycyclique, de 2 ou 3 noyaux aromatiques benzocondensés, dans lequel sont inclus un ou deux éléments de structure azotés, cycliques à cinq ou six maillons avec au total jusqu'à 4 hétéroatomes identiques ou différents lui appartenant, et qui peut présenter aussi bien sur les constituants hétérocycliques que sur les constituants benzocondensés dans chaque cas encore 1 à 3, mais au total au plus 4 substituants,

ces substituants possédant, sur les radicaux arylène ou hétéroarylène mentionnés ci-dessus, indépendamment les uns des autres, la signification de $Z^1$ ou de $Z^2$ ci-dessus,

mais en outre, également,

un radical bivalent répondant à la formule -Ar-V-Ar-, dans laquelle V a une signification identique à celle de W ci-dessus, en tant que constituant de $Z^2$ ou correspond à un groupement de pontage répondant aux formules

$-O-C_2H_4-O-$ , $-CO-O-C_2H_4-O-CO-$ ,

$-O-C_3H_6-O-$ , $-CO-O-C_3H_6-O-CO-$ ,

$-SO_2-C_2H_4-SO_2-$ , $-CO-NH-C_2H_4-NH-CO-$ ,

$-SO_2-NH-C_2H_4-NH-SO_2-$ ,

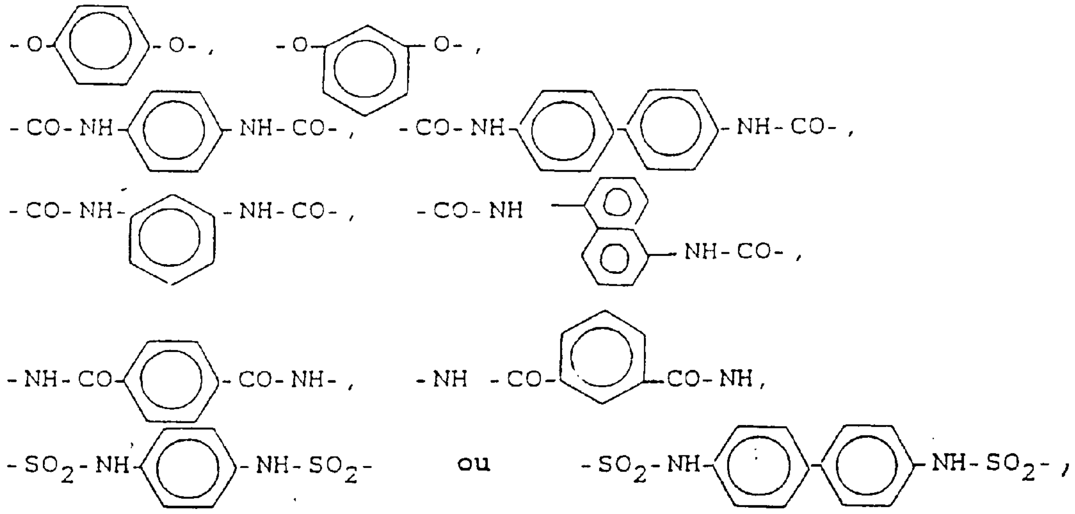

ou

les constituants arylène présents, le cas échéant, dans un tel élément de pontage V pouvant présenter encore, au total, 1 à 4 substituants identiques ou différents du type précédemment défini pour $Z^1$, et les deux radicaux Ar qui lui sont liés désignent chacun, indépendamment l'un de l'autre, un radical bivalent aromatique à base d'un des systèmes cycliques spéciaux identiques à ceux indiqués par ailleurs, ci-dessus, pour le Ar monovalent ;

$X^1$ et $X^2$ ont la signification donnée pour ceux-ci dans la revendication 1, et dans ceux-ci

$R^3$ sur l'azote de l'imide représente un radical choisi parmi les groupes alkyle en $C_1$ à $C_4$, acétyle, phényle, naphtyle, benzyle ou benzoyle, les structures cycliques qui y sont présentes pouvant présenter chacune encore 1 à 2 substituants non ionogènes ; et dans ces deux cas distincts en raison de leurs différences de structure pour n = 0 ou n = 1, le cycle A ou, indépendamment l'un de l'autre, les cycles A et B étant chacun non substitués ou pouvant encore présenter jusqu'à 2 substituants identiques ou différents du type $Z^1$.

**5.** Composés selon au moins l'une des revendications 1 à 4 et leurs mélanges, caractérisés en ce que, dans la formule (I) qui y est indiquée

lorsque n = 0, les symboles D et $R^1$ ainsi que

lorsque n = 1, les symboles $R^1$ et $R^2$,

comprennent, chacun, indépendamment les uns des autres, un radical aryle ou hétéroaryle choisi dans le groupe comprenant le phényle, le naphtyle ou le biphénylyle,

un radical monovalent à base de biphénylène, de fluorène ou d'anthraquinone, et

un radical monovalent ayant une structure hétérocyclique à base de benzimidazole, de benzimidazol-2-one, de benzimidazol-2-thione, de benzoxazole, de benzoxazol-2-one, de benzothiazole, de benzothiazol-2-one, d'indazole, de benzotriazole, d'indole, d'isoindole, de phtalimide, de phtalimid-2-one, de naphtalimide, de naphtalimid-2-one, de thiazole, d'isothiazole, de 1,2,4-thiadiazole, de 1,3,4-thiadiazole, de thiophène, de thionaphtène, de quinoléine, de quinoléin-2-one, de quinoléin-2,4-dione, d'isoquinoléine, de cinnoline, de quinazoline, de quinazolin-4-one, de quinazolin-2,4-dione, de phtalazine, de phtalazin-1,4-dione, de quinoxaline, de quinoxalin-2,3-dione, de carbazol, de phénazine, de benzimidazo[1,2-a]-pyrimid-2-one, de benzo[e][1,3]oxazin-2,4-dione, de benzo[e][1,4]oxazin-3-one, de benzo[cd]indol-2-one, de benzo[de]isoquinoléin-1,3-dione et de dibenzo[a,c]-phénazine,

qui peuvent présenter chacun encore 1 à 3 substituants identiques ou différents, principalement de caractère non ionogène, correspondant à la signification donnée dans la revendication 4 pour pour $Z^1$ ou $Z^2$ ; et

lorsque n = 1, le symbole D

comprend un radical arylène ou hétéroarylène choisi parmi les radicaux phénylène, naphtylène ou biphényldiyle,

un radical bivalent à base de biphénylène, de fluorène ou d'anthraquinone, et

un radical bivalent ayant une structure hétérocyclique à base de benzimidazole, de benzimidazol-2-one, de benzoxazole, de benzothiazole, de benzotriazole, de phtalimide, de quinoléine, d'isoquinoléine, de quinazoline, de quinazolin-4-one, de quinoxaline, de quinoxalin-2,3-dione, de thionaphtène, de carbazole, de 2,2'-bipyridine, de benzo[e][1,3]oxazin-2,4-dione, de dibenzo[b,d]thiophène-5,5-dioxyde, de thioxanthène-10,10-dioxyde, de pyrrolo-[3,4-f]isoindol-1,3,5,7-tétraone, de 5H-phénanthridin-6-one et de 4,9-dihydropyrido[2,3,4,5-1mn]-phénanthridin-5,10-dione,

qui peuvent présenter chacun encore 1 à 3 substituants identiques ou différents, principalement de caractère non ionogène, correspondant à la signification donnée dans la revendication 4 pour pour $Z^1$ ou $Z^2$,

ou une combinaison de 2 de ces radicaux hétérocycliques liés l'un à l'autre par une liaison simple ou d'un de ceux-ci lié à un groupe phénylène ;

et $X^1$, $X^2$, $R^3$, A et B ayant respectivement la signification indiquée dans la revendication 4.

**6.** Composés selon au moins une des revendications 1 à 5 et leurs mélanges, caractérisés en ce que, dans la formule (I) qui est y est indiquée,

n est égal à 0 et

$X^1$ représente un élément de pontage du type -O- ou >NH,

les symboles D et $R^1$ y compris les substituants $Z^1$ ou $Z^2$ présents, le cas échéant, sur D ou $R^1$ ainsi que sur le cycle A ayant la signification indiquée pour ceux-ci dans la revendication 4 ou 5.

**7.** Procédé de préparation de composés définis selon au moins l'une des revendications 1 à 6, répondant à la formule générale idéalisée (I) et de leurs mélanges, caractérisé en ce qu'on diazote une ou plusieurs

amines différentes répondant à la formule D-$NH_2$ ou des diamines répondant à la formule $H_2N$-D-$NH_2$ dans lesquelles à chaque fois le symbole D possède la signification donnée pour celui-ci dans les revendications précédentes, et en ce qu'on les fait réagir par couplage avec un équivalent d'un composé répondant à la formule générale (II)

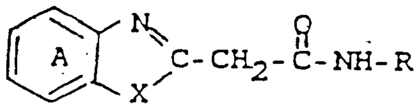

(II)

ou d'un mélange de plusieurs composés différents répondant à la formule (II) par équivalent de groupements diazonium totaux réagissant, les symboles X et R de la formule (II) ayant la même signification que celle donnée respectivement dans les revendications précédentes pour les symboles $X^1$ ou $X^2$ et $R^1$ ou $R^2$ et le cycle A pouvant être condensé ou substitué de la même manière que celle qui y est indiquée pour les cycles A et B.

**8.** Procédé selon la revendication 7, caractérisé en ce qu'on effectue le couplage en présence d'au moins une substance tensio-active non ionogène, anionique ou cationique, ou avec addition d'une résine ou d'un dérivé de résine naturelle ou synthétique ou d'un additif pour laque, encre d'imprimerie ou matière plastique.

**9.** Procédé selon la revendication 7 ou 8, caractérisé en ce qu'on soumet les produits de couplage obtenus à un post-traitement thermique dans de l'eau ou dans un solvant organique inerte ou dans un mélange de ceux-ci, le cas échéant sous pression augmentée et/ou en présence de dispersants.

**10.** Procédé selon au moins l'une des revendications 7 à 9, caractérisé en ce qu'on transforme les produits de couplage qui présentent un ou plusieurs groupes acide transformables en pigments ou laques, à l'aide d'ions métalliques, en pigments ou laques colorés.

**11.** Utilisation de composés définis selon au moins l'une des revendications 1 à 6 et répondant à la formule idéalisée (I) ou de leurs mélanges pour la teinture ou la pigmentation de matières organiques de masse moléculaire élevée d'origine naturelle ou synthétique.

**12.** Utilisation selon la revendication 11, comme colorants sous forme finement divisée dans des systèmes aqueux ou contenant de l'eau pour la teinture ou l'impression de substrats textiles ou de structures planiformes en papier.

**13.** Utilisation selon la revendication 11 comme colorants pour la pigmentation de matières plastiques façonnables sous forme de masses plastiques, de masses fondues ou de solutions de filature.

**14.** Utilisation selon la revendication 11 comme colorants pour la préparation de laques, de peintures en dispersion ou d'encres d'imprimerie.